# EUROPEAN PATENT APPLICATION

(11) **EP 2 602 999 A1**
(43) Date of publication of application: **12.06.2013**
(21) Application number: 11814280.1
(22) Date of filing: 02.08.2011
(51) Int. Cl.: H04N 7/26, H04N 13/00

(54) **ENCODING METHOD, DISPLAY DEVICE, AND DECODING METHOD**

(30) Priority: 06.08.2010 US 371289 P
(71) Applicant: Panasonic Corporation, Osaka 571-8501 (JP)
(72) Inventor: SASAKI, Taiji, Osaka-shi, Osaka 540- 6207 (JP); NISHI, Takahiro, Osaka-shi, Osaka 540- 6207 (JP); TOMA, Tadamasa, Osaka-shi, Osaka 540- 6207 (JP)
(74) Representative: Grünecker, Kinkeldey, Stockmair & Schwanhäusser
(86) International application number: PCT/JP2011/004374
(87) International publication number: WO 2012/017643

(57) **Abstract**

The encoding method obtains a video stream including pictures and display information, the pictures being L-R containing images each having a display area split into two sub-areas, one storing a left-view image and the other storing a right-view image. The display information includes 2D display information and 3D display information, each of which including cropping information specifying an area in the display area as an area to be cropped, the area in the display area specified by the cropping information of the 3D display information is for 3D display, and the area in the display area specified by the cropping information of the 2D display information is for 2D display, and is one of the left-view image and the right-view image.

## Description

### [Technical Field]

The present invention relates to an encoding method, a display apparatus, and a decoding method for the recording and transferring of video.

### [Background Art]

Recently, there are more opportunities of enjoying 3D video in movie theaters and the like. As such, there is an increased demand for 3D video programs on digital television broadcasts and the like.

Patent Document 1 describes technology for the playback and display of stereoscopic video. In specific, Patent Literature 1 discloses a display apparatus which performs stereoscopic playback of 3D video encoded in the Side-by-Side format (or the Parallel format). The Side-by-Side format is a 3D format in which picture data of each of frames composing a video stream are split into an area on the right-half and an area on the left-half, which respectively contain a right-view image and a left-view image for stereoscopic viewing. 3D data in the Side-by-Side format are transferred in such a form. Hereinafter, an image such as introduced in the above which simultaneously contains both the left-view image and the right-view image in a single display area is referred to as an L-R containing image. When performing display of the above-described Side-by-Side 3D video by using a conventional 3D display apparatus, commonly, the 3D display apparatus first judges whether the video stream input thereto is Side-by-Side 3D video. When determining that the video stream is Side-by-Side 3D video, the 3D display apparatus performs decoding with respect to the right-view image and the left-view image contained in each of the L-R containing images composing the 3D video, and thereby displays the 3D video.

As such, a conventional 3D display apparatus is able to properly reproduce and display 3D video only when the 3D video contains L-R containing images in the Side-by-Side format. This gives rise to the following technical problems.

### [Citation List]

### [Patent Literature]

[Patent Literature 1]
   Japanese Patent No. 3789794

### [Summary of Invention]

### [Technical Problem]

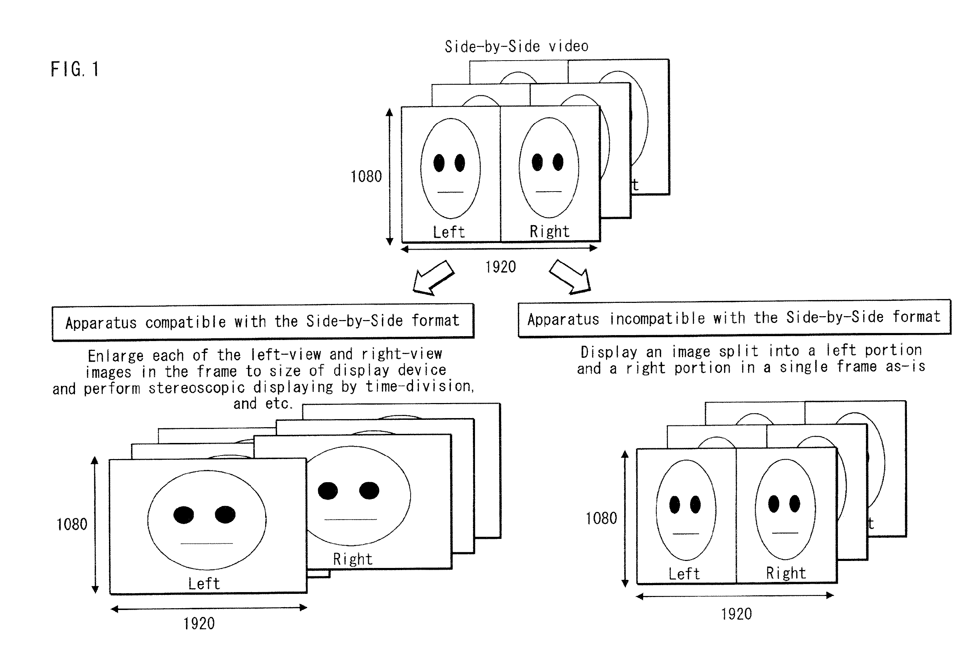

Fig. 1 is a diagram illustrating technical problems present in the distribution of video in the Side-by-Side format.

First of all, as illustrated in the lower-left portion of Fig. 1, a conventional 3D display apparatus compatible with the Side-by-Side format displays 3D video by enlarging each of the left-view images and the right-view images to the size of the display (screen), and by using a method such as time-division.

However, when playing back a Side-by-Side video stream on a conventional 2D display apparatus, the 2D display apparatus displays a single image, or picture, where a left-view image and a right-view image are arranged side-by-side. Thus, the screen of the 2D display apparatus displays images as illustrated in the lower-right portion of Fig. 1, where a left-view image and a right-view image appear together in lateral arrangement. Therefore, a user is forced to view two 2D images resembling one another arranged side-by-side on the display screen. Under such a condition, the user cannot enjoy the Side-by-Side video stream even as 2D video displayed in the proper size of the display screen.

One measure which can be taken to avoid this situation is separately and additionally preparing, for digital television broadcasting, 2D video which is completely identical in content as the Side-by-Side 3D video.

However, when both ordinary 2D video and Side-by-Side 3D video are transferred to the 2D display apparatus at the same time, the 2D display apparatus is able to receive the 3D video despite its incapability of properly playing back the 3D video. As a result, the user would have to take the trouble of changing channels between the 2D video and the 3D video, and correctly selecting the ordinary 2D video. Here, this changing between channels may cause further problems, since, when the user happens to select the 3D video as a result of channel zapping on the 2D display apparatus, the above-mentioned phenomenon of the left-view and right-view images being displayed side-by-side on the same screen cannot be avoided. Further, when taking this measure, there is a need of simultaneously transferring two kinds of data streams for a single broadcast program; a 2D video version and a 3D video version, which are identical in terms of content. Thus, more communication bandwidth is required when compared to transferring a single data stream, and an increase in transmission load is brought about. Also, when taking this measure, the user has to change channels multiple times, and thus the usability of the 2D display apparatus is impaired.

Furthermore, since conventional 2D display apparatuses play back the image where left-view and right-view images are displayed in lateral arrangement on the same screen as-is, broadcasters and distributors of 3D video are likely to receive claims from users of conventional 2D display apparatuses, complaining that the images where left-view and right-view images are displayed side-by-side are displayed instead of proper 2D images.

In view of such problems, manufacturers of 2D display apparatuses are capable of making modifications and improvements in product specifications of future products so as to prevent the immediate displaying of the above-mentioned L-R containing images. However, this does not provide a perfect solution for the above-mentioned problems, since the product specifications of pre-existing 2D display apparatuses, which have already been introduced to the market and implemented in households, remain unchanged.

Also, when displaying 3D video, a conventional 3D display apparatus cuts out right-view and a left-view images from picture data under the presumption that a right-view image is contained in the right-half of the picture whereas a left-view image is contained in the left-half of the picture. Accordingly, when the layout of images composing the picture differs, the conventional 3D display apparatus is incapable of properly displaying 3D video on the display screen. For instance, when the creator of a video stream applies the Top-and-Bottom format for containing left-view and right-view images in picture data, an image composing the transferred picture data has a layout in which the left-view image and the right-view image are stacked vertically in one frame. When the transferred 3D video is in the Top-and-Bottom format as described in the above, a conventional 3D display apparatus which is compatible with the Side-by-Side format is incapable of properly displaying the Top-and-Bottom 3D video.

Hence, in view of the aforementioned problems, the present invention aims to provide an encoding method, a display apparatus, and a decoding method, which enable all of a conventional 2D display apparatus, a newly-developed 2D display apparatus, a conventional 3D display apparatus, and a newly-developed 3D display apparatus to perform proper displaying of video.

### [Solution to the Problems]

The present invention provides an encoding method comprising: a generation step of generating first display information and second display information for pictures each having a display area split into two sub-areas, one sub-area storing a left-view image and the other storing a right-view image, the first display information including cropping information specifying a first display area in the display area as an area to be cropped, the second display information including cropping information specifying a second display area in the display area as an area to be cropped; and an encoding step of performing encoding in order to obtain a video stream including the pictures, the first display information, and the second display information.

Additionally, the present invention provides a display apparatus/a decoding method for displaying a video stream input thereto, wherein the video stream includes pictures and display information, each of the pictures having a display area split into two sub-areas, one sub-area storing a left-view image and the other sub-area storing a right-view image, the display information including 2D display information and 3D display information, each of which including cropping information specifying an area in the display area to be cropped and to be used for display and scaling information for scaling the cropping area, the area in the display area specified by the cropping information of the 3D display information is for 3D display, and the area in the display area specified by the cropping information of the 2D display information is for 2D display, and is one of the left-view image and the right-view image, the display apparatus/the decoding method comprising: a primary frame buffer; a secondary frame buffer; a decoder that decodes each of the pictures, which is a compressed picture, to obtain an uncompressed picture and writes the uncompressed picture to the primary frame buffer; and a display processing unit that performs display processing with respect to the uncompressed picture stored in the primary frame buffer according to the 2D display information and writes a result of the display processing to the secondary frame buffer, wherein the display processing unit reads the area in the display area specified by the cropping information of the 2D display information from the primary frame buffer, performs scaling with respect to the area in the display area specified by the cropping information of the 2D display information according to the scaling information of the 2D display information, and writes the area so scaled to the secondary frame buffer.

Further in addition, the present invention provides a display apparatus/a decoding method for displaying a video stream input thereto, wherein the video stream includes pictures and display information, each of the pictures having a display area split into two sub-areas, one sub-area storing a left-view image and the other sub-area storing a right-view image, the display information including 2D display information and 3D display information, each of which including cropping information specifying an area in the display area as an area to be cropped and to be used for display and scaling information for scaling the cropping area, the area in the display area specified by the cropping information of the 3D display information is for 3D display, and the area in the display area specified by the cropping information of the 2D display information is for 2D display, and is one of the left-view image and the right-view image, the display apparatus/the decoding method comprising: a primary frame buffer; a secondary frame buffer; a decoder that decodes each of the pictures, which is a compressed picture, to obtain an uncompressed picture and writes the uncompressed picture to the primary frame buffer; a display processing unit that performs display processing with respect to the uncompressed picture stored in the primary frame buffer according to the display information, and writes a result of the display processing to the secondary frame buffer: a mode storing unit that stores a current display mode, the current display mode being one of a 2D display mode and a 3D display mode; a 3D conversion processing unit that performs 3D conversion with respect to the uncompressed picture having undergone display processing stored in the secondary frame buffer and obtains a left-view image for 3D display and a right-view image for 3D display; a left-view frame buffer that stores the left-view image for 3D display; and a right-view frame buffer that stores the right-view image for 3D display, wherein when the current display mode is the 3D display mode, the display processing unit refers to the 3D display information, rather than to the 2D display information, on a preferential basis, and the display processing unit reads the area specified by the cropping information of the 3D display information from the primary frame buffer, performs scaling with respect to the area specified by the cropping information of the 3D display information according to the scaling information of the 3D display information, and writes the area so scaled to the secondary frame buffer.

### [Advantageous Effects of the Invention]

The encoding method pertaining to the present invention enables proper displaying of 2D video on 2D display apparatuses and proper displaying of 3D video on 3D display apparatuses. As such, the encoding method provides 3D video streams having high compatibility.

Here, the 2D display information of the present invention differs from conventional 2D display information in that the cropping information, which specifies either the right-view image or the left-view image as the cropping area, is included. However, concerning the format used in providing instructions for cropping and scaling conversion, a format of conventional 2D display information may be used. As such, when a 3D video stream including the 2D display information of the present invention is supplied to a conventional 2D display apparatus, the conventional 2D display apparatus is able to perform cropping and/or scaling according to the cropping information and/or the scaling information included in the 2D display information with use of hardware originally included therein. Hence, content of a 3D video stream is displayed properly even in cases where a conventional 2D display apparatus receives a 3D video stream. This ultimately results in the enhancement of the compatibility of video streams created, and since contents of video streams are properly displayed by using the hardware of conventional 2D display apparatuses, the technology is highly practical.

Furthermore, the 3D display information of the present invention similarly includes cropping information and/or scaling information. Thus, a display apparatus provided with the 3D display information is able to identify the correct right-view image and the left-view image area with ease according to the 3D display information. Accordingly, the display apparatus is able to perform stereoscopic viewing by correctly cutting out each of the right-view image and the left-view image contained in the same picture. Thus, even in cases where the right-view image and the left-view image are contained in a picture side-by-side in the lateral direction or in a vertically-stacked manner and where a proportion of the picture occupied by each of the right-view image and the left-view image varies, the display apparatus is able to correctly cut out the right-view picture and the left-view picture contained in the picture, regardless of transmission method, by referring to the 3D display information extracted from the video stream. This realizes stereoscopic playback with an increased degree of stability. Additionally, the display information of the present invention allows producers of 3D video to store and/or transmit right-view and left-view images with a higher degree of flexibility compared to under conventional technology. Furthermore, the proportion of each of a right-view image and a left-view image in picture data can be determined more flexibly as well.

### [Brief Description of the Drawings]

Fig. 1 is a diagram illustrating technical problems present in the distribution of video in the Side-by-Side format.
Figs. 2A through 2D illustrate forms of usage of the 3D digital method and the 2D digital method.
Fig. 3 illustrates a structure of a digital stream in the MPEG-2 transport stream format.
Fig. 4 illustrates a detailed data structure of a PMT.
Figs. 5A through 5C illustrate a GOP structure of a video stream and an internal structure of a video access unit.
Fig. 6 illustrates the process through which individual picture data are converted into a PES packet.
Figs. 7A and 7B illustrate a data structure of TS packets that compose the transport stream.
Fig. 8 illustrates a specific example of how 2D display information and 3D display information are stored.
Figs. 9A and 9B respectively illustrate the process through which L-R containing images in the Side-by-Side format and the Top-and-Bottom format are actually displayed.
Fig. 10 illustrates a stereoscopic image perceived by a user by viewing a left-view image and a right-view image within a 3D video interval with the use of 3D stereoscopic glasses.
Figs. 11A and 11B illustrate a decoder model of an MPEG-4 AVC video decoder.
Figs. 12A and 12B illustrate how cropping areas are specified by cropping information.
Figs. 13A and 13B provide specific illustration of the transition of frames.
Figs. 14A through 14D illustrate four patterns of layout according to the Side-by-Side format, where left-view images are arranged in the left side.
Figs. 15A and 15B illustrate two patterns of layout according to the Top-and-Bottom format.
Figs. 16A and 16B illustrate relations between Top-and-Bottom picture data having blank areas appended thereto and data slices.
Figs. 17A through 17D illustrate four types (types 1 through 4) of 2D display areas supported by type identifiers.
Fig. 18 illustrates an internal structure of a broadcast station which broadcasts transport streams.
Fig. 19 is a flowchart illustrating processing procedures of an encoding method pertaining to embodiment 1.
Fig. 20 is a flowchart illustrating another example of processing procedures of the encoding method pertaining to embodiment 1.
Fig. 21 is a flowchart illustrating the generation of L-R containing images and display information pertaining to embodiment 1.
Fig. 22 is a flowchart illustrating the encoding of the L-R containing images.

Fig. 23 is a flowchart illustrating multiplexing pertaining to embodiment 1.
Fig. 24 illustrates an internal structure of a 2D display apparatus.
Fig. 25 illustrates an internal structure of a 2D digital television 300.
Fig. 26 illustrates an internal structure of a 3D display apparatus.
Fig. 27 provides explanation of a 3D digital television 100.
Fig. 28 is a flowchart illustrating processing procedures of a decoding method pertaining to embodiment 2.
Fig. 29 is a flowchart illustrating 3D mode displaying pertaining to embodiment 2.
Figs. 30A and 30B illustrate specification according to 3D display information pertaining to embodiment 3.
Fig. 31 is a flowchart illustrating details of the generation of the L-R containing images and the display information.
Fig. 32 is a flowchart illustrating procedures in encoding L-R containing images pertaining to embodiment 3.
Fig. 33 is a flowchart illustrating procedures in encoding data slices composing an L-R containing image *(i)* pertaining to embodiment 3.
Fig. 34 is a flowchart illustrating processing procedures of a decoding method pertaining to embodiment 3.
Fig. 35 is a flowchart illustrating processing procedures of 3D mode displaying pertaining to embodiment 3.
Figs. 36A and 36B illustrate specification according to 3D display information pertaining to embodiment 4.
Fig. 37 illustrates a process through which a Full-HD left-view image and a Full-HD right-view image are obtained from a dual Half-HD video stream and a dual Half-HD extension stream.
Fig. 38 illustrates a process through which a left-view video (A) that is a base video and a right-view video (B), a left-view difference video (C), and a right-view difference video (D) are compressed using MPEG-4 AVC inter-view referencing or similar.
Fig. 39 is a schematic example of how a left-view parallax image and a right-view parallax image are generated from a 2D video and a depth map.
Fig. 40 illustrates examples where each of the 2D display information and the 3D display information is combined with the depth map.
Fig. 41 illustrates an arrangement where a left-view image and a right-view image, which are provided as separate video streams, are stored in a single transport stream.
Fig. 42 shows an example of an internal structure of left-view and right-view video streams used in the multiview coding method for realizing stereoscopic viewing.

### [Description of Embodiments]

The encoding method for solving the above-presented problems is to be implemented by incorporation thereof in an authoring computer system as processing procedures of a computer program. The display apparatus for solving the above-presented problems is to be implemented in industrial products such as a digital television. The decoding method for solving the above-presented problems is to be implemented by incorporation thereof in the digital television as processing procedures of a computer program.

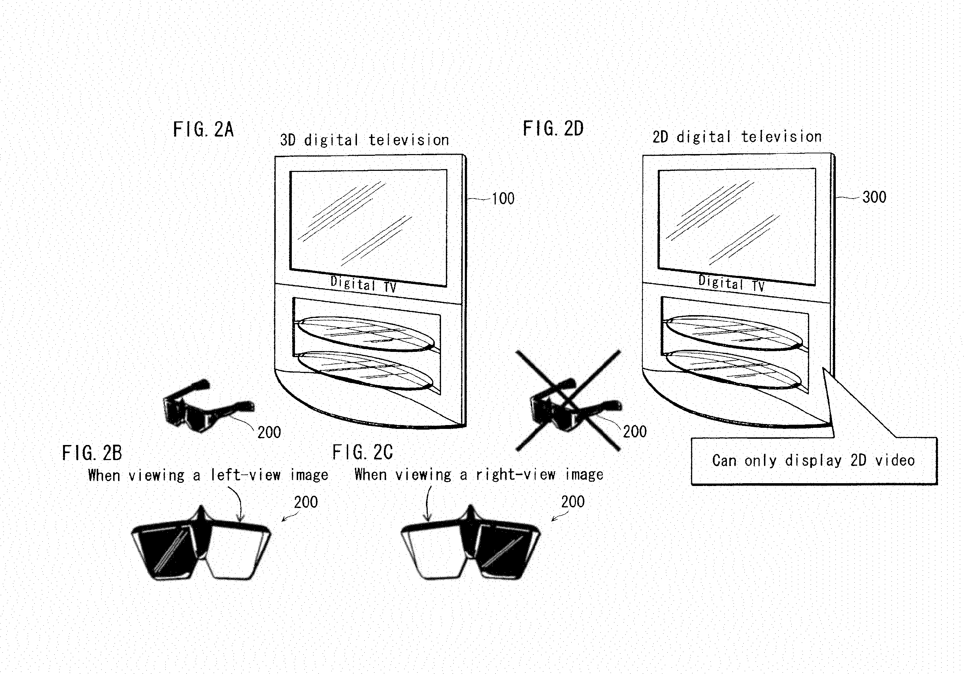

In the following, description is provided on implementations of the encoding method, the display apparatus, and the decoding method pertaining to the present invention by referring to specific embodiments thereof. Firstly, description is provided on a form of usage of the display apparatus, which is considered to be of most interest to general consumers. Digital televisions which are obtained by implementing the display apparatus pertaining to the present invention include, as illustrated in Fig. 2, a 3D digital television 100 on which 3D video can be viewed, and a 2D digital television 300 which does not support 3D video playback and can only play back 2D video.

Fig. 2A shows a form of usage of the 3D digital television 100. As illustrated in Fig. 2A, the user views 3D video on the 3D digital television 100 by using the 3D glasses 200.

The 3D digital television 100 is capable of displaying 2D video as well as 3D video. The 3D digital television 100 displays video by playing back streams that are included in broadcast waves received thereby.

Stereoscopic viewing on the 3D digital television 100 is realized by the user wearing the 3D glasses 200. The 3D glasses 200 include liquid crystal shutters, and enable the user to view parallax images through alternate-frame sequencing. A parallax image is a pair of images consisting of an image for the right eye and an image for the left eye that enables stereoscopic viewing by having each eye view only those images corresponding thereto. Fig. 2B illustrates the 3D glasses 200 and the shutters thereof when the user is viewing a left-view image. At a moment when a left-view image is displayed on the screen, the 3D glasses 200 make the liquid crystal shutter corresponding to the left eye transparent while making the liquid crystal shutter corresponding to the right eye opaque. Fig. 2C illustrates the 3D glasses 200 and the shutters thereof when the user is viewing a right-view image. At a moment when a right-view image is displayed on the screen, in a reversal of the above, the liquid crystal shutter corresponding to the right eye is made transparent and the liquid crystal shutter corresponding to the left eye is made opaque. As shown in Fig. 2D, the 2D digital television 300 cannot realize stereoscopic viewing, unlike the 3D digital television 100. The 2D digital television 300 can only display 2D video. The 2D digital television 300 displays video by playing back streams that are included in broadcast waves received thereby.

This concludes the description concerning the forms of usage of the playback device.

### [Embodiment 1]

In embodiment 1, description is provided on a specific form of embodiment of the encoding method, while presuming that the display apparatus as described above is in existence. The encoding method involves producing a video stream and a transport stream from original images consisted of left-view images and right-view images. Thus, the specific procedures to be carried out in the production of the video stream and the transport stream depend largely upon the structures of the video stream and the transport stream. Therefore, description is provided in the following concerning the basic structure of the transport stream, prior to explanation of the encoding method.

Digital television broadcasts and the like are transmitted commonly using digital streams in the MPEG-2 transport stream (Transport Stream: TS) format. The MPEG-2 transport stream format is a standard for multiplexing and transmitting various streams including audio and visual streams. In specific, the standard is specified by ISO/IEC13818-1 and ITU-T Recc. H222.0.

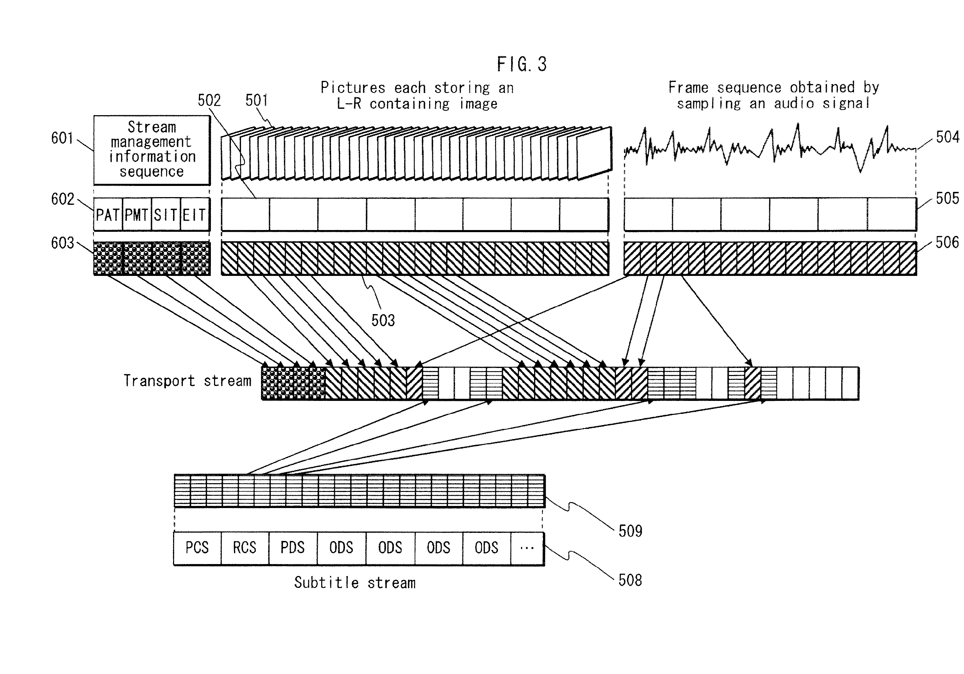

Fig. 3 illustrates the structure of a digital stream in the MPEG-2 transport stream format. As illustrated in Fig. 3, a transport stream is obtained by multiplexing video streams, audio streams, subtitle streams, and so on. Video streams contain the main video portion of a program, audio streams contain the main voice track and sub-voice tracks of the program, and subtitle streams contain subtitle information of the program. Video streams are encoded by according to such standards as MPEG-2 and MPEG-4 AVC. Audio streams are compressed and encoded according to such standards as Dolby AC-3, MPEG-2 AAC, MPEG-4 AAC, and HE-AAC.

The reference signs 501, 502, and 503 in Fig. 3 are provided to illustrate stages during the conversion of a video stream. In specific, a picture data sequence 501 is converted into a PES packet sequence 502, and the PES packet sequence 502 is then converted into a TS packet sequence 503.

The reference signs 504, 505, and 506 in Fig. 3 are provided to illustrate stages during the conversion of an audio stream. In specific, an audio signal 504 is converted into an audio frame sequence by undergoing quantization and sampling. The audio frame sequence so obtained is converted into a PES packet sequence 505, and the PES packet sequence 505 is then converted into a TS packet sequence 506.

The reference signs 508, and 509 in Fig. 3 are provided to illustrate stages during the conversion of a subtitle stream. In specific, a subtitle stream is converted into a functional segment sequence 508 including multiple types of functional segments. Such functional segments include: a Page Composition Segment (PCS); a Region Composition Segment (RCS); a Pallet Define Segment (PDS); and an Object Define Segment (ODS). The functional segment sequence 508 obtained is then converted into a TS packet sequence 509.

The reference signs 601, 602, and 603 in Fig. 3 are provided to illustrate stages during the conversion of stream management information. The stream management information is contained in a system packet called PSI (Program Specification Information), and is information for managing a combination of the video stream, the audio stream, and the subtitle stream which are multiplexed in the transport stream as a single broadcast program. The stream management information is classified into several types of information, such as a PAT (Program Association Table), a PMT (Program Map Table), an EIT (Event Information Table, and an SIT (Service Information Table). The PAT (Program Association Table) shows a PID of a PMT used in the transport stream, and is registered by the PID arrangement of the PAT itself. The PMT includes the PIDs of each of the streams included in the transport stream, such as a video stream, an audio stream, and a subtitle stream, and also includes attribute information of each of the streams corresponding to the PIDs included therein. Further, the PMT also includes various descriptors pertaining to the transport stream. For instance, copy control information indicating whether or not the audiovisual stream may be copied is included among the descriptors. The SIT is information defined according to standards of each of the broadcast waves, and utilizes a user-definable area in the MPEG-2 TS format. The EIT includes information related to the program corresponding to the transport stream, such as the title, the broadcast date and time, and the content thereof. For more information concerning the specific format of the above-described types of information, refer to the reference material published for ARIB (Association of Radio Industries and Businesses), which is stored at a location of: http:www.arib.or.jp/english/html/overview/doc/4-TR-B14v4_4-2p3.pdf.

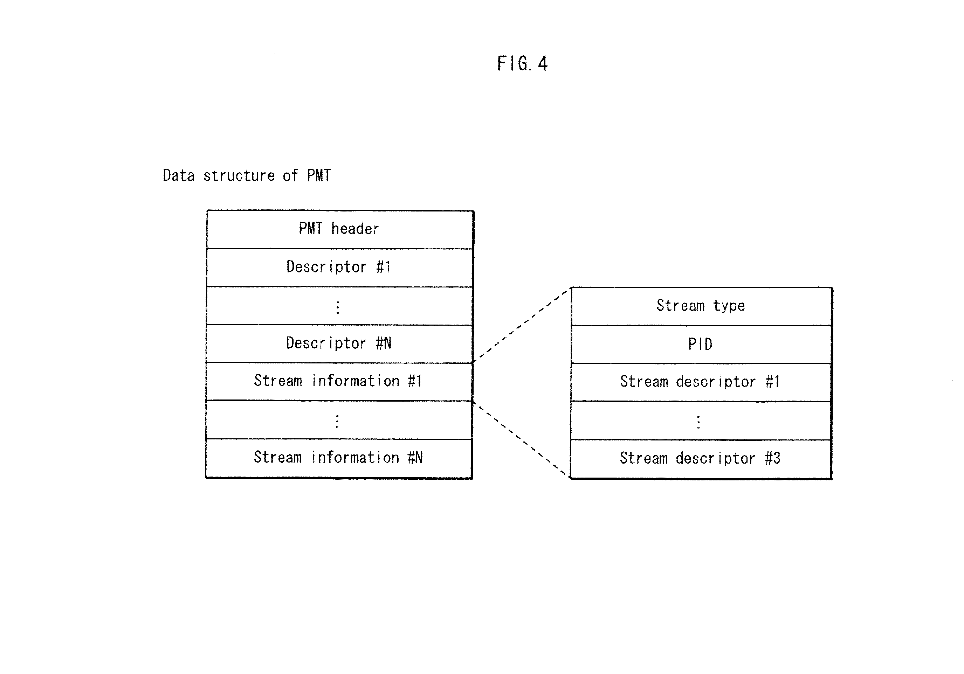

Fig. 4 illustrates the detailed data structure of the PMT. A "PMT header" containing such information as the length of the data included in the PMT is arranged at the head thereof. The PMT header is followed by multiple descriptors, "descriptors #1 - #N", pertaining to the transport stream. Commonly, the aforementioned copy control information or the like is written in these descriptors. The descriptors are followed by multiple pieces of stream information, "stream information #1 - #N", pertaining to each of the streams included in the transport stream. Each piece of stream information is constituted of: a stream type; a stream PID; and stream descriptors including attribute information (such as a frame rate and an aspect ratio) of the corresponding stream. The stream type identifies the stream compression codec or the like of the stream.

This concludes the explanation of the transport stream and the stream management information included therein. Next, description is provided on details of a video stream.

A video stream produced as a result of the encoding method pertaining to embodiment 1 is compression-encoded under moving-picture compression-encoding standards such as the MPEG-2, the MPEG-4 AVC, and the SMPTE VC-1. Under such compression-encoding standards, compression of data amount is performed by making use of spatial and temporal redundancies in the moving pictures. One example of such a method that takes advantage of the temporal redundancies of moving pictures in the compression of data amount is the inter-picture predictive coding. According to the inter-picture predictive coding, a given picture is encoded by using, as a reference picture, another picture that is displayed earlier or later than the picture to be encoded. Further, detection is made of a motion amount from the reference picture, and difference values indicating the differences between the motion-compensated picture and the picture to be encoded are produced. Finally, by eliminating spatial redundancies from the differences so produced, compression of the amount of data is realized.

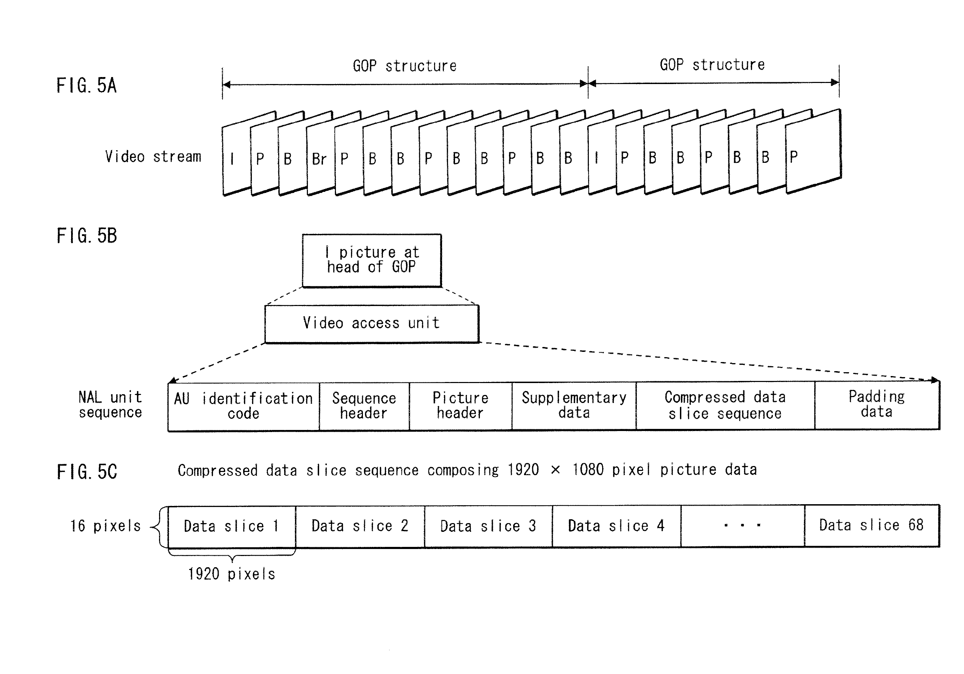

Video streams encoded under such moving picture encoding methods as described above are similar in that the video streams have a GOP structure as illustrated in Fig. 5A. A video stream having the GOP structure is composed of a plurality of GOPs (Groups of Pictures). The GOPs are used as the basic units of encoding, which enables editing of and random access to a moving picture. A GOP is constituted of one or more video access units. Fig. 5A illustrates an example of GOPs.

As illustrated in Fig. 5A, a GOP is composed of multiple types of picture data, such as an I-picture, a P-picture, a B-picture, and a Br-picture.

Among such picture data composing the GOP, a picture to which intra-picture coding is applied while using only the encoding-target image itself and while not using any reference pictures is referred to as the Intra picture (I-picture). Here, note that a picture is defined as a unit of encoding that encompasses both frames and fields. Further, a picture to which inter-picture coding is applied with reference to one picture that has already been processed is referred to as a P-picture, a picture to which inter-picture coding is applied while simultaneously referring to two other pictures that have already been processed is referred to as a B-picture, and a B-picture referenced by other pictures is referred to as a Br-picture. Furthermore, each of a frame in a frame structure and a field in a field structure is referred to here as a "video access unit".

A video access unit is a unit containing encoded picture data. Specifically, when encoding is performed utilizing the frame structure, a video access unit holds data corresponding to a single frame. On the other hand, when encoding is performed utilizing the field structure, a video access unit holds data corresponding to a single field. Furthermore, a GOP begins with an I-picture. Here, for the sake of facilitating the following description, presumption is made that the compression-encoding method applied to video streams is the MPEG-4 AVC standard, unless otherwise stated. Thus, description on a case where the compression-encoding method applied is the MPEG-2 standard is omitted hereinafter.

Fig. 5B illustrates the internal structure of a video access unit that corresponds to an I-picture. which is arranged at the head of a GOP. The video access unit corresponding to the head of the GOP is composed of multiple network abstraction layer (NAL) units. In detail, the video access unit corresponding to the head of the GOP is composed of NAL units such as: an AU identification code; a sequence header; a picture header; supplementary data; compressed picture data; and padding data.

The "AU identification code" is a start code indicating the beginning of the corresponding video access unit. The "sequence header" includes information that is shared among a plurality of video access units constituting a playback sequence. Such information includes: resolution, a frame rate, an aspect ratio, bit rate and the like. The "picture header" includes information pertaining to the entire picture, such as the encoding format of the picture and the like. The "supplementary data" is additional data that is not required to decode the compressed data, and includes information such as closed-captioning text information that can be displayed on a television in sync with the video, information about the GOP structure, and so on. The "padding data" includes data for adjusting the format of the video access unit. The padding data in itself is not provided with a specific meaning. For example, the padding data may be used as stuffing data to maintain a fixed bitrate.

The internal structure of each of the AU identification code, the sequence header, the picture header, the supplementary data, the compressed picture data, and the padding data varies according to the video encoding format.

For example, under MPEG-4 AVC, the AU identification code corresponds to an AU Delimiter (Access Unit Delimiter), the sequence header corresponds to an SPS (Sequence Parameter Set), the picture header corresponds to a PPS (Picture Parameter Set), the compressed picture data corresponds to several slices of data, the supplementary data corresponds to SEI (Supplemental Enhancement Information), and the padding data corresponds to FillerData.

In contrast, under MPEG-2, the sequence header corresponds to any of "sequence_Header", "sequence_extension", and "group_of_pictures_header", the picture header corresponds to any of "picture_header" and "picture_coding_extension", the compressed picture data corresponds to several data slices, and the supplementary data corresponds to "user_data". Although no AU identification code is present in the case of MPEG-2, breaks between video access units can be determined by using a start code of each header. Each of the streams multiplexed in the transport stream is identified by a stream ID called a PID. A decoder is able to extract a decoding-target stream by extracting packets with the corresponding PID. The correspondence between the PIDs and the streams is described in the forthcoming explanation of the descriptors contained in the PMT packet.

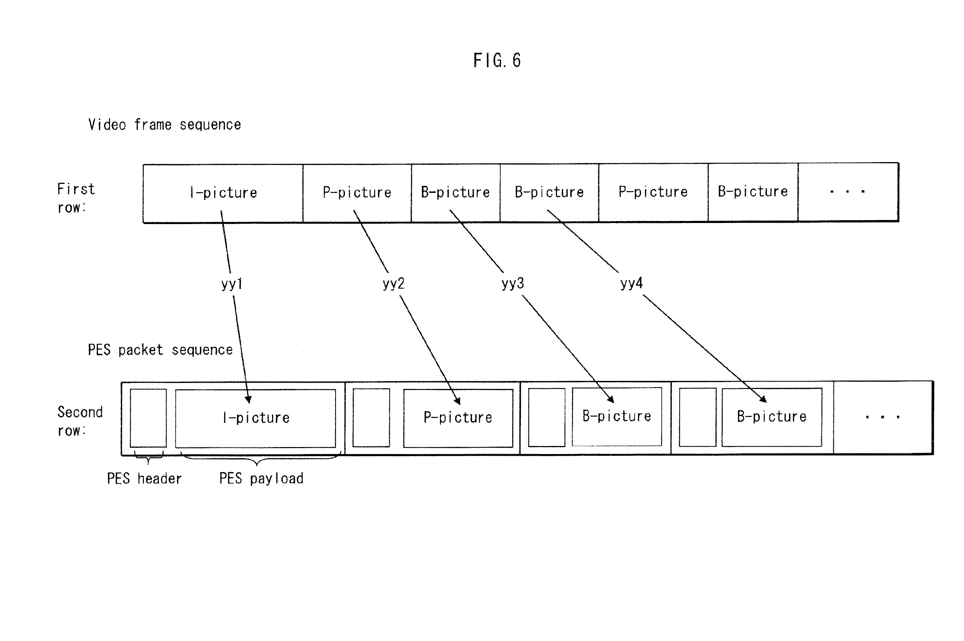

Each of the pictures is converted as illustrated in Fig. 6, and is stored in a payload of a corresponding PES (Packetized Elementary Stream) packet. Fig. 6 illustrates a process in which each picture is converted into a PES packet.

The first row in Fig. 6 indicates a video frame sequence of the video stream. The second row indicates a PES packet sequence. As indicated by arrows yy1, yy2, yy3 and yy4 in Fig. 6, the I-picture. B-pictures and P-pictures, which are video presentation units constituting the video stream, are each divided into units of pictures and then stored in a payload of a corresponding PES packet. Each PES packet has a PES header. The PES header contains a PTS (Presentation Time-Stamp) and a DTS (Decoding Time-Stamp) pertaining to the corresponding picture.

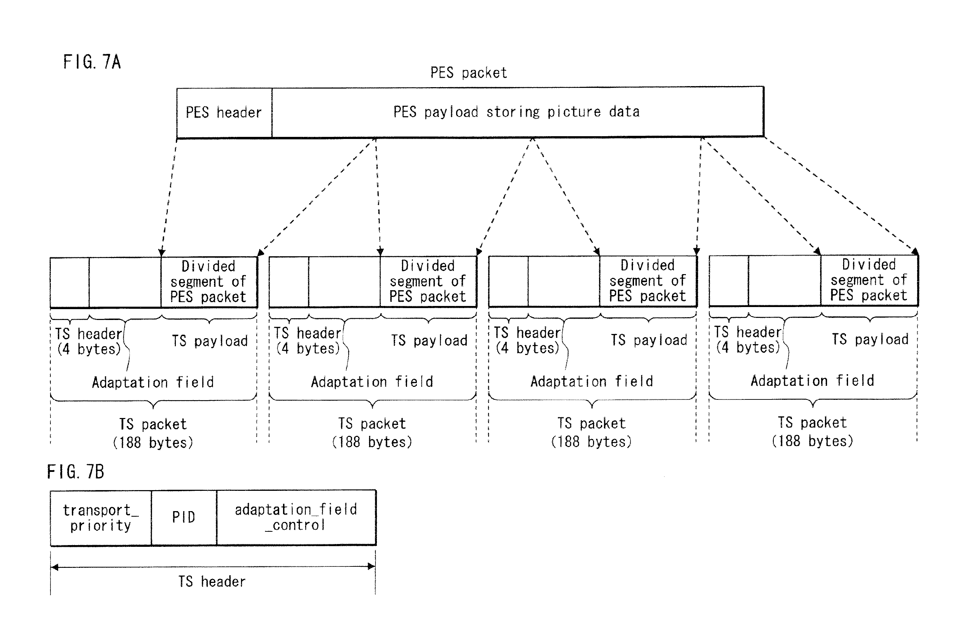

A PES packet obtained by converting a corresponding picture is then divided into multiple pieces. Each of the pieces of the PES packet is then stored in a payload of a corresponding TS packet. Figs. 7A and 7B illustrate a data structure of the TS packets that compose the transport stream. A TS packet is a packet having a fixed-length of 188 bytes, and is composed of a 4 byte TS header, an adaptation field, and a TS payload. The TS header is composed of information such as transport_priority, PID, and adaptation_field_control. As previously mentioned, a PID is an ID identifying a stream that is multiplexed within the transport stream. The transport_priority is information identifying different types of packets among the TS packets having the same PID. Here, it is to be noted that a TS packet need not be provided with all such information as described in the above. That is, there exist a case where only one of the adaptation field and the TS payload exists, and a case where both exist. Whether or not each of the adaptation field and the TS payload exists is indicated by the adaptation_field_control. Specifically, only the TS payload exists when adaptation_field_control is 1, only the adaptation field exists when adaptation_field_control is 2, and both of the TS payload and the adaptation field exist when adaptation_field_control is 3.

The adaptation field is an area for storing PCR and similar information, as well as being an area for stuffing data used to adjust the TS packet to a fixed length of 188 bytes. Further, as already mentioned in the above, the TS payload stores a divided segment of the PES packet.

As description has been made in the above, each piece of picture data is converted and incorporated into a transport stream by PES packetization and TS packetization. Further, it could be seen that each of parameters composing a piece of picture data is converted into a NAL unit. This concludes the explanation of the transport stream. Subsequently, detailed description is provided on 2D display information and 3D display information.

The present embodiment is characterized in that both display information for 2D mode display (2D display information) and display information for 3D mode display (3D display information) are introduced into the above-described data structure. Here, "display information" is defined as information specifying a certain type of displaying to be performed by the display apparatus. More specifically, the display apparatus having received a video stream or a transport stream is capable of specifying areas of an encoded frame, or areas to be used for actual displaying according to display information extracted from the received video stream.

In the following, the internal structure of the transport stream is discussed in further detail. Here, it is required that the 2D display information and the 3D display information be stored in the transport stream while maintaining compatibility with the video access unit structure under MPEG-4 AVC.

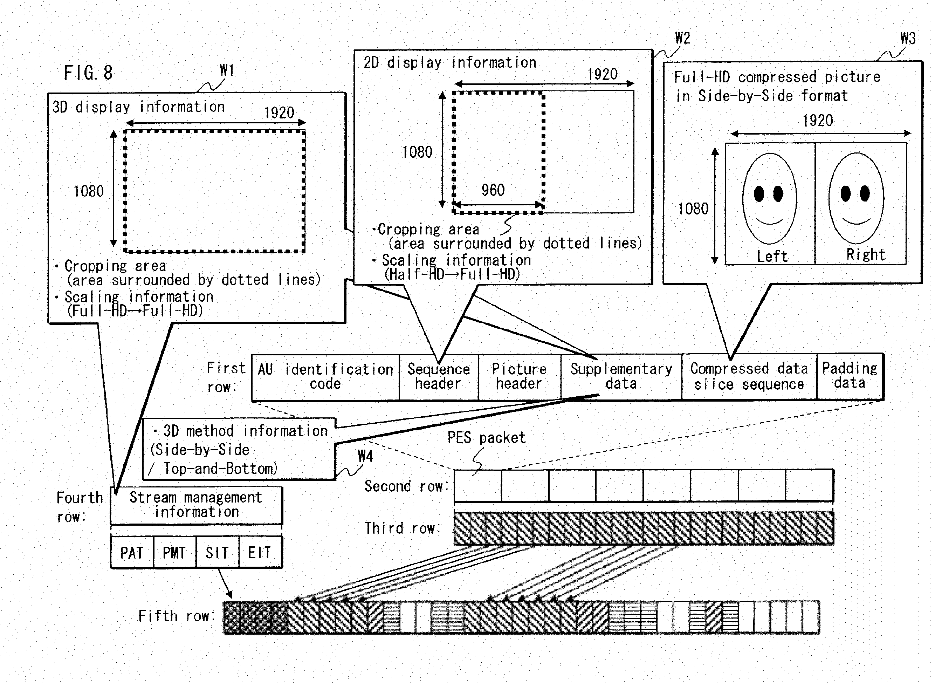

Fig. 8 illustrates a specific example of how each of the 2D display information and the 3D display information are introduced and stored in a transport stream. In specific, Fig. 8 illustrates an example where Side-by-Side 3D video is stored in a Full-HD frame size.

In Fig. 8, the first row indicates NAL units composing a video access unit of an MPEG-4 AVC video stream, the second row indicates a PES packet sequence, the third row indicates a TS packet sequence, the fourth row indicates stream management information, and the fifth row indicates a transport stream. Note that the transport stream illustrated in the fifth row in Fig. 8 is exactly similar to that illustrated in Fig. 3. As already mentioned in the above, the first row in Fig. 8 illustrates NAL units. The NAL units compose picture data contained in the PES packet, and are exactly similar to those illustrated in Fig. 5B.

Here, the 2D display information is contained in the "sequence header", which is one of the NAL units. Further, the box *W3* in Fig. 8 illustrates an internal structure of a compressed data slice sequence in close-up. Note that the compressed data slice sequence is one of the NAL units. As is indicated by the illustration in the box *W3*, the compressed data slice sequence composes a multi-view containing image.

Here, a multi-view containing image is defined as an image containing multiple viewpoint images in a pixel area (also referred to as a frame area) of a predetermined resolution of one picture. Thus, when a picture is decoded, stereoscopic playback is performed by extracting viewpoint images corresponding to respective viewpoints from the frame area thereof. When a parallax image is a stereo image, and is composed of a combination of a left-view image and a right-view image, the picture data contains two viewpoint images, the left-view image and the right-view image. Hereinafter, a multi-view containing image containing a left-view image and a right-view image is defined and referred to as an "L-R containing image". Note that, to avoid complication of explanation, description is provided hereinafter under the presumption that the multi-view containing image is an L-R containing image containing viewpoint images of a left-view image and a right-view image, rather than providing description referring to each and every variation of multi-view containing images.

In the specific example illustrated in Fig. 8, a compressed picture composing the video stream has a structure in which a left-view image with a Full-HD frame size is down-converted into a Half-HD frame size and contained in a left-side area of the picture, and a right-view image with a Full-HD frame size is down-converted into a Half-HD frame size and contained in a right-side area of the picture. Thus, the left-view image and the right-view image are contained in a side-by-side arrangement in a Full-HD frame.

The box *W2* in Fig. 8 illustrates the internal structure of the sequence header. As illustrated in the box *W2*, the sequence header contains 2D display information. In specific, the 2D display information is composed of cropping information and scaling information. The box indicated by broken lines in the box *W2* indicates an area specified by the cropping information included in the 2D display information.

The box *W1* in Fig. 8 illustrates the internal structure of the supplementary data and the stream management information in close-up. As illustrated in the box *W1,* the 3D display information is arranged in the supplementary data and the stream management information. Here, it should be noted that the 3D display information is basically stored in the supplementary data, but there are cases where the 3D display information is alternatively stored to the stream management information when the 3D display information is not stored in the supplementary data.

When the 3D display information is contained in the stream management information, the 3D display information is contained, more specifically, in the PMT packet as one of the stream descriptors of the corresponding video stream. More specifically, under MPEG-4 AVC, it is preferable that the stream descriptor containing the 3D display information be contained in an undefined portion of the AVC video descriptor. On the other hand, under MPEG-2, it is preferable that the stream descriptor containing the 3D display information be contained in an undefined portion of a video encoding/decoding control descriptor. Similar to the 2D display information, the 3D display information includes cropping information and scaling information. In a case where the Side-by-Side format is applied, the cropping information of the 3D display information indicates an entire area of the Full-HD picture. This differs from the area of the picture data specified by the cropping data of the 2D display information. In addition, the scaling information is set in the 3D display information such that Full-HD data is displayed in Full-HD, as- is. That is, the scale factor in this case is 100%.

When the 3D display information is contained in the supplementary data, especially under MPEG-4 AVC, the 3D display information is contained in the SEI message. On the other hand, under MPEG-2, the 3D display information is contained in the user_data or the extension_ data.

As description has been provided in the above, the 3D display information may be stored in either one of the supplementary data or the stream management information, In the following, description is provided concerning the advantages of storing the 3D display information in each of such storage locations.

Firstly, when storing the 3D display information in the supplementary data, it is possible to vary the storing method of the L-R containing images along the time-axis of the video stream. This is exemplary when it is desired to change the display control indicated by the 3D display information from time to time and in short intervals. Note that, arrangement may be made such that the 3D display information is contained in only the picture corresponding to the head of the GOP. In such a case, the analysis of the 3D display information by the playback device is facilitated since the playback device will only be required to perform the analysis of 3D display information once for each of the GOPs, and not for each of the pictures included in the GOP.

In contrast, since the stream management information is information valid for one entire transport stream, the control indicated by the 3D display information remains fixed during the entire time-axis of one video stream when containing the 3D display information in the stream management information. Thus, when it is desired to realize the same display control with respect to one whole program or with respect to multiple programs, the storing of the 3D display information in the stream management information is exemplary. This concludes the explanation of the storage locations of the display information.
Subsequently, detailed description is provided concerning the storage location of 3D method information.

The box *W4* in Fig. 8 illustrates an internal structure of the supplementary data in close-up. As illustrated in the box *W4,* the 3D method information is included in the supplementary data. The 3D method information is information indicating the 3D method being applied.

Examples of the 3D method include the frame-alternating method and the multiview coding method, and further, the frame-alternating method includes such methods as the Side-by-Side format, the Top-and-Bottom format, and the Line Alternative format. The 3D method information includes information specifying which of the above-mentioned methods is in use. When the Side-by-Side format is the 3D method applied, an identifier indicating "Side-by-Side format" is set to the 3D method information. Concerning the specific storage location of the 3D method information in the supplementary data, the 3D method information is contained in the SEI message under MPEG-4 AVC, and in the user_data or the extension_data under MPEG-2. Further, under MPEG-4 AVC, frame_packing_arrangement SEI is used as the 3D method information. The frame_packing_arrangement SEI is supplementary data for defining the frame-alternating 3D method being used.

This concludes the explanation of the 3D method information. In the following, description is provided on the details of 3D playback performed of a video stream.

Note that, in the following description, 3D playback of a video stream is realized according to the frame-alternating method as described in the above. The frame-alternating method involves thinning or shrinking each of the pictures corresponding to the left-view video and the right-view video, combining the thinned or shrinked pictures into one, and thereafter performing conventional motion-picture compression-coding. One example of the frame-alternating method is the Side-by-Side format. In the Side-by-Side format, one picture composing the left-view video and a corresponding picture composing the right-view video are down-scaled in the horizontal direction by 1/2, and the down-scaled pictures are arranged side-by-side to form a single picture.

A stream is obtained from the motion picture made up of pictures so formed by performing conventional motion-picture compression-coding. In the meantime, during playback, the stream is decoded into a motion picture, by similarly according to conventional motion-picture compression-coding. A left-view image and a corresponding right-view image are obtained by dividing each of the pictures of the motion picture into a left-side image and a right-side image, and further by expanding the respective images in the horizontal direction by a factor of two.

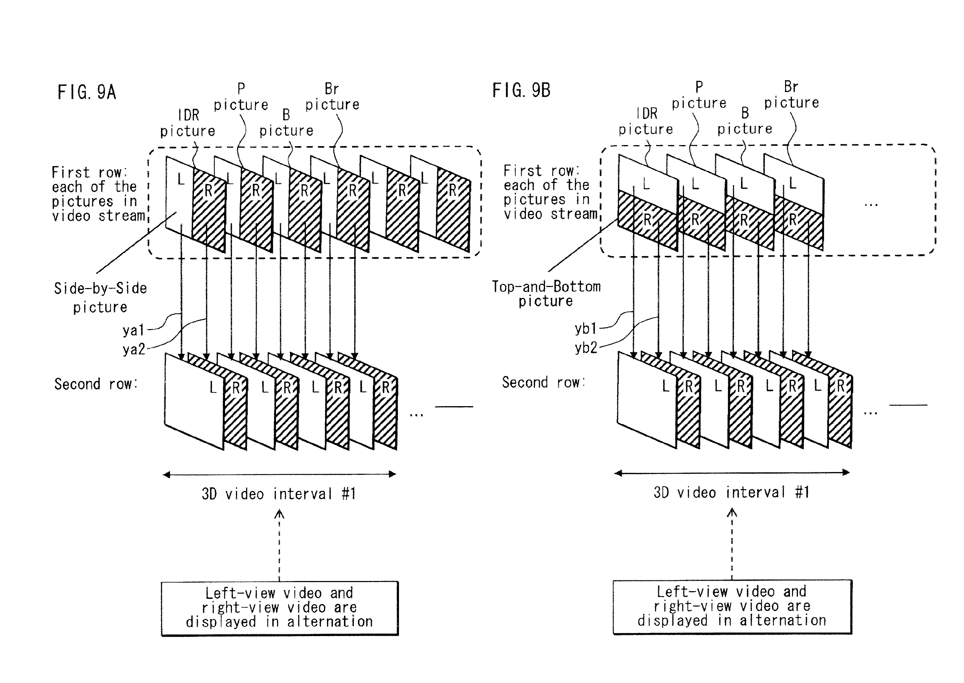

Fig. 9A illustrates how L-R containing images in the Side-by-Side format are actually displayed. Note that in Fig. 9A, the L-R containing images illustrated form a GOP structure. In specific, each of the pictures in the first row is an L-R containing image in the Side-by-Side format. The L-R containing images collectively compose a 3D video interval as illustrated in the second row. The 3D video interval is composed by the left-view images and the right-view images contained in the L-R containing images being displayed one-by-one as independent pictures.

The arrows *ya1* and *ya2* provided between the first row and the second row are used for schematically illustrating that each of the left-view images and the right-view images contained in the L-R containing images is cut-out and expanded for displaying.

This concludes the explanation of the Side-by-Side format. Subsequently, description is provided on the Top-and-Bottom format.

Fig. 9B illustrates how L-R containing images in the Top-and-Bottom format are actually displayed. Note that in Fig. 9B, the L-R containing images illustrated form a GOP structure. In specific, each of the pictures in the first row is an L-R containing image in the Top-and-Bottom format. The L-R containing images collectively compose a 3D video interval as illustrated in the second row. The 3D video interval is composed by the left-view images and the right-view images contained in the L-R containing images being displayed one-by-one as independent pictures.

The arrows *yb1* and *yb2* provided between the first row and the second row are used for schematically illustrating that the left-view images and the right-view images contained in the L-R containing images are cut-out and expanded for displaying.

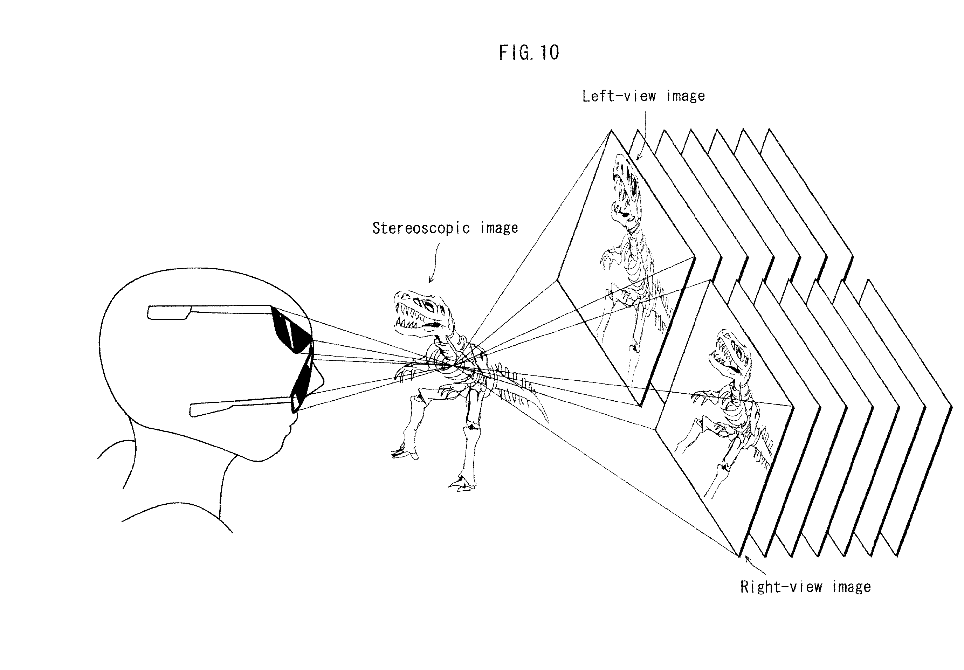

Fig. 10 illustrates a stereoscopic image perceived by the user by viewing left-view images and right-view images within a 3D video interval with the use of 3D stereoscopic glasses. In the illustration in Fig. 10, the head of a user wearing stereoscopic glasses is illustrated on the left side, and, on the right side, examples where an object, which is a dinosaur skeleton, is viewed by the left eye and where the same object is viewed by the right eye are illustrated. By repeatedly alternating the transparency and opacity for the left and right eyes with the stereoscopic glasses, the user's brain is made to combine the views of each eye from afterimage effects. This results in the perception that a stereoscopic object exists along the lines extending from the middle of the head. This concludes the description on 3D playback of a video stream.

Description of the playback of picture data in the Side-by-Side format and the Top-and-Bottom format has been provided under the presumption that cropping and scaling are performed by a decoder model of a video decoder.

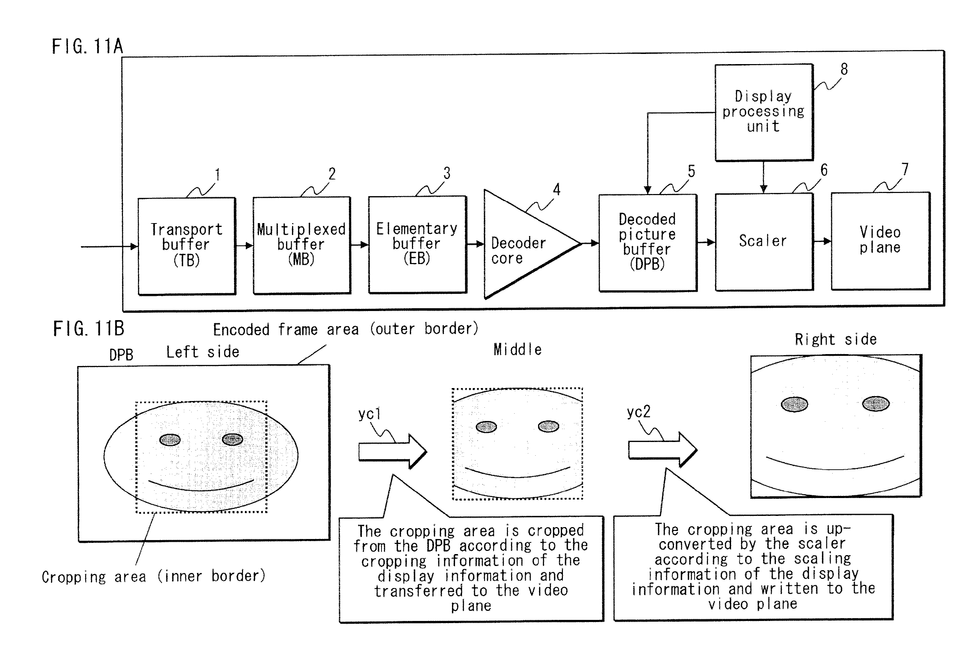

In the following, description is provided on the cropping and scaling performed by the decoder model of the video decoder, in accordance with the respective cropping information and the scaling information. Fig. 11A illustrates a decoder model of an MPEG-4 AVC video decoder. The decoder model illustrated in Fig. 11A includes: a TB 1; an MB 2; an EB 3; a decoder core 4; a DPB 5; a scaler 6; a video plane 7; and a display processing unit 8.

The Transport Buffer (TB) I is a buffer for temporarily accumulating TS packets as they are when TS packets including a video stream are output from a demultiplexer.

The Multiplexed Buffer (MB) 2 is a buffer for temporarily storing PES packets upon the output of a video stream from the TB to the EB. Here, when data is transferred from the TB to the MB, TS headers of the TS packets are removed.

The Elementary Buffer (EB) 3 is a buffer for storing encoded video access units. When data is transferred from the MB to the EB, PES headers are removed.

The decoder core 4 decodes each of the video access units of a video elementary stream at a predetermined decoding time (DTS), and thereby creates a frame image or field image. Upon decoding each picture, the data core 4 performs motion compensation by referring to pictures which exist in the future and past directions as reference pictures.

The Decoded Picture Buffer (DPB) 5 is a buffer for temporarily storing a frame image or a field image that has been obtained as a result of decoding. The DPB 59 is used by the video decoder 57 to refer to decoded pictures when the video decoder 57 decodes video access units such as P-pictures or B-pictures having been encoded by the inter-picture prediction encoding.

The scaler 6 performs scaling with respect to picture data being stored in the decoded picture buffer, and writes the scaled picture data to the video plane.

The video plane 7 stores pixel data corresponding to one screen and supplies the pixel data for display. Here, the pixel data stored in the video plane 7 composes the converted picture data.

The display processing unit 8 performs cropping and scaling respectively according to the cropping information and the scaling information.

This concludes the description of one example of a decoder model of the video decoder. Here, it should be noted that an embodiment of the display apparatus pertaining to the present invention is not limited to the decoder model of the video decoder compatible with MPEG-4 AVC, description of which has been provided in the above.

Subsequently, description is provided on how a picture is displayed as a result of the cropping information and the scaling information being supplied to the decoder model. In Fig. 11B, information contained in the decoded picture buffer is illustrated in the left side, while information contained in the video plane is illustrated in the right side.

First, description is provided on the control performed when the cropping information is used. The cropping information specifies a "cropping area", which is an area actually displayed, from within a frame area. Here, a frame area is defined as a set of pixels which are obtained by decoding a video access unit corresponding to one frame. Thus, in a case where a Full-HD picture is included in the video access unit, 1920 × 1080 pixels composing the Full-HD picture composes the frame area. When the decoder decodes a video access unit which is provided as NAL units, the frame area is formed in the decoded picture buffer. In addition, and as already mentioned in the above, an area of the frame area which is specified by the cropping information is referred to as a "cropping area".

The illustration provided in the middle portion of Fig. 11B indicates a cropping area specified by the cropping information. The cropping information specifies a "cropping area", which is an area actually displayed, from within a frame area. As already mentioned in the above, the frame area is stored in the decoded picture buffer. Thus, when display information is provided to the decoder, the display processing unit cuts out (crops) a cropping area from the information stored in the decoded picture buffer according to the cropping information included in the 2D display information, and transfers the cropping area to the video plane. The arrow *yc1* in Fig. 11B schematically illustrates the cropping described in the above.

Subsequently, description is provided on the control performed according to the scaling information. The scaling information is information used for performing scaling, where the cropping area is adjusted to a size that is appropriate for displaying on a display of, for instance a television. The illustration provided in the middle portion of Fig. 11B indicates the cropping area specified by the cropping information. In specific, the scaling information specifies the scale factor used for scaling the cropping area cut out from the decoded picture buffer to a size appropriate for displaying. Thus, when the display information is supplied to the decoder, the scaler performs conversion of the resolution of the cropping area according to the scaling information included in the display information, and writes the scaled cropping area to the video plane. The arrow *yc2* in Fig. 11B schematically illustrates the conversion of resolution as described in the above.

This concludes the explanation of the cropping information and the scaling information. Next, description is provided on how a cropping area is specified by the cropping information.

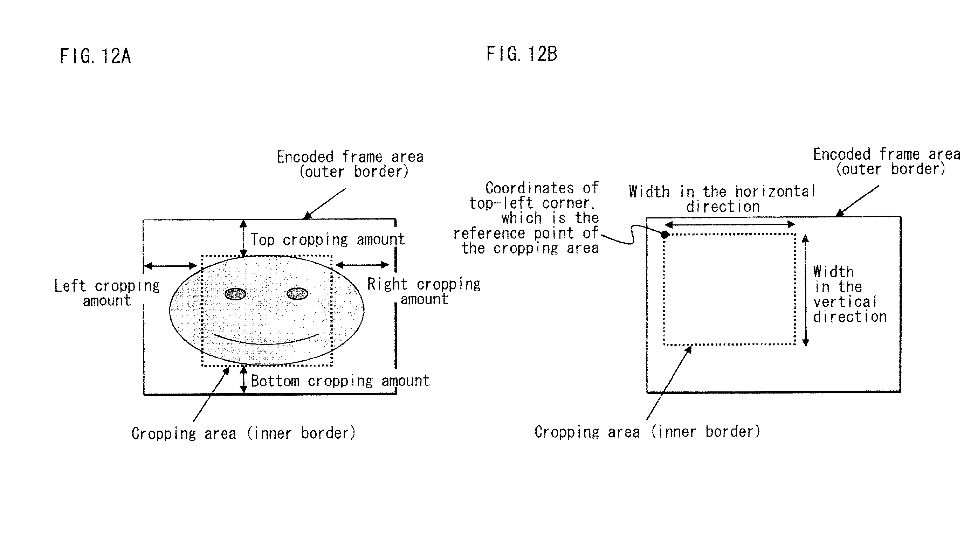

Figs. 12A and 12B illustrate how a cropping area is specified by the cropping information. An image is provided with display coordinates defined along an X-Y coordinate plane in the production thereof. In Figs. 12A and 12B, the top-left corner of the frame area illustrated therein is set as a reference point with the coordinates of (0, 0). Further, the X axis is set along the horizontal line extending to the right side from the reference point, and the X coordinate increases positively as departing from the reference point further to the right. The Y axis is perpendicular to the X axis, and the Y coordinate increases positively as departing from the reference point further downwards. Note that, with reference to other similar drawings, description is to be made on the basis of the same X-Y coordinate plane as provided to Figs. 12A and 12B, unless indicated otherwise.

In Fig. 12A, a cropping area is specified by obtaining a cropping amount in each of the upper, lower, left, and right directions by obtaining offsets between the upper, lower, left, and right boundaries of the cropping area and the upper, lower, left, and right boundaries of the encoded frame. In contrast, in Fig. 12B, the top-left corner of the frame area stored in the decoded picture buffer is set as the reference point of the X-Y coordinate plane, and the cropping area is specified by defining the coordinates of the top-left corner of the cropping area, and further defining the width of the cropping area in each of the horizontal direction and the vertical direction.

Note that, to facilitate explanation, description is provided hereinafter under the presumption that the specification of the cropping area is performed according to the method illustrated in Fig. 12B, rather than providing description referring to both of the methods illustrated in Figs. 12A and 12B. This concludes the explanation on how specification is performed of the cropping area. In the following, description is provided on the technical advantages to be yielded by the provision of the 2D display information and the 3D display information.

As already mentioned in the above, the present embodiment is characterized in that the 2D display information and the 3D display information commonly include the cropping information and the scaling information. Particularly, the cropping information included in the 2D display information defines information required when a display apparatus performs cropping for displaying 2D video by using the video stream.

This concludes the description on how the cropping area is specified by the cropping information. In the following, description is provided concerning the characteristics of the cropping information and the scaling information included in each of the 2D video display information and the 3D display information.

The cropping information of the 2D display information specifies an area within the frame area that is occupied by a 2D compatible image. Here, a "2D compatible image" is defined as a viewpoint image that is for displaying in both the 3D mode and the 2D mode. A parallax image for stereoscopic viewing is composed of multiple viewpoint images, as already explained in the above. Among the multiple viewpoint images, those which are suitable for 2D mode display are specified by the cropping information of the 2D display information.

When the parallax image is a stereo image, and is composed of a combination of a left-view image and a right-view image, the cropping information of the 2D display information specifies one of the left-view image and the right-view image which is suitable for 2D mode display. Similarly, when the parallax image is a multi-channel image composed of more than three viewpoint images, such as a left-view image, a right-view image, a center image, a right upper diagonal image, a right lower diagonal image, a left upper diagonal image, and a left lower diagonal image, the cropping information of the 2D display information specifies one of such images which is suitable for 2D mode display. To avoid complication by providing explanation of each and every variation of the parallax images and the viewpoint images, description in the following is provided under the presumption that the 2D compatible image is a left-view image. The cropping information of the 2D display information specifies an area of the frame area that needs to be cropped in order for the display apparatus to perform 2D video display by using the video stream. On the other hand, the scaling information of the 2D display information defines information that is necessary for the display apparatus to perform scaling of the cropped image.

In contrast, the cropping information of the 3D display information specifies an area within the frame area that is occupied by a combined image, which is a combination of a 2D compatible image and a 2D incompatible image, as the cropping area.

Here, a "2D incompatible image" is defined as an image that is not displayed during playback in the 2D mode but is displayed during playback in the 3D mode. Since a parallax image composing a stereoscopic image includes more than two viewpoint images, one among the more than two viewpoint images is determined as the 2D compatible image, and the rest of the viewpoint images are determined as 2D incompatible images. Since the present embodiment is provided under the presumption that multiple viewpoint images are contained in a single picture, the entirety of the areas occupied by the multiple viewpoint images within the entire frame area is specified by the cropping information of the 3D display information.

When the parallax image is a stereo image, and is composed of the left-view image and the right-view image, the 2D incompatible image is obtained by removing the area specified by the cropping information of the 2D display information from the cropping area specified by the cropping information of the 3D display information. When obtaining the 2D display information, the display apparatus cuts out a cropping area specified by the cropping information of the 2D display information, and thereby obtains the left-view image, which is the 2D compatible image. The left-view image so obtained is written to a left-view video plane. In contrast, every time the 3D display information is obtained, the display apparatus removes the cropping area specified by the cropping information of the 2D display information from the cropping area specified in the cropping information of the 3D display information, and thereby obtains the right-view image, which is the 2D incompatible image. The right-view image so obtained is written to the stereoscopic-view video plane. Hence, the left-view image and the right-view image are supplied for displaying.

The cropping information of the 3D display information defines information required when the display apparatus performs cropping for displaying 3D video by using the video stream. On the other hand, the scaling information of the 3D display information defines information necessary for the display apparatus to perform scaling on the cropped image to display the 3D video by using the video stream.

Note that the "3D display information" and the "3D method information" may or may not be present in the supplementary data, which is one of the NAL units composing the video access unit, or in the PMT packet or the like, which is included in the stream management information. Thus, configuration is made such that a flag (a presence/absence flag) indicating the presence/absence of the "3D display information" and the "3D method information" is stored in the video stream or the stream management information. By providing the presence/absence flag to the video stream or to the NAL units, the 3D digital television 100 is able to perform preparation prior to the actual decoding by referring to the presence/absence flag of the PMT packet. Such preparation includes the securing of memory to be used for the analysis of the "3D display information" and the "3D method information" included in the video stream.

This concludes the explanation of the characteristics of the cropping information and the scaling information. In the following, description is provided on information elements of conventional encoding methods which can be considered as being equivalent to the cropping information and the scaling information as described in the above.

The cropping information and the scaling information are fields or parameters which are respectively used to specify a cropping area and a scale factor. Therefore, fields and parameters having functions equivalent thereto are to be found in the syntax of conventional encoding methods.

For instance, the following parameters under MPEG-2 ISO / IEC 13818-2 correspond to fields or parameters which may be used for the specification of a cropping area within an image.

- 6.2.2.4 Sequence display extension
- display_horizontal_size
- display_vertical_size
- 6.2.3.3 Picture display extension
- frame_centre_horizontal_offset
- frame_centre_vertical_offset
Similarly, the following parameters under MPEG-4AVC ISO/IEC 14496-10 similarly correspond to fields or parameters which may be used for the specification of a cropping area within an image.

- 7.4.2.1.1 Sequence parameter set data semantics
- frame_cropping_flag
- frame_crop_left_offset
- frame_crop_right_offset
- frame_crop_top_offset
- frame_crop_bottom_offset
The specification of whether or not to perform cropping is made by using the frame_cropping information, which is a parameter stored in the SPS under MPEG-4 AVC. To be more specific, when specifying the cropping area, the "frame_cropping_flag" parameter which has been described in the above is set to 1, and further, the top bottom / left / right cropping amounts are respectively set to the above-described parameters of "frame_crop_top_offset" / "frame_crop_bottom_offset" /"frame_crop_left_offset" / "frame_crop_right_offset". Under MPEG-2, the cropping area can be specified by using horizontal and vertical sizes (display_horizontal_size and display_vertical size of sequence_display_extension) of the cropping area and difference information (frame_centre_horizontal_offset and frame_centre_vertical_offset of picture_display_extension) indicating a difference between a center of the encoded frame area and a center of the cropping area.

Since the scaling information is information used for performing scaling, where the cropping area specified is adjusted to a size that is appropriate for displaying on a display of, for instance, a television, the scaling information suffices provided that at least a display aspect ratio is defined thereby. A playback device is able to up-convert and display the cropping area at an appropriate size on the display given that the aspect ratio is so provided. For example, under MPEG-4 AVC, the SPS contains aspect ratio information ("aspect_ratio_idc") as scaling information. Further, under MPEG-4 AVC, to expand a 1440 × 1080 pixel cropping area to a 1920 × 1080 pixel resolution for displaying, a 4:3 aspect ratio is designated. In this case, up-conversion by a factor of 4/3 takes place in the horizontal direction (1440 × 4/3 = 1920) for an expanded 1920 × 1080 display. Similarly, under MPEG-2, the sequence header contains aspect ratio information ("aspect_ratio_information").

When the encoded picture is included in a Side-by-Side video in Full-HD. the half-area (Half-HD) for either the left eye or the right eye is specified as the cropping area. To display the left-view video as 2D video under MPEG-4 AVC, the cropping area information is set such that the top, left, and bottom cropping amounts are 0 and the right cropping amount is 960 pixels. The scaling information specifies a value that changes 960 × 1080 pixel Half-HD into 1920 × 1080 pixel Full-HD. For example, under MPEG-4 AVC, the value of "aspect_ratio_idc" is specified as "16 (2:1)". The 2D display information referred to in the above is referred to by a conventional 2D display apparatus when performing 2D display of a Side-by-Side 3D video stream received. Thus, even if a 2D display apparatus receives a video stream composed of L-R containing images (for instance, in the Side-by-Side format), the 2D display apparatus is able to properly playback the 2D video by cropping portions of the L-R containing images and performing displaying of the cropped portions.

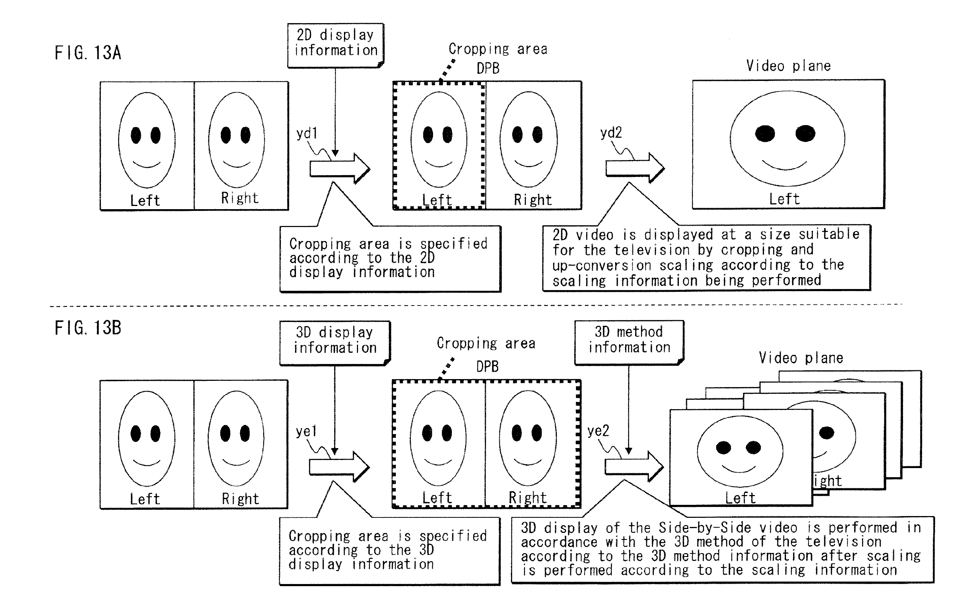

Figs. 13A and 13B specifically illustrate changes occurring to frames as processing proceeds. In the following description provided with reference to Figs. 13A and 13B, a 2D digital television is referred to as an example of a display apparatus for displaying 2D video, whereas a 3D digital television is referred to as an example of a display apparatus for displaying 3D video. In addition, Fig. 13A illustrates an example of a decoding method when the video to be decoded is a Side-by-Side video in Full-HD.

Fig. 13A illustrates how a picture is displayed according to the 2D display information. In Fig. 13A, an L-R containing image is illustrated in the left side, the content of the decoded picture buffer is illustrated in the center, and the content of the video plane is illustrated in the right side.

Specifically, when a picture, which is an uncompressed L-R containing image, is obtained by the decoded picture buffer by decoding a compressed L-R containing image, the display processing unit 8 determines the display method by using the 2D display information. Further, the display processing unit 8 determines a cropping area according to the 2D display information. In the example illustrated in Fig. 13A, the 2D display information specifies the left Half-HD area (one example of the first display area) as the cropping area. Thus, the display processing unit 8 cuts out the left Half-HD area so specified and performs reading thereof, from among the uncompressed picture data stored in the decoded picture buffer. Subsequently, the scaler performs scaling of the cropped picture data according to the scaling information of the 2D display information, and writes the result of the scaling to the video plane. In the example illustrated in Fig. 13A, the scaling information of the 2D display information contains a value (scale factor) for up-converting Half-HD to Full-HD. Thus, the scaler up-converts the left Half-HD video to Full-HD and displays this 2D video on the display apparatus in an appropriate manner.

Fig. 13B illustrates how a picture is displayed according to the 3D display information. In Fig. 13B, an L-R containing image is illustrated in the left side, the content of the decoded picture buffer is illustrated in the center, and the content of the video plane is illustrated in the right side. The display processing unit uses the 3D display information to determine the display method to be applied to the decoded picture data. When an uncompressed L-R containing image is obtained by the decoded picture buffer, the display processing unit 8 determines a cropping area to be cropped from the uncompressed L-R containing image stored in the decoded picture buffer according to the 3D display information. In the example illustrated in Fig. 13B, the cropping information of the 3D display information specifies a Full-HD area corresponding to the entire display area (one example of the second display area) as the cropping area. Thus, the 3D digital television cuts out the Full-HD area so specified and supplies the cropped area to the scaler. The 3D digital television determines a scaling method according to the 3D display information. In the example illustrated in Fig. 13B, the scaling information of the 3D display information includes a value for displaying a Full-HD video as-is. Thus, the scaler uses the Full-HD video as-is, and performs writing thereof to the video plane.

Further, the 3D digital television performs conventional displaying of the 3D video in accordance with the 3D method information. More specifically, in the example illustrated in Fig. 13B, since the 3D method information indicates a Side-by-Side video, the left-view video and the right-view video in the Side-by-Side format are each up-converted, and displayed on the television in 3D according to the 3D method supported by the television.

To summarize the above, by providing a video stream and a transport stream with a format and structure as described in the above and by utilizing a frame-compatible 3D video such as an L-R containing image, the 3D video is played back as 2D video on a playback device which is capable of decoding only 2D video and the 3D video is played back as 3D video on a playback device which is capable of playing back 3D video. When displaying the 3D video as 2D video on a 2D playback device, a selected one of a left-view image and a right-view image is displayed in an appropriate size for the 2D playback device. For instance, when the playback target video stream is a Side-by-Side video stream in Full-HD, the playback device capable of playing back only 2D video up-converts either a left-view image or a right-view image in the Side-by-Side format into Full-HD. In contrast, when a playback device is capable of playing back only 3D video, the playback device up-converts each of the left-view image and the right-view image in the Side-by-Side format into Full-HD, and thus performs playback as a 3D video. This concludes the explanation of the 2D display information and the 3D display information. Subsequently, description is provided on various layout patterns of the L-R containing image, which are supported by the 2D display information and the 3D display information.

Various layout patterns exist of the L-R containing image. The 2D display information may be configured so as to support such patterns.

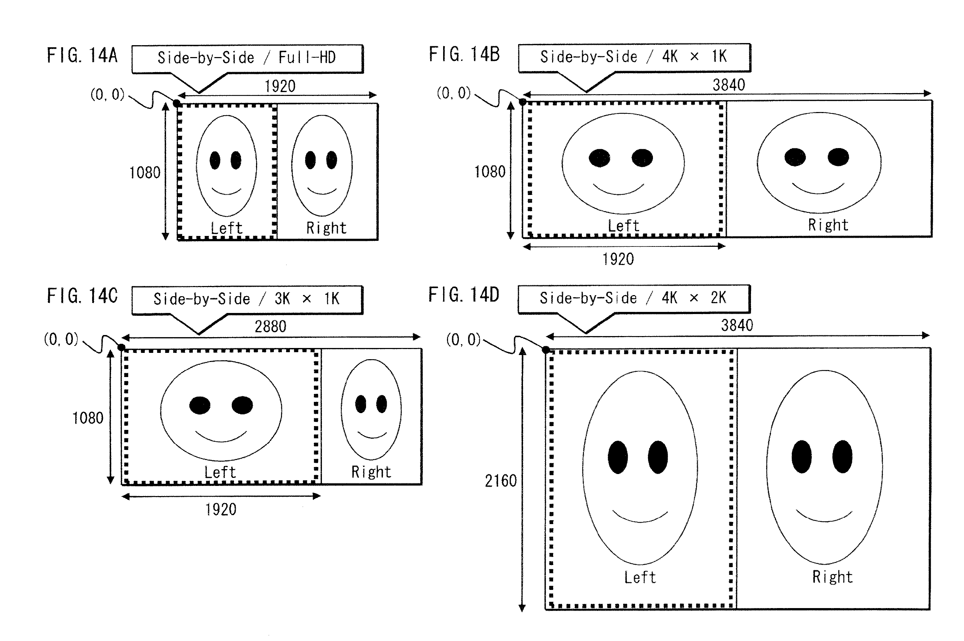

In the provision of description concerning images in the following, a unit of 960 pixels in the horizontal direction of an image is referred to hereinafter as "1K", and a unit of 1080 pixels in the vertical direction of an image is similarly referred to hereinafter as "1K". According to this, the resolution of Full-HD, that is, the resolution of 1920 × 1080 pixels is denoted as 2K × 1K. When applying the units of 1 K as defined in the above, the four possible layout patterns of the Side-by-Side format are denoted as: 2K × 1K (1920 × 1080 pixels); 4K × I K (3840 × 1080 pixels); 3K × 1K (2880 × 1080 pixels); and 4K × 2K (3840 × 2160 pixels). Figs. 14A through 14D illustrate the four possible layout patterns of the Side-by-Side format.

Fig. 14A illustrates a layout pattern of an L-R containing image having a 2K × 1K (Full-HD) resolution. That is, the L-R containing image illustrated in Fig. 14A has a resolution of 1920 × 1080 pixels. Further, a left-view image is arranged in the left side of the L-R containing image, whereas a right-view image is arranged in the right side. The box indicated by broken lines in Fig. 14A schematically indicates an area which is to be displayed as 2D video. Hence, the 2D display information applied to the layout pattern of Fig. 14A specifies the area surrounded by the broken lines, that is, a left-view image with a 960 × 1080 pixel resolution, for displaying as 2D video.

Fig. 14B illustrates a layout pattern of an L-R containing image having a 4K × 1K resolution. That is, the L-R containing image illustrated in Fig. 14B has a resolution of 3840 × 1080 pixels. Further, a left-view image is arranged in the left side of the L-R containing image, whereas a right-view image is arranged in the right side. The box indicated by broken lines in Fig. 14B schematically indicates an area which is to be displayed as 2D video. Hence, the 2D display information applied to the layout pattern of Fig. 14B specifies the area surrounded by the broken lines, that is, a Full-HD left-view image with a 1920 × 1080 pixel resolution, for displaying as 2D video.

Fig. 14C illustrates a layout pattern of an L-R containing image having a 3K × 1K resolution. That is, the L-R containing image illustrated in Fig. 14C has a resolution of 2880 × 1080 pixels. Further, a left-view image is arranged in the left side of the L-R containing image, whereas a right-view image is arranged in the right side. The box indicated by broken lines in Fig. 14C schematically indicates an area which is to be displayed as 2D video. Hence, the 2D display information applied to the layout pattern of Fig. 14C specifies the area surrounded by the broken lines, that is, a Full-HD left-view image with a 1920 × 1080 pixel resolution, for displaying as 2D video.

Fig. 14D illustrates a layout pattern of an L-R containing image having a 4K × 2K resolution. That is, the L,-R containing image illustrated in Fig. 14C has a resolution of 3840 × 2160 pixels. Further, a left-view image is arranged in the left side of the L-R containing image, whereas a right-view image is arranged in the right side. The box indicated by broken lines in Fig. 14D schematically indicates an area which is to be displayed as 2D video. Hence, the 2D display information applied to the layout pattern of Fig. 14D specifies the area surrounded by the broken lines, that is, a (Full-HD) left-view image with a 1920 × 2160 pixel resolution, for displaying as 2D video.

As illustrated in Figs. 14A through 14D, even when the layout of the L-R containing image varies among 2K × 1K, 4K × 1K, 3K × 1K ,and 4K × 2K, and further, when the L-R containing image has a left-view image and a right-view image arranged according to the Side-by-Side format, the left-view image is correctly cut out from the L-R containing image. More specifically, for Side-by-Side 3D video having a 4K × 1K resolution, the 2D digital television 300 plays back Full-HD 2D video by using the 2D display information, and the 3D digital television 100 plays back 3D video at Full-HD × 2 by using the 3D display information. Similarly, for Top-and-Bottom format 3D video having a 2K × 2K resolution, the 2D digital television 300 plays back Full-HD 2D video by using the 2D display information, and the 3D digital television 100 plays back 3D video at Full-HD × 2 size by using the 3D display information. This concludes the explanation of the Side-by-Side format. Next, description is provided on details of the Top-and-Bottom format.

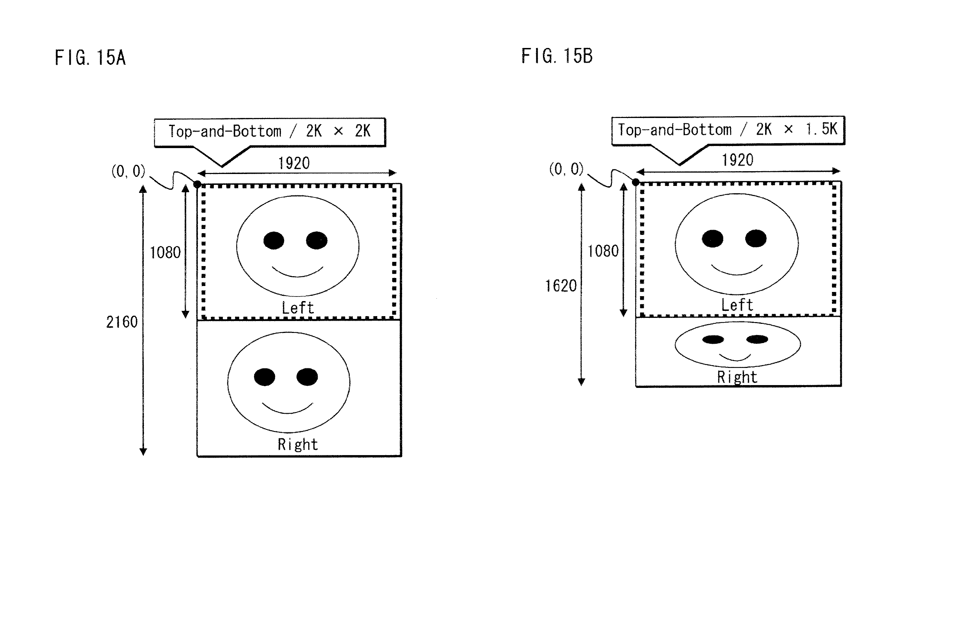

There are two possible layout patterns of the Top-and-Bottom format, which are denoted as: 2K × 2K (1920 × 2160 pixels); and 2K × 1.5K (1920 × 1620 pixels). Figs. 15A and 15B illustrate the two possible layout patterns of the Top-and-Bottom format.

Fig. 15A illustrates a Top-and-Bottom L-R containing image having a 2K × 2K resolution. That is, the L-R containing image illustrated in Fig. 15A has a resolution of 1920 × 2160 pixels. Further, a left-view image is arranged in the top half of the L-R containing image, whereas a right-view image is arranged in the bottom half. Therefore, a left-view image with a 1920 × 1080 pixel resolution corresponding to the top half of the L-R containing image is displayed as 2D video. Further, since the left-view image is displayed as 2D video, the cropping information of the 2D display information is set such that a left-view image having a 1920 × 1080 pixel resolution that is arranged in a location defined by top-left corner coordinates of (0, 0) is displayed as the 2D video.

Fig. 15B illustrates a Top-and-Bottom L-R containing image having a 2K × 1.5K resolution. That is, the L-R containing image illustrated in Fig. 15B has a resolution of 1920 × 1620 pixels. Further, a left-view image is arranged in the top half of the L-R containing image, whereas a right-view image is arranged in the bottom half. Therefore, a left-view image with a 1920 × 1080 pixel resolution corresponding to the top half of the L-R containing image is displayed as 2D video. Further, since the left-view image is displayed as 2D video, the cropping information of the 2D display information is set such that a left-view image having a 1920 × 1080 pixel resolution that is arranged in a location defined by top-left corner coordinates of (0, 0) is displayed as the 2D video. Thus, for Top-and-Bottom format 3D video having a 2K × 1.5K resolution, the 2D digital television 300 plays back Full-HD 2D video by using the 2D display information, and the 3D digital television 100 plays back 3D video by extracting areas of the L-R containing image for 3D display by using the 3D display information, and further by displaying the Full-HD (L) image and the up-converted version of the Half-HD (R) image. Here, the 3D digital television 100 may be configured to perform 3D display by firstly down-converting the Full-HD (L) image to Half-HD resolution, and by subsequently up-converting both of the Half-HD (L) image so obtained and the Half-HD (R) image.

As illustrated in Figs. 15A and 15B, even when the layout of the L-R containing image is one selected from 2K × 1K, and 2K × 1.5K, playback of the L-R containing image on the 2D digital television 300 and on the 3D digital television 100 is correctly performed by setting the 2D display information and the 3D display information. As mentioned in the above, by changing the configuration of each of the cropping information and the scaling information, playback is performed such that, for Side-by-Side format 3D video having a 3K × 1K resolution, the 2D digital television 300 plays back Full-HD 2D video by using the 2D display information, and the 3D digital television 100 plays back 3D video by extracting areas of the L-R containing image for 3D display by using the 3D display information, and further by displaying the Full-HD (L) image and the up-converted version of the Half-HD (R) image. This concludes the explanation of the layouts of the L-R containing image in the Side-by-Side format and the Top-and-Bottom format. Subsequently, detailed description is provided concerning encoding that is unique to the Top-and-Bottom format.

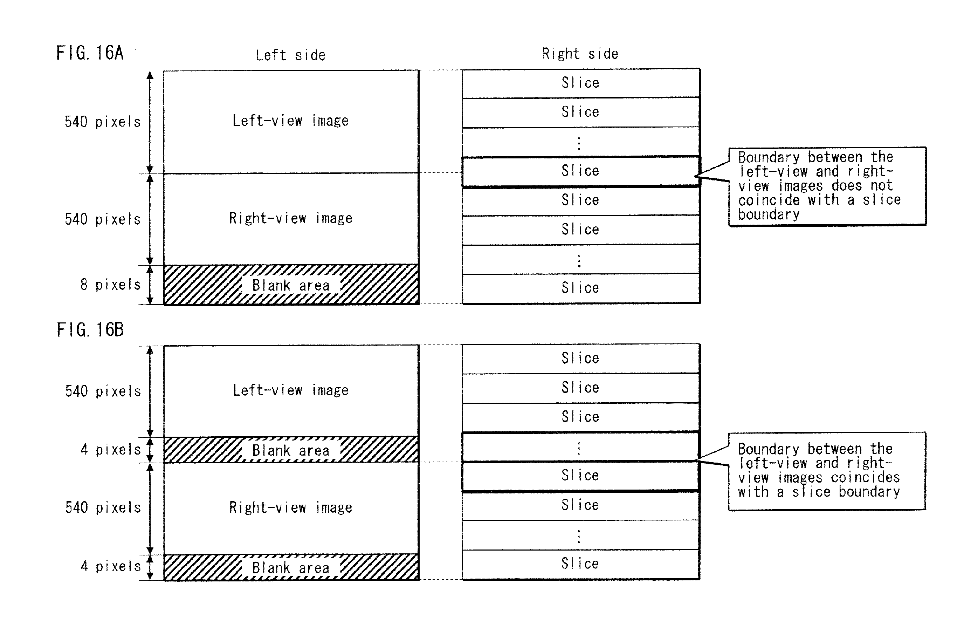

In a Top-and-Bottom L-R containing image, the left-view image and the right-view image, each of which is to be displayed at a 1920 × 1080 pixel resolution, are respectively arranged in the top half and in the bottom half. When arranging images in the top half and the bottom half of the L-R containing image in such a manner, the left-view image and the right-view image have the respective sizes of 1920 × 540 and 1920 × 540. As such, when attempting to contain units of 540 pixels in the vertical direction in a picture by applying the Top-and-Bottom format, a problem occurs concerning the division of the picture into slices. A slice, as referred to here, is composed of multiple macroblocks (each of which is a set of pixels, for instance 16 × 16 pixels). When dividing 1920 × 1080 pixels into slices, a slice not having 16 pixels in the vertical direction is generated, since 1080 is not a multiple of 16 (1080 = 16 × 67 + 8). Therefore, it is required to append an additional blank area of data having the size of 1920 × 8 pixels at the end of the original 1920 × 1080 pixels. Hence, the number of pixels in the vertical direction of the picture data is adjusted to 1088 pixels (= 16 × 68), which is a multiple of 16, thereby enabling the conversion of the Top-and-Bottom picture into 68 slices. Fig. 16A illustrates the relation between a Top-and-Bottom picture having the blank area appended thereto and the slices.

More specifically, the left side of Fig. 16A indicates the left-view image, the right-view image, and the blank area that compose the Top-and-Bottom picture. In specific, a blank area having a data size of 1920 × 8 pixels is arranged below the right-view image of the Top-and-Bottom picture. Thus, in this case, the 3D display information specifies 1920 × 540 pixels as the left-view image, and similarly specifies 1920 × 540 pixels as the right-view image. In addition, the 3D display information specifies 1920 × 8 pixels as the blank area. Here, in the case of the Top-and-Bottom 3D video illustrated in Fig. 16A, the cropping information of the 2D display information specifies the area of either the top half or the bottom half of the picture as the cropping area. When the top half is indicated by the 2D display information as the cropping area, then the top, left, and right cropping amounts are set to 0, and the bottom cropping amount is set to 540 pixels. Also, the scaling information is set to a value for up-converting the area of either the top or the bottom half (1920 × 540 pixels) to Full-HD (1920 × 1080 pixels). Under MPEG-4 AVC, the value of aspect_ratio_idc is an Extended_SAR set to sar_width = 1 and sar_height = 2.

On the other hand, the right side of Fig. 16A indicates multiple compressed slices which compose the video access unit. From Fig. 16A, it can be seen that pixel data of the left-view image, the right-view image, and the blank area composing the Top-and-Bottom picture are converted into slices in units of 16 pixels.

However, in such a conversion of pixel data into slices, a problem as described in the following arises. In the encoding of the picture, the 1920 × 1080 pixels composing the picture are converted into slices. Here, the left-view image and the right-view image each have a resolution of 1920 × 540 pixels. The number of pixels in the vertical direction, 540, is not a multiple of 16 (540 = 16 × 33 + 12), and thus a problem arises where 1920 × 12 pixels at the end of the left-view image and the 1920 × 4 pixels at the top of the right-view image are stored in the same slice. Since there is no correlation between the 1920 × 12 pixels at the end of the left-view image and the 1920 × 4 pixels at the top of the right-view image, when such pixels are stored in the same slice and conversion is performed with respect to such a slice, a reduction of compression efficiency is brought about.

In view of such a problem, configuration is made such that a blank area composed of 1920 × 8 pixels is divided into two equivalent blank areas each having a size of 1920 × 4 pixels, and further, each of the blank areas obtained through such a division is appended to each of the left-view image and the right-view image. Fig. 16B illustrates the left-view image and the right-view image each having a divided blank area appended thereto. By appending a divided blank area in such a manner, each of the left-view image and the right-view image results in having a 1920 × 544 pixel resolution. Since the number 544 indicating the number of pixels in the vertical direction is a multiple of 16 (544 = 16 × 34), the 1920 × 16 pixels at the end of the left-view image and the 1920 × 16 pixels at the end of the right-view image are stored to different slices. By storing such pixels belonging to different viewpoint images to different slices, no reduction is caused of compression efficiency.

In the case illustrated in Fig. 16B, a rectangular area having a size of 1920 × 540 pixels and arranged in a location defined by top-left corner coordinates of (0, 0) is specified as a cropping area (one example of the first display area) to be used as the left-view image in the 3D display information. Further, a rectangular area having a size of 1920 × 540 pixels and arranged in a location defined by top-left corner coordinates of (0, 544) is specified as a cropping area (one example of the second display area) to be used as the right-view image in the 3D display information. Here, note that the blank area between the left-view image and the right-view image is skipped in defining the top-comer coordinates determining the location of the cropping area corresponding to the right-view image.

As description has been made in the above, various layouts, such as the Side-by-Side format and the Top-and-Bottom format, may be applied to the L-R containing image, and also, the resolution of each of the left-view image and the right-view image may vary among various values. However it is to be noted here, that regardless of the combination of the layout and the resolution applied, the playback of 2D video on the 2D television and the playback of 3D video on the 3D television are performed in an appropriate manner by utilizing the cropping information and the scaling information.

This concludes the improvements which are to be made particularly when the Top-and-Bottom format is applied. Subsequently, explanation is provided of various types of description which may be applied to the cropping information for specifying the 2D display area.

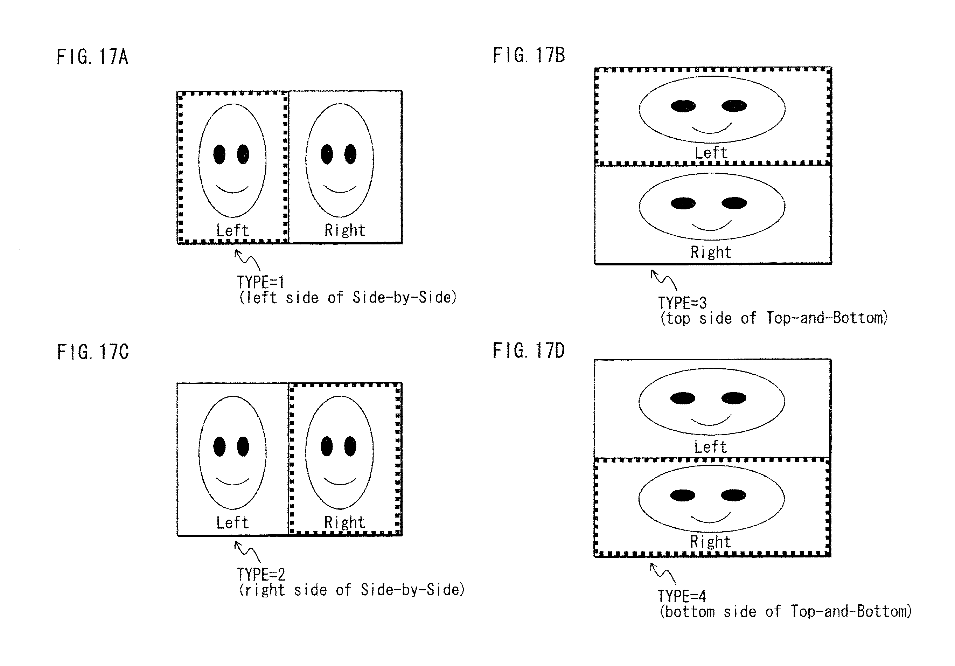

In the description referring to Figs. 12A and 12B, the cropping area is specified by using offsets between the boundaries of the cropping area and the boundaries of the encoded frame, the coordinates of the top-left corner of the cropping area, and the width of the cropping area in each of the horizontal direction and the vertical direction. However, when the arrangement of the left-view image and the right-view image in the L-R containing image is fixed to some extent, type identifiers may be alternatively used for the description of the cropping information. The type identifiers are used to determine a type of the 2D display area from among several predetermined types. Figs. 17A through 17D illustrate the 4 types (types 1 through 4) of the 2D display area supported by the type identifiers.

Fig. 17A illustrates a format of the L-R containing image and the cropping area specified therein, both such information being specified by the type 1 identifier. More specifically, the type identifier "TYPE=1" indicates that (i) the L-R containing image is in Side-by-Side format and (ii) the left-view image on the left side of the L-R containing image is to be specified as the cropping area (one example of the first display area) in the 2D display information. The box indicated by broken lines in Fig. 17A schematically indicates a specification made of an area by the cropping information of the 2D display information.

Fig. 17B illustrates a format of the L-R containing image and the cropping area specified therein, both such information being specified by the type 3 identifier. More specifically, the type identifier "TYPE=3" indicates that (i) the L-R containing image is in Top-and-Bottom format and (ii) the left-view image in the top side of the L-R containing image is to be specified as the cropping area (one example of the first display area) in the 2D display information. The box indicated by broken lines in Fig. 17B schematically indicates a specification made of an area by the cropping information of the 2D display information.

Fig. 17C illustrates a format of the L-R containing image and the cropping area specified therein, both such information being specified by the type 2 identifier. More specifically, the type identifier "TYPE=2" indicates that (i) the L-R containing image is in Side-by-Side format and (ii) the right-view image on the right side of the L-R containing image is to be specified as the cropping area (one example of the first display area) in the 2D display information. The box indicated by broken lines in Fig. 17C schematically indicates a specification made of an area by the cropping information of the 2D display information.

Fig. 17D illustrates a format of the L-R containing image and the cropping area specified therein, both such information being specified by the type 4 identifier. More specifically, the type identifier "TYPE=4" indicates that (i) the L-R containing image is in Top-and-Bottom format and (ii) the right-view image in the bottom side of the L-R containing image is to be specified as the cropping area (one example of the first display area) in the 2D display information. The box indicated by broken lines in Fig. 17D schematically indicates a specification made of an area by the cropping information of the 2D display information.

Among Figs. 17A through 17D referred to in the above, when the identifier is TYPE=2 as illustrated in Fig. 17C, the 2D display information indicates "right side of the Side-by-Side format". Thus, in the playback of the 2D video, the image on the right side of the Side-by-Side format is displayed. Further, when displaying 3D video in the same case, the playback of the 3D video is realized by combining the image on the "left side" with the image displayed in 2D playback.

Also, if the 2D display information always specifies either the left-side image or the right-side image, the specification of a cropping area required for playback of 3D video can be performed by using a 3D method information identifier indicating whether the video is 2D video, Side-by-Side video, or Top-and-Bottom video.

This concludes the explanation of specific examples of the 2D display information and the 3D display information. In the following, description is provided on the details of the encoding method. The above-described encoding method is intended for use with hardware resources of an authoring computer system used for the creation of digital broadcast programs in television stations. The authoring computer system includes a network drive, a server computer, and a client computer. Each of the computers included in the authoring computer system include: an MPU, a ROM, and a RAM. Further, the authoring computer system, in its entirety, is referred to as a "data creation device".

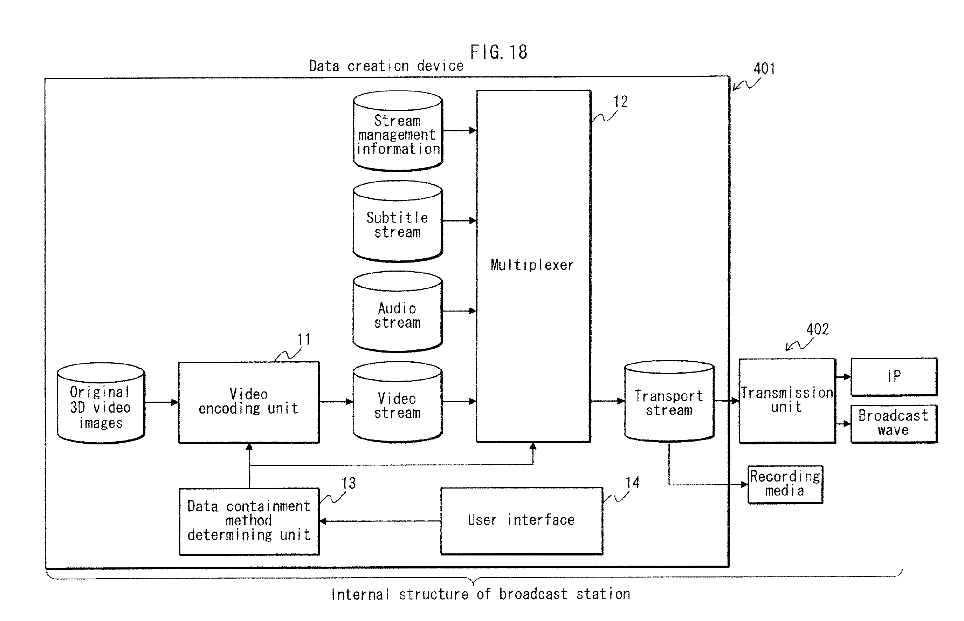

Fig. 18 illustrates an internal structure of a broadcast station which broadcasts transport streams. As illustrated in Fig. 18, the broadcast station includes: a data creation device 401 which is an authoring computer system; and a transmission unit 402. Further, as illustrated in Fig. 18, the data creation device 401 includes: a video encoding unit 11; a multiplexer 12; a data containment method determining unit 13; and a user interface 14. In addition, each of the cylindrical figures illustrated in Fig. 18 indicates a "hard disc storage". As such, the data creation device includes: a storage for containing original 3D video images; a storage for containing video streams; a storage for containing audio streams; a storage for containing subtitle streams; a storage for containing stream management information; and a storage for containing transport streams.

Such storages serve as network drives in an in-station network, and store original 3D video images, video streams, audio streams or the like as files in a predetermined directory structure thereof. The video encoding unit 11 and the multiplexer 12 serve as server computers in the in-station network, and make access to the above-described storages via the in-station network. Thus, the video encoding unit 11 and the multiplexer 12 are capable of reading various streams from the storages and also writing transport streams. In the following, detailed description is provided on each of the video encoding unit 11 and the multiplexer 12.

The video encoding unit 11 reads original 3D video images contained in the storage containing original 3D video images and performs compression-coding thereof. Further, the video encoding unit 11 writes a video stream obtained as a result of the compression-coding to the storage for containing video streams. The original 3D video images stored in the storage therefor includes images such as an uncompressed bitmap image of the left-view image and an uncompressed bitmap image of the right-view image. The video encoding unit 11 performs encoding of such images according to such compression-coding methods as MPEG-4 AVC and MPEG-2, and according to specifications made by the data containment method determining unit 13. When a specification is made by the data containment method determining unit 13 of "Side-by-Side format 3D video in Full-HD", the video encoding unit 11 down-converts each of a Full-HD left-view image and a Full-HD right-view image into Half-HD, and stores the down-converted left-view image and the down-converted right-view image to one frame in the Side-by-Side format. Finally, the video encoding unit 11 performs compression-coding of the frame so obtained. In addition to this, the video encoding unit 11 stores the 2D display information and the 3D display information respectively to the sequence header and the supplementary data in the compression-coded stream, and writes the compressed stream to the storage for containing video streams as a video stream.

In the compression-coding of a Full-HD frame, the video encoding unit 11 appends a sequence header and supplementary data to encoded slices which constitute an L-R containing image corresponding to the head of a video sequence. Hence, the L-R containing image is converted into a video access unit. Further, the video encoding unit 11 appends supplementary data to encoded slices which constitute L-R containing images other than that corresponding to the head of the video sequence, and thus converts the L-R containing images into video access units. In the sequence header of a video access unit at the head of the GOP, the video encoding unit 11 stores 2D display information including "cropping information" and "scaling information". Further, the video encoding unit 11 stores 3D display information including "cropping information" and "scaling information" to the supplementary data of the video stream.

Here, the video encoding unit 11 also stores "3D method information" to the supplementary data so as to allow the display apparatus to acknowledge the 3D method that the stream is compatible with.

The multiplexer 12 multiplexes the video stream so generated with other streams such as audio streams and subtitle streams, and stores 3D display information to the stream management information of the video stream. After the storing of the 3D display information to the stream management information, the multiplexer 12 converts the video stream composed of picture data of L-R containing images and stream management information pertaining to the video stream into a transport packet sequence, and performs multiplexing thereof with an audio stream and a subtitle stream. Finally, the multiplexer 12 writes the transport stream obtained as a result of the multiplexing to the storage for containing transport streams. The transport stream written to the storage is then supplied to the transmission unit 402, and broadcasted.

This concludes the explanation of the video encoding unit 11 and the multiplexer 12. Next, description is provided on the data containment method determining unit 13 and the user interface 14. The data containment method determining unit 13 and the user interface unit 14 are client computers. Files such as original 3D video images, video streams, audio streams, subtitle streams, and transport streams, which are stored to the respective storages in the in-station network, are visually displayed on a GUI by using icons, thumbnails and the like. The user drags, drops, or clicks the icons and thumbnails displayed on the GUI of the user interface 14 to execute user operations such as copying, deleting and editing with respect to original 3D video images, video streams, audio streams, subtitle streams, transport streams, and the like.
In the following, description is provided on the data containment method determining unit 13. The data containment method determining unit 13 presents a list of containment methods of left-view and right-view images in L-R containing images to the user. Upon receiving a user operation, the data containment method determining unit 13 specifies one of such containment methods on the list. For instance, when creating a transport stream having a video format as indicated by the example illustrated in Fig. 8, the data containment method determining unit 13 makes a specification of "Side-by-Side 3D video in Full-HD". The information of this specification is notified to the video encoding unit 11 and the multiplexer 12. Since the original 3D video images contained in the storage therefor include images of various resolutions, the combinations of an original image to be used as the left-view image and an original image to be used as the right-view image constitute various layouts. In specific, the layout of the left-view image and the right-view image in the L-R containing image is either one of the four Side-by-Side layouts illustrated in Fig. 14 or one of the two Top-and-Bottom layouts illustrated in Fig. 15. However, the layout of the L-R containing image is uniquely specified according to (i) the containment method applied to the left-view image and the right-view image, and (ii) the resolutions of the left-view image and the right-view image. Thus the data containment method determining unit 13 is able to automatically specify the cropping information and set the scaling information in the 2D display information according to the layout so specified.

This concludes the explanation of the data creation device. Subsequently, description is provided on the processing procedures of the encoding method, presuming that the hardware resources available are that of the data creation device as described in the above.

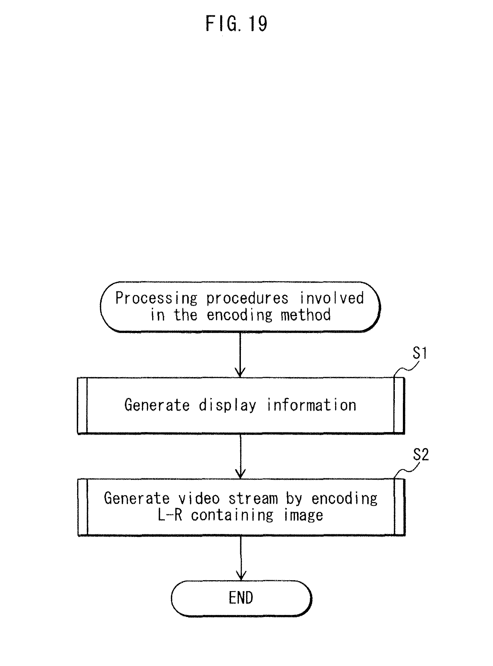

A program including a computer code description of the processing procedures illustrated in Figs 19 through 22 is installed to the data creation device in advance. Software-based control is realized by an MPU of a client computer in the data creation device and an MPU of a server computer in the data creation device executing the processing procedures of the program. In the following, description is provided on the details of the encoding method. Fig. 19 is a flowchart illustrating the processing procedures involved in the encoding method pertaining to the present invention.

First of all, the video encoding unit 11 generates display information as described in the above (Step S1). In specific, first display information and second display information are generated for pictures (referred to as an L-R containing image) each having a display area split into two sub-areas, one sub-area storing a left-view image and the other storing a right-view image. The first display information includes cropping information specifying a first display area in the display area as an area to be cropped, and the second display information includes cropping information specifying a second display area in the display area as an area to be cropped. Here, various methods may be applied in specifying the first display sub-area and the second display sub-area as description is made in other parts of the present specification.

Subsequently, after encoding the L-R containing image, the video encoding unit 11 stores the display information so generated to a predetermined location of the encoded image data, and thereby generates a video stream having a format as described above (Step S2). The above-mentioned encoding method provides a 3D video stream with high compatibility, which can be displayed properly as 2D video on a 2D display apparatus and properly as 3D video on a 3D display apparatus.

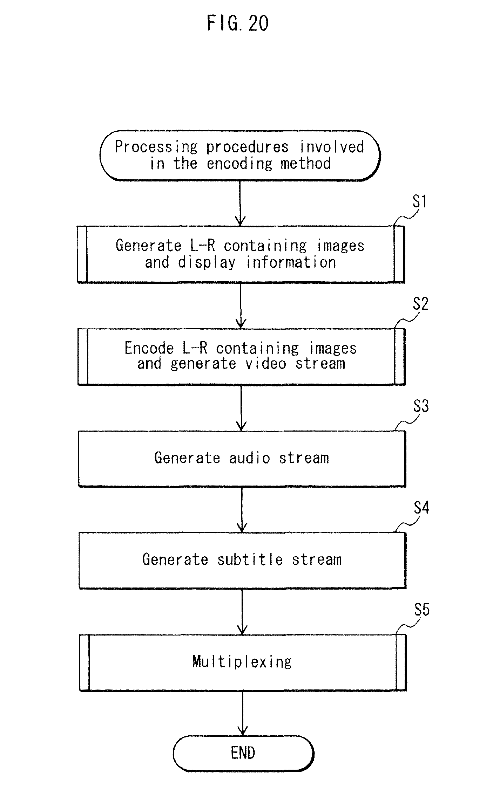

This concludes the description of the processing procedures involved in the encoding method pertaining to the present invention. Note that, since the encoding method pertaining to the present invention is to be implemented as a data processing device for creating television broadcast programs, in the actual implementation thereof, basic processing procedures for creating a digital broadcast program are required. In the following, description is provided on the details of modifications made to the encoding method for implementing the encoding method as a data processing device. Here, the above-mentioned basic processing procedures for creating a digital broadcast program include a process of generating elementary streams other than the video stream and a process of multiplexing multiple types of elementary streams so generated with the video stream. Such elementary streams other than the video stream include an audio stream and a subtitle stream, and in the multiplexing of elementary streams, multiplexing is performed with respect to the video stream, the audio stream, and the subtitle stream. In the following, explanation is provided with reference to the flowchart in Fig. 20. Fig. 20 is a flowchart illustrating the processing procedures involved in the encoding method when presuming that the encoding method is implemented for the creating of a digital broadcast program. More specifically, in the flowchart illustrated in Fig. 20, basic processing procedures for creating a digital broadcast program (Steps S3, S4, and S5) are added to the processing procedures commonly illustrated in the flawchart in Fig. 19 (Steps S1 and S2).

First of all, when original 3D video images are input, the video encoding unit 11 generates L-R containing images and the display information from the original 3D video images according to the data containment method having been determined by the data containment method determining unit 13 (Step S1).

Subsequently, and after encoding the L-R containing images so generated, the video encoding unit 11 stores the display information to a predetermined location of the encoded image data, and thereby generates a video stream having the format as described above (Step S2).

Following this, an audio stream is generated (Step S3), and a subtitle stream is generated (Step S4). Subsequently, the multiplexer multiplexes the video stream, the audio stream, and the subtitle stream into a single transport stream (Step S5). Note that, when neither an audio stream nor a subtitle stream exists, Steps S3 through S5 may be skipped.

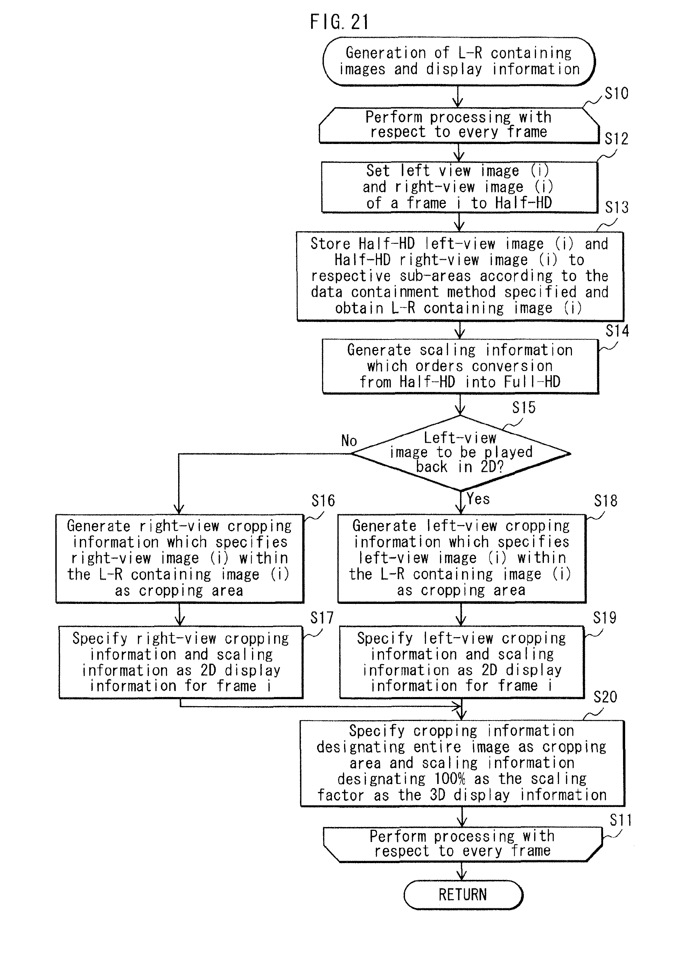

The processing procedures in the flowchart illustrated in Fig. 20 correspond to main routines of the processing, and sub-routines as illustrated in the flowcharts in Figs. 21 through 23 exist. In the following, explanation is provided concerning the flowcharts in Figs. 21 through 23.

Fig. 21 is a flowchart illustrating the generation of the L-R containing images and the display information pertaining to embodiment 1. The variable (i) in the flowchart is a control variable for specifying a specific L-R containing image to be processed. Hence, in the following flowcharts and the explanation provided with reference thereto, an L-R containing image which is the processing target in round i of the processing loop is denoted as an L-R containing image (*i*). In addition, a left-view image and a right-view image contained in the L-R containing image (*i*) are respectively denoted as a left-view image (*i*) and a right-view image (*i*), and further, a video access unit corresponding to the L-R containing image (*i*) is denoted as a video access unit (*i*), and a frame corresponding to the video access unit (*i*) is denoted as a frame (*i*).

Note that the flowchart in Fig. 21 illustrates a loop of processing where the processing performed in Steps S12 through S20 are repeatedly performed with respect to every frame (Steps S10 and S11).
Firstly, a left view image (*i*) and a right-view image (*i*) of a frame i obtained from original 3D video images by the video encoding unit 11 are each set to Half-HD (Step S12). Subsequently, the video encoding unit 11 obtains an L-R containing image (*i*) by storing the Half-HD left-view image (*i*) and the Half-HD right-view image (*i*) to respective sub-areas according to the data containment method specified by the data containment method determining unit 13 (Step S13). Note that here, the sub-areas are obtained by dividing a display area corresponding to one screen. Examples of such data containment methods include the Side-by-Side format and the Top-and-Bottom format, which have been already described in the above.

Following the generation of the L-R containing image (*i*), the video encoding unit 11 generates scaling information which causes the display apparatus to convert the images in the L-R containing image (*i*) from Half-HD to Full-HD (Step 14).

Next, the video encoding unit 11 judges whether the video to be used for 2D playback is the left-view image (Step S15), and when the result of the judgment is "YES", generates left-view cropping information which specifies the left-view image (*i*) within the L-R containing image (*i*) as the cropping area (Step S18). Further, the video encoding unit 11 specifies the left-view cropping information so generated and the scaling information generated in Step S14 as the 2D display information for frame i (Step S19).

When the result of the judgment in Step S15 is "NO", the video encoding unit 11 generates right-view cropping information which specifies the right-view image (i) within the L-R containing image (i) as the cropping area (Step S16). Further, the video encoding unit 11 specifies the right-view cropping information so generated and the scaling information generated in Step S14 as the 2D display information for frame *i* (Step S17)

Following the generation of the 2D display information, the video encoding unit 11 generates cropping information specifying the entire image as the cropping area and scaling information specifying 100% as the scaling factor, and the video encoding unit 11 specifies the cropping information and the scaling information so generated as the 3D display information (Step S20).

The above-described processing is repeated with respect to every frame. That is, L-R containing images are generated for every frame, and further, 2D display information and 3D display information is generated for each frame (Steps S10 and S11).

Note that, in the flowchart illustrated in Fig. S21, the generation of scaling information (Step S14) may be skipped. In such a case, the display apparatus performs scaling according to the size of the display device (display screen). That is, cropping information is necessary in composing 2D display information and 3D display information, while scaling information is not always necessary and is an arbitrary element that can be omitted.

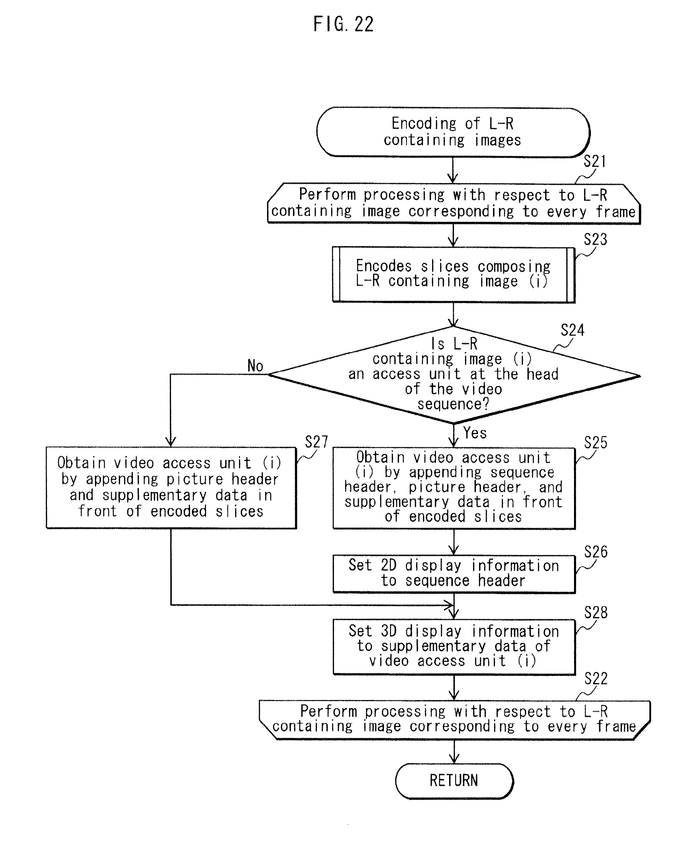

Subsequently, the video encoding unit 11 encodes the L-R containing images by using the L-R containing images and the display information generated as a result of the above-described processing. Fig. 22 is a flowchart illustrating the processing involved in the encoding of the L-R containing images. Note that the flowchart in Fig. 22 illustrates a loop of processing where the processing performed in Steps S23 through S28 are repeatedly performed with respect to an L-R containing image corresponding to each frame (Steps S21 and S22).

Firstly, the video encoding unit 11 encodes the slices composing the L-R containing image (*i*) (Step S23). Subsequently, a judgment is performed of whether the L-R containing image (i) currently undergoing encoding is a video access unit at the head of the video sequence (Step S24). When the result of the judgment is "YES", the processing proceeds to Step S25, where a video access unit (i) is obtained by appending a sequence header, a picture header, and supplementary data in front of the encoded slices. Following this, the 2D display information having been generated is set to the sequence header of the video access unit (*i*) so obtained (Step S26).

When the result of the judgment is "NO", the processing proceeds to Step S27, where a video access unit (*i*) is obtained by appending a picture header and supplementary data in front of the encoded slices.

Following this, the processing proceeds to Step S28, where the 3D display information having been generated is set to the supplementary data of the video access unit (*i*). This concludes the encoding of the L-R containing image (*i*) of the frame *i*. The above encoding is performed with respect to each of the frames, and hence, a video stream which can be used for played back is generated.

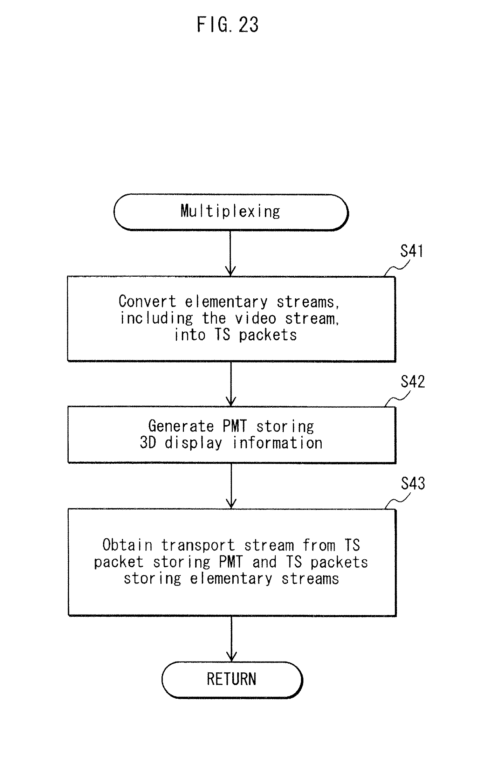

Fig. 23 is a flowchart illustrating the multiplexing pertaining to embodiment 1. As is illustrated in Fig. 23, the multiplexer 12 converts each of the elementary streams into TS packets (Step S41). Here, the video stream is included among the elementary streams which are subject to processing. Further, the multiplexer 12 generates a TS packet including a PMT storing 3D display information therein (Step S42). The generation of the TS packet including the PMT is performed by storing the 3D display information obtained from the video encoding unit 11 to stream management information (a PMT packet, for example). Subsequently, the multiplexer 12 obtains a transport stream from the TS packet storing the PMT and the TS packets storing the elementary stream (Step S43). This concludes the description on the encoding method pertaining to embodiment 1.

As description has been provided in the above, the 2D display information pertaining to the present embodiment differs from conventional display information only in that cropping information which specifies one of a left-view image and a right-view image as a cropping area is set therein. Other aspects of the 2D display information are similar to those of conventional display information, which provides instructions to a playback device concerning cropping and scaling conversion. Hence, when a conventional display apparatus is supplied with a 3D video stream including the 2D display information, the display apparatus performs cropping and/or scaling according to the cropping information and/or the scaling information included in the 2D display information. This realizes the correct displaying of content with use of the hardware of a conventional 2D display apparatus, and thus, is highly practical and useful.

In addition, the 3D display information pertaining to the present embodiment similarly includes cropping information and/or scaling information. Thus, a display apparatus being provided with the 3D display information is able to easily identify a correct right-view image area and a left-view image area according to the 3D display information, and perform stereoscopic viewing by correctly cutting out each of the right-view image and the left-view image contained in the same picture. Thus, even in cases where the right-view image and the left-view image are contained in the picture side-by-side in the lateral direction or in a top-and-bottom manner in the vertical direction, and where a proportion of the picture occupied by each of the right-view image and the left-view image differs, the display apparatus is able to correctly cut out the right-view picture and the left-view picture contained in the picture, regardless of the method of transmission by referring to the 3D display information extracted from a video stream. This realizes stereoscopic playback with an increased degree of stability. Additionally, the display information pertaining to the present embodiment allows producers of 3D video to store and/or transmit right-view images and left-view images with a higher degree of flexibility compared to conventional technology. Furthermore, the proportion of each of a right-view image and a left-view image in picture data can be determined more flexibly as well.

### [Embodiment 2]

In the present embodiment, description is provided concerning a display apparatus for displaying the transport stream that has been generated as a result of the above-described encoding.

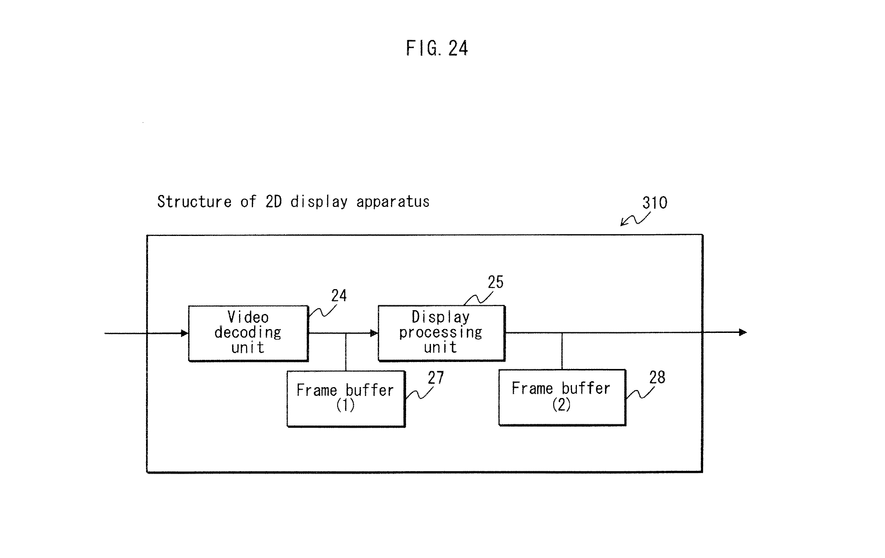

Fig. 24 illustrates the internal structure of a 2D display apparatus 310 pertaining to embodiment 2.

The 2D display apparatus performs displaying of a video stream input thereto, and includes: a video decoding unit 24 (a decoder); a display processing unit 25; a frame buffer (1) 27 (a first frame buffer unit); and a frame buffer (2) 28 (a second frame buffer unit).

The video decoding unit 24, upon receiving a video stream, decodes the video stream received. A frame of a 3D video is an L-R containing image and is in the Side-by-Side format. The video decoding unit 24 writes and stores the decoded frame to the frame buffer (1) 27.

The display processing unit 25 extracts the 2D display information from the decoded picture data stored in the frame buffer (1) 27, and determines a display method according to the cropping information and the scaling information included in the 2D display information. That is, the display processing unit 25 performs display processing with respect to the uncompressed picture data stored in the frame buffer (1) 27 according to the 2D display information, and writes a result of the processing to the frame buffer (2) 28.

More specifically, the display processing unit 25 extracts the 2D display information from a sequence header or the like of the decoded video stream stored in the frame buffer (1) 27. Further, the display processing unit 25 executes cropping by reading, as a cropping area, a portion of the picture stored in the frame buffer (1) 27 according to the cropping information of the 2D display information. In addition, the display processing unit 25 performs scaling with respect to the cropping area read from the frame buffer (1) 27 according to the scaling information of the 2D display information, and writes a result of the scaling to the frame buffer (2) 28.

In the following, explanation is provided of the correspondence between the components of the above-described 2D display apparatus and the components of the decoder model of the MPEG-4 AVC video decoder. Description has been provided on the decoder model with reference to Fig. 11.

The image decoding unit 24 in Fig. 24 corresponds to the combination of the transport buffer (TB) 1, the multiplex buffer (MB) 2, the elementary buffer (EB) 3, and the decoder core 4 illustrated in Fig. 11. The display processing unit 25 in Fig. 24 corresponds to the combination of the display processing unit 8 and the scaler 6 in Fig. 11. The frame buffer (2) 27 in Fig. 24 corresponds to the decoded picture buffer (DPB) 5 in Fig. 11. The frame buffer (2) 27 in Fig. 24 corresponds to the video plane 7 in Fig. 11.

Note that the decoder model of the MPEG-4 AVC video decoder which has been described with reference to Fig. 11 is merely one example, and embodiments of the 2D display apparatus pertaining to the present invention are not limited to the structure illustrated in Fig. 11.

This concludes the description on an actual embodiment of the 2D display apparatus pertaining to the present invention. According to the 2D display apparatus which is described in the above, when a 3D video stream including 2D display information is supplied thereto, the display apparatus correctly displays a 2D image without displaying an image where a right-view image and a left-view image appear side-by-side in the same image.

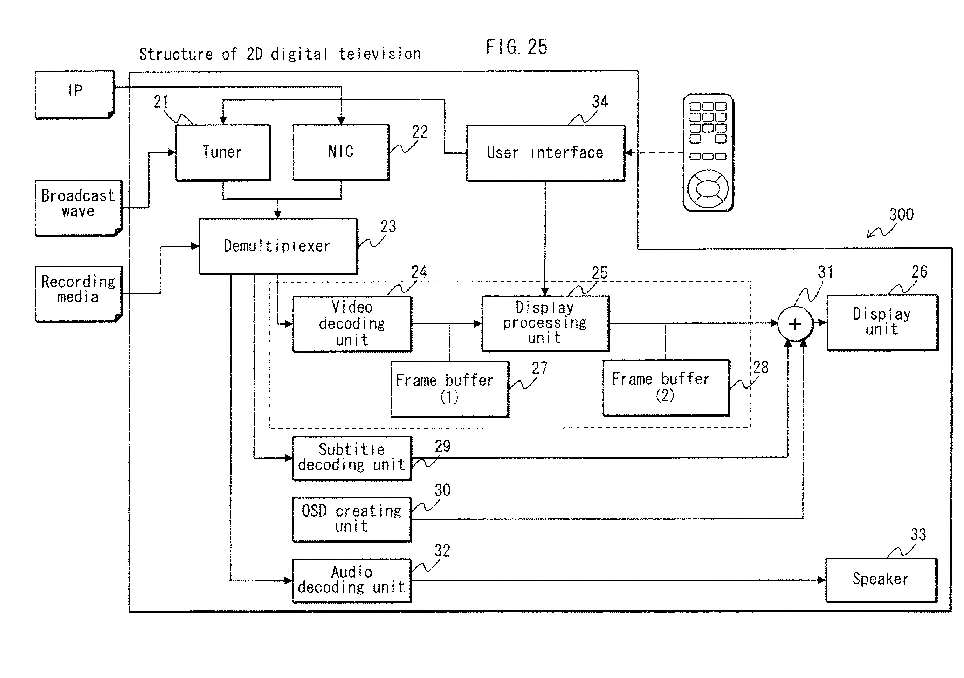

Subsequently, description is provided on an internal structure of a 2D digital television which is based on the above-described 2D display apparatus. Specifically, the 2D digital television pertaining to the present embodiment is a 2D video display-compatible plasma television, LCD television or the like, and receives transport streams, which are used for the transmission of video streams. The internal structure of the 2D digital television includes, in addition to the components of the 2D display apparatus, components which are required for performing basic functions provided to 2D televisions. Fig. 25 illustrates the internal structure of the 2D digital television 300. In Fig. 25, the portion surrounded by broken lines indicates the components of the 2D display apparatus. On the other hand, the components required for carrying out basic functions provided to 2D televisions include: (i) components for supplying video streams to the 2D display apparatus (a tuner 21, an NIC 22, and a demultiplexer 23); (ii) components for processing elementary streams other than video streams (a subtitle decoding unit 29, an OSD creating unit 30, an adder 31, and an audio decoding unit 32); and (iii) components for realizing interaction with the user (a display unit 26, a speaker 33, and a user interface 34). Since such components are provided for enabling the 2D digital television 300 to carry out basic functions provided to 2D televisions, the components of the 2D display apparatus are provided with the capability of performing input/output with respect to such components. In the following, explanation is provided of the components of the 2D digital television 300 by referring to the reference signs provided in Fig. 25.

The 2D digital television 300 includes: the tuner 21; the NIC 22; the demultiplexer 23; the video decoding unit 24; the display processing unit 25; the display unit 26; the frame buffer (1) 27; the frame buffer (2) 28; the subtitle decoding unit 29; the OSD creating unit 30; the adder 31; the audio decoding unit 32; the speaker 33; and the user interface unit 34, as illustrated in Fig. 25. Among such components of the 2D digital television 300, the video decoding unit 24, the display processing unit 25, the frame buffer (1) 27, and the frame buffer (2) 28 are commonly included in the above-described 2D display apparatus 310, and therefore are provided with the same reference signs.

The tuner 21 receives transport streams in digital broadcasts and demodulates the signals received therefrom.

The network interface card (NIC) 22 is connected to an IP network and receives transport streams from external sources.

The demultiplexer 23 demultiplexes the received transport streams into video streams and other streams, such as audio streams and graphics streams, and then outputs the video stream to the video decoding unit 24. Furthermore, in addition to the reading of transport streams from the tuner 21 and the NIC 22, the demultiplexer 23 can also read transport streams from recording media.

The video decoding unit 24, upon receiving a video stream from the demultiplexer 23, performs decoding of the video stream received. The video decoding unit 24 includes therein the TB 1, the MB 2, the EB 3, the decoder core 4, and the scaler 6 among the components of the decoder model illustrated in Fig. 11A. A frame of a 3D video is an L-R containing image and is in the Side-by-Side format. The video decoding unit 24 writes and stores the decoded frame to the frame buffer (1) 27.

The display processing unit 25 performs a processing similar to the processing performed by the above-described display processing unit 25 of the 2D display apparatus.

The display unit 26 sequentially displays each of the frames written to the frame buffer (2) 28 at a designated frame rate.

The frame buffer (1) 27 is a component corresponding to the decoded picture buffer 5, and includes an area for storing a frame decoded by the video decoding unit 24.

The frame buffer (2) 28 is a component corresponding to the picture plane, and includes an area for storing a frame decoded by the display processing unit 25.

The subtitle decoding unit 29 decodes a subtitle stream obtained through the demultiplexing performed by the demultiplexer 23.

The OSD creating unit 30 creates an on-screen display, which constitutes an Electronic Program Guide (EPG), a setup menu and the like, according to user operations made with respect to the user interface.

The adder 31 combines subtitles obtained through the decoding performed by the subtitle decoding unit and the on-screen display created by the OSD creating unit with a decoded frame. The combining performed by the adder 31 is performed according to a predetermined hierarchical structure. The hierarchical structure as referred to here is a structure where a video plane exists in a lowermost layer, subtitles exist in a layer above the layer corresponding to the video plane, and the OSD exists in a layer above the layer corresponding to the subtitles. The adder 31 combines the layers according to this hierarchical structure, obtains a combined video where subtitles and OSD are combined with each of the pictures, and supplies the combined video for output.

The audio decoding unit 32 decodes audio streams obtained as a result of the demultiplexing.

The speaker 33 outputs uncompressed audio obtained as a result of the decoding performed by the audio decoding unit 32.

The user interface 34 receives user operations such as the calling of an Electric Program Guide (EPG) and the setup menu, and the selection of channels from the user, and controls the demultiplexer 23 and the display processing unit 25 according to such user operations made. More specifically, the user interface 34 causes the demultiplexer 23 and the display processing unit 25 to respectively perform the selection of channels and display processing according to user operations.

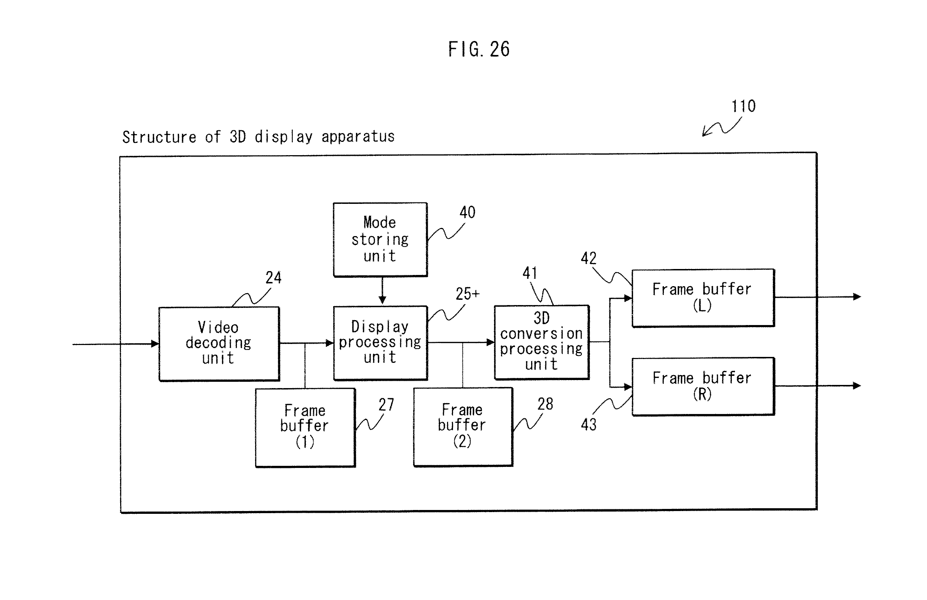

This concludes the explanation of the 2D digital television 300. Next, description is provided on the details of the 3D display apparatus 110. The 3D display apparatus 10 includes components for realizing stereoscopic viewing, at the same time as maintaining compatibility with the 2D display apparatus 310. Fig. 26 illustrates an internal structure of the 3D display apparatus 110. As illustrated in Fig. 26, the 3D display apparatus 110 includes both (i) components of the 2D display apparatus (the video decoding unit 24; the display processing unit 25; the frame buffer (1) 27; and the frame buffer (2) 28), and (ii) components that are uniquely provided to the 3D display apparatus 110 (a mode storing unit 40; a 3D conversion processing unit 41; a frame buffer (L) 42; and a frame buffer (R) 43). Here, the components provided with reference signs with a first digit of "4" are the components newly introduced in the 3D display apparatus 110. With regards to components having been specially modified for use in the 3D mode (the display processing apparatus 25+, in Fig. 26), a "+" symbol is provided next to the two digit number indicating the component, so as to clearly distinguish such components from those of the 2D display apparatus. In the following, description is provided with respect to the components which are unique to the 3D display apparatus 110 (the mode storing unit 40, and the 3D conversion processing unit 41) and the component which has been specially modified for use in the 3D display apparatus 110 (the display processing unit 25+), in the order of the mode storing unit 40, the display processing unit 25+, and the 3D conversion processing unit 41.

The mode storing unit 40 stores a flag indicating whether the current display mode is the 2D mode or the 3D mode.

The display processing unit 25+ realizes displaying in both the 2D mode and the 3D mode, but when the current display mode stored in the mode storing unit is the 3D mode, the display processing unit 25+ preferentially refers to the 3D display information, rather than the 2D display information, performs display processing with respect to the uncompressed picture data stored in the frame buffer (1) 27 according to the 3D display information, and writes a result of the processing to the frame buffer (2) 28.

The 3D conversion processing unit 41 performs 3D conversion processing with respect to the uncompressed picture data written to the frame buffer (2) 28. Here, the 3D conversion processing is processing performed for generating left-view images and right-view images used for 3D display, and includes the cutting out of each of a left-view image and a right-view image contained together in one picture, and the enlargement of each of the left-view image and the right-view image so cut out.

The left-view image and the right-view image generated as a result of the 3D conversion processing are respectively written to the frame buffer (L) 42 and the frame buffer (R) 43.

Since the present embodiment presumes that the multi-view containing image is an L-R containing image, the 3D display apparatus illustrated in Fig. 26 includes the frame buffer 42 for left-view images and the frame buffer 43 for right-view images. However, it is obvious that, when a multi-view image includes more than two viewpoint images, the display apparatus is to include more than two frame buffers, each of which corresponds to one of the more than two viewpoint images.

This concludes the description on the 3D display apparatus pertaining to the present invention. The above-described 3D display apparatus is able to easily identify a correct right-view image area and a left-view image area according to the 3D display information, and perform stereoscopic viewing by correctly cutting out each of the right-view image and the left-view image contained in the same picture.

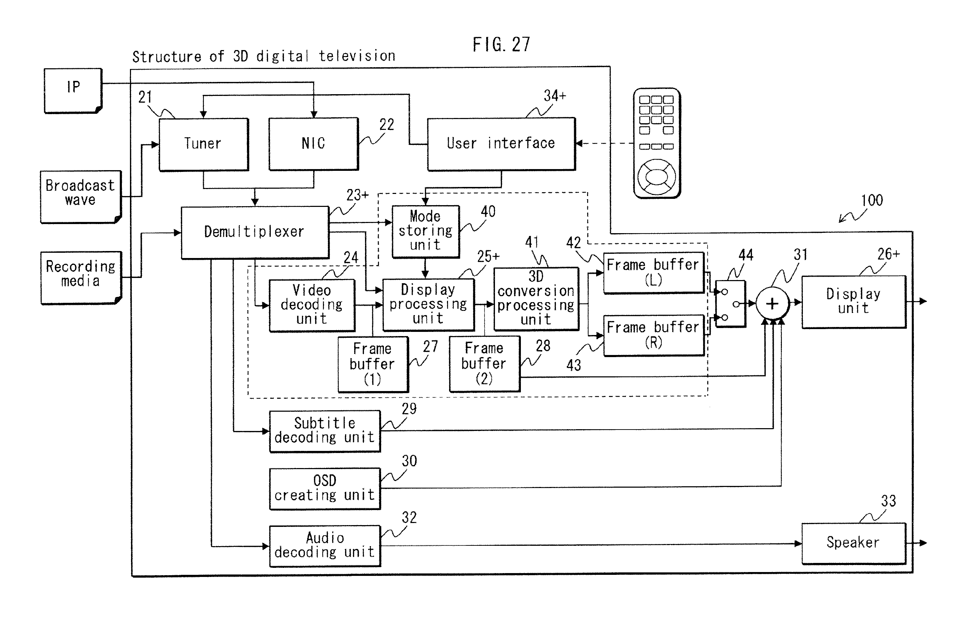

Subsequently, description is provided on the details of the 3D digital television 100. The 3D digital television 100 pertaining to the present embodiment includes, in addition to the components of the 3D display apparatus 110, components which are required for carrying out basic functions provided to 3D televisions. Fig. 27 illustrates an internal structure of the 3D digital television 100. In Fig. 27, the portion surrounded by broken lines indicates the components of the 3D display apparatus 110. On the other hand, the components required for carrying out basic functions provided to 3D televisions include: (i) components commonly included in the 2D digital television illustrated in Fig. 25 (the tuner 21, the NIC 22, the demultiplexer 23, the display unit 26, the subtitle decoding unit 29, the OSD creating unit 30, the adder 31, the audio decoding unit 32, the speaker 33, and the user interface unit 34); (ii) a component unique to the 3D digital television 100 (a switch 44). With regards to components having been specially modified for use in the 3D mode (the demultiplexer 23+, the display processing unit 25+, the display unit 26+, and the user interface 34+), a "+" symbol is provided next to the two digit number indicating the component, so as to clearly distinguish such components from those of the 2D digital television 300. Among such components of the 3D digital television 100, the video decoding unit 24, the frame buffer (1) 27, the frame buffer (2) 28, the display processing unit 25+, the mode storing unit 40, the 3D conversion processing unit 41, the frame buffer (L) 42, and the frame buffer (R) 43 are commonly included in the above-described 3D display apparatus 110, and therefore are provided with the same reference signs.

In the following, description is provided on the component (the switch 44) which is uniquely provided to the 3D digital television 100.

The switch 44 selects either a frame image written to the frame buffer (L) 42 or a frame image written to the frame buffer (L) 42, and transfers the selected frame image to the display unit 26. The selection alternates between the frame buffer (L) 42 and the frame buffer (R) 43 according to the frame to be displayed.

This concludes the description on the component which is uniquely provided to the 3D digital television 100. In the following, description is provided with respect to the components which have been specially modified for use in the 3D digital television 100 (the demultiplexer 23+, the display processing unit 25+, the display unit 26+, and the user interface 34+).

The demultiplexer 23+ demultiplexes a transport stream received into a video stream and other streams, such as an audio stream and a graphics stream, and then outputs the video stream to the video decoding unit 34. Additionally, the demultiplexer 23+ is provided with the function of extracting system packets such as PSIs from a received transport stream and obtaining 3D display information corresponding to the video stream to be displayed from the stream management information included in, for instance, the PMT packet of the received transport stream. When the demultiplexer 23+ extracts the 3D display information from the stream management information, the display processing unit 25+ is notified of the 3D display information. Furthermore, in addition to the reading of transport streams from the tuner 21 and the NIC 22, the demultiplexer 23+ can also read transport streams from recording media.

When the current display mode stored in the mode storing unit 41 is the 3D mode, the display processing unit 25+ preferentially refers to the 3D display information, rather than the 2D display information, and determines a display method according to the cropping information and the scaling information of the 3D display information. More specifically, the display processing unit 25+ extracts 3D display information from the supplementary data of the video stream or the like, and executes cropping by reading, as a cropping area, a portion of the picture data stored in the frame buffer (1) 27 according to the cropping information of the 3D display information so extracted. In addition, the display processing unit 25+ performs scaling with respect to the cropping area read from the frame buffer (1) 27 according to the scaling information of the 3D display information, and writes a result of the scaling to the frame buffer (2) 28.

The display unit 26+ displays the frames transferred thereto from the switch 44. The display 26+ communicates with 3D glasses and controls the liquid crystal shutters thereof such that the left side is open when left-view images are displayed and the right side is open when right-view images are displayed.

The user interface unit 34+ receives a selection of the 2D mode or the 3D mode from the user. Further, the user interface unit 34+ is able to rewrite the flag stored in the mode storing unit 40 according to the display mode selected by the user. The setting of and the changing between the 2D and 3D modes are performed via a setup menu provided to the playback device in advance. The setup menu pertaining to the present embodiment includes, in addition to common setup items such as audio language setting and subtitle language setting, a setup item for selecting the 2D mode or the 3D mode. Thus, when the user performs setting of this item via a remote controller, the flag stored in the mode storing unit 40 is rewritten.

This concludes the explanation of the internal structure of the 3D digital television 100. Note that in the above, description is provided on the components for carrying out the basic functions of 3D televisions merely for the sake of enabling implementation of the invention pertaining to the 3D display apparatus. Accordingly, when the invention pertaining to the display apparatus is to be implemented as devices other than 3D televisions, such components are to be replaced by components which are required to carry out the basic functions of the device in which the display apparatus is to be implemented.

Further, the internal structure described above of the 3D digital television 100 corresponds to the hardware resources of a computer. As such, the encoding method for solving the above-mentioned problems is to be mounted on the 3D digital television 100 as a computer code providing instructions concerning processing procedures to the hardware resources of a computer. In Fig. 27, the portion surrounded by broken lines corresponds to the "display apparatus" pertaining to the present invention, which is illustrated in Fig. 26.

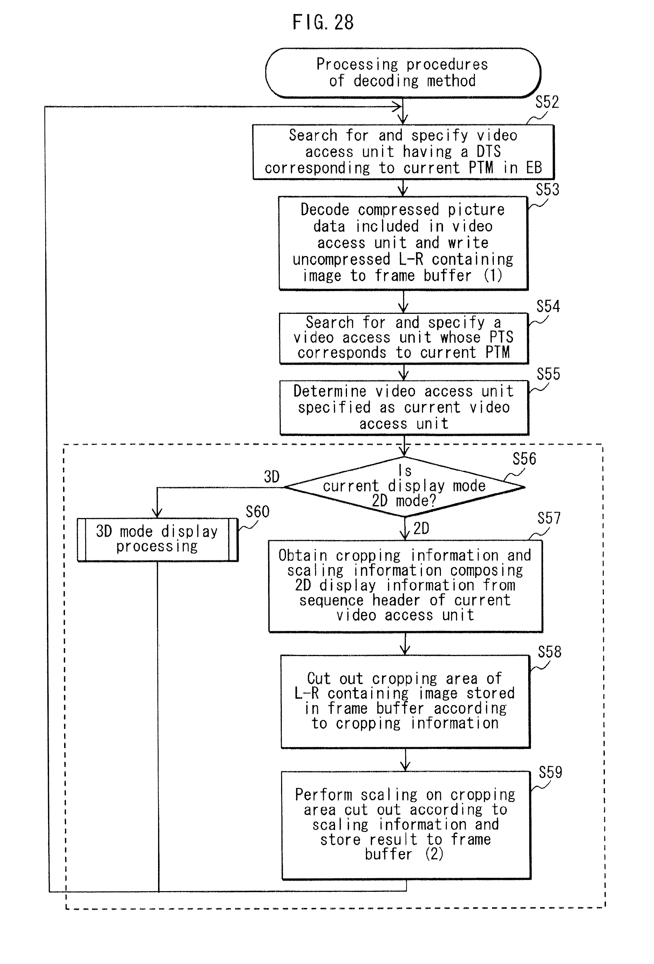

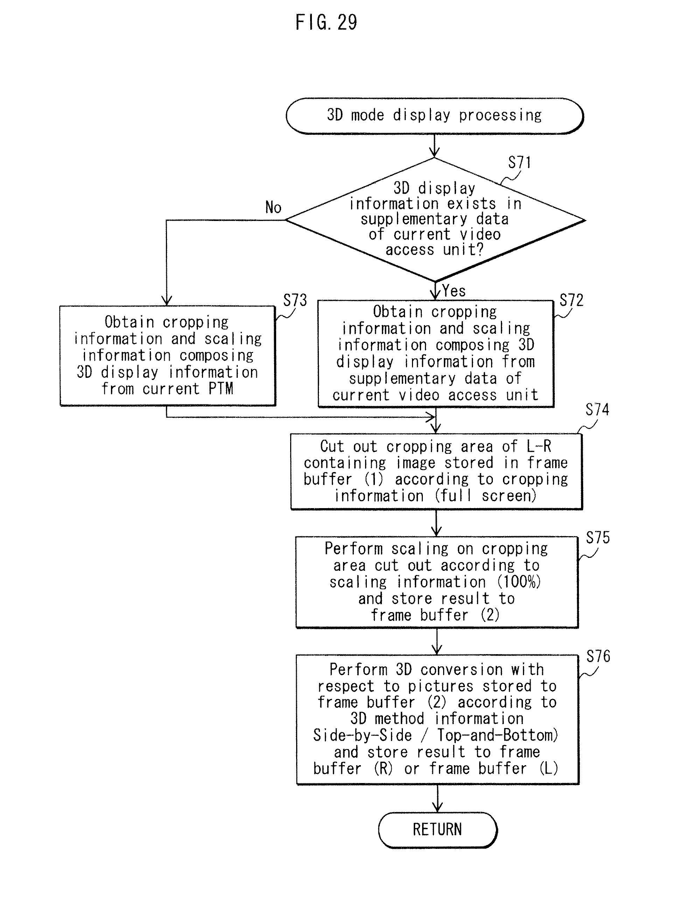

In the following, description is provided on the details of the decoding method. Fig. 28 is a flowchart illustrating the processing procedures of the decoding method pertaining to embodiment 2. The processing procedures included in the flowchart illustrated in Fig. 28 correspond to processing in the topmost level, or in other words main routines, and Fig. 29 is a flowchart illustrating processing in a lower level, or sub-routines. In the following, description is made of the processing procedures of the main routine.

As illustrated in Fig. 28, first of all, the decoder core of the video decoding unit 24 searches for and specifies a video access unit from among the demultiplexed video stream stored in such buffers as the Elementary Stream Buffer (EB) included in the decoding unit (Step S52). Here, the video access unit searched for is a video access unit having a DTS (Decoding Time Stamp) corresponding to a current PTM (Presentation Time). Subsequently, the decoder core decodes the compressed picture data included in the video access unit so specified, generates an uncompressed L-R containing image, and writes the uncompressed L-R containing image so generated to the frame buffer (1) 27 (Step S53).

Here, a current PTM indicates the present time in accordance with the system time clock (STC) time axis of an in-player clock.

Following this, the display processing unit 25+ searches for and specifies a video access unit whose picture PTS (Presentation Time Stamp) corresponds to the current PTM (Step S54), and determines the video access unit so specified as a current video access unit (Step S55).

Next, the mode storing unit 40 determines the current display mode (Step S56), and when the current display mode is the 2D mode, processing proceeds to Step S57. In Step S57, the display processing unit 25+ obtains cropping information and scaling information which compose the 2D display information from a sequence header among the network abstraction layer units composing the current video access unit. Further, the display processing unit 25+ cuts out the cropping area of the L-R containing image stored in the frame buffer (1) 27 according to the cropping information (Step S58). Following this, the display processing unit 25+ performs scaling on the cropping area cut out according to the scaling information, and stores the scaled picture to the frame buffer (2) 28 (Step S59). Since the decoding of the 2D video is completed through the execution of such procedures, the display unit 26+ is able to play back picture data read from the frame buffer (2) 28.

On the other hand, when the current display mode is the 3D mode, processing proceeds to Step S60, where 3D mode display processing is executed (Step S60). Fig. 29 is a flowchart illustrating the 3D mode display processing pertaining to embodiment 2 in detail.

As is illustrated in Fig. 29, when entering the 3D mode display processing, the display processing unit 25+ firstly searches for 3D display information in the supplementary data of the current video access unit, and makes a judgment of whether 3D display information exists or not (Step S71). When the result of the judgment is "YES", processing proceeds to Step S72, where cropping information and scaling information which compose the 3D display information are obtained from the supplementary data of the current video access unit. On the other hand, when the result of the judgment is "NO", the processing proceeds to Step S73, and the display processing unit 25+ causes the demultiplexer 23+ to search for and specify a current PTM, and obtains cropping information and scaling information composing the 3D display information from the current PTM (Step S73).

Subsequently, the display processing unit 25+ cuts out the cropping area (a full screen, for instance) of the L-R containing image stored in the frame buffer (I) 27 according to the cropping information so obtained. Following this, the display processing unit 25+ performs scaling on the cropping area so cut out according to the scaling information, and stores the scaled picture to the frame buffer (2) 28 (Step S75).

Finally, the display processing unit 25+ performs standard 3D playback using the pictures stored to the frame buffer (2) 28. More specifically, the display processing unit 25+ performs 3D conversion with respect to the pictures stored to the frame buffer (2) 28 according to the 3D method information and the like, and stores each of the pictures obtained as a result of the 3D conversion to either the frame buffer (R) or the frame buffer (L) (Step S76).

Since the decoding of the 3D video is completed through the execution of such procedures, the display unit 26+ is able to play back picture data read from each of the frame buffer (R) and the frame buffer (L). The playback device determines whether the display information is 2D display information or 3D display information according to the specific location at which the display information is stored, and performs playback according to the appropriate display information. Hence, displaying of video is performed with an enhanced level of efficiency by applying a simple structure as described in the above.

More specifically, in the example provided in the above, the display processing unit firstly attempts to extract 3D display information from the supplementary data before performing a searching in the stream management information. That is, the display processing unit obtains the 3D display information from the supplementary data in the video access unit, and only in cases where the 3D display information is not found in the supplementary data, the display processing unit extracts the 3D display information from the stream management information of the video stream.

As description has been made in the above, the 3D digital television 100 which is capable of processing 3D display information can be developed and marketed by merely adding components for processing 3D display information to the internal structure of the conventional 2D digital television 300 and by additionally modifying some components of the conventional 2D digital television 300. This leads to the reduction in cost for manufacturing the 3D digital television 100, and hence, contributes to rapid popularization thereof.

### [Embodiment 3]

An entirety of the frame area is specified by the cropping information and the scaling information of the 3D display information pertaining to embodiment 1. In contrast, the cropping information of the 3D display information pertaining to the present embodiment specifies, from among sub-areas obtained by dividing the frame area in two, an area other than the area specified by the cropping information of the 2D display information.

The cropping information of the 2D display information specifies, as the cropping area, an area which is to be displayed as a 2D compatible image from among the left-view image and the right-view image. Thus, in the remaining sub-area, an image from a viewpoint opposite the 2D compatible image, that is, the 2D incompatible image exists. Thus, every time the display apparatus obtains 2D display information, the cutting out of the cropping area specified by the cropping information of the 2D display information is performed, and the left-view image, which is the 2D compatible image, is obtained. The left-view image so obtained is written to a frame buffer (L).

On the other hand, every time the display apparatus obtains the 3D display information, the cutting out of a cropping area specified by the cropping information of the 3D display information is performed, and thus, the right-view image, which is the 2D incompatible image, is obtained. The right-view image so obtained is written to a frame buffer (R). Hence, the left-view image and the right-view image are provided for displaying.

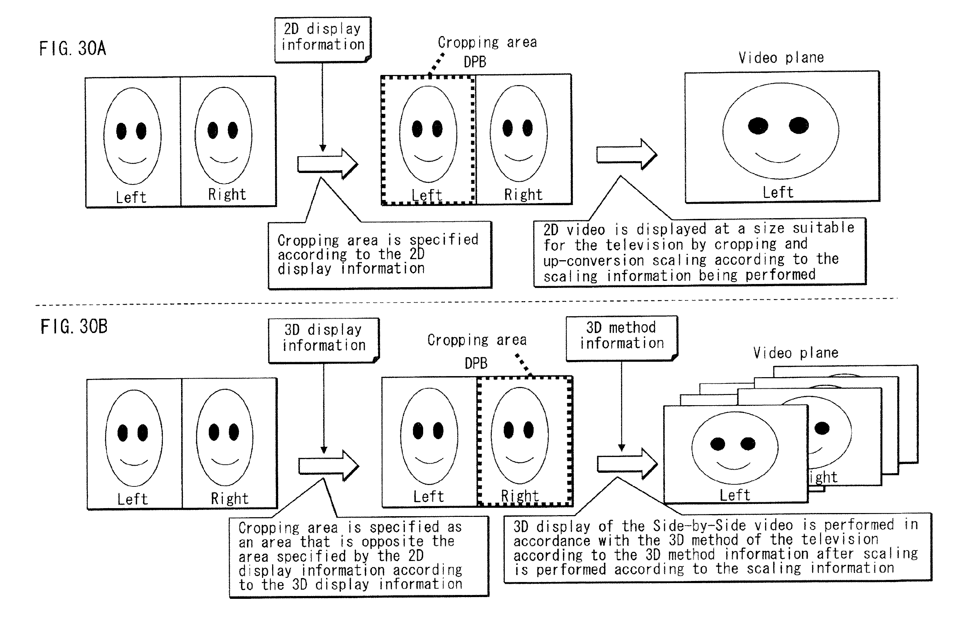

Figs. 30A and 30B illustrate the specification performed according to the 3D display information pertaining to embodiment 3. Figs. 30A and 30B are respectively based on Figs. 13A and 13B. In addition, the box of broken lines in each of Figs. 30A and 30B indicate a cropping area, similarly as in Figs. 13A and 13B. However, a difference can be observed in Fig. 30B compared to the Fig. 13B. That is, the cropping information of the 3D display information illustrated in Fig. 30B specifies, as the cropping area, an area that is opposite the area specified by the 2D display information illustrated in Fig. 30A. More specifically, the cropping information of the 3D display information illustrated in Fig. 30B specifies an area on the right-half of the frame (one example of the second display area) as the cropping area, whereas the cropping information of the 2D video display information illustrated in Fig. 30A specifies the left-half of the frame (one example of the first display area) as the cropping area.

As such, since an area opposite the cropping area specified by the 2D display information is specified as the cropping area of the 3D display information, the display apparatus simply cuts out a cropping area according to the 3D display information when in the 3D mode.

In Figs. 30A and 30B, when the video to be displayed is a Side-by-Side video in Full-HD, the 3D display information specifies a Half-HD area on the right-view side when the 2D display information specifies a Half-HD area on the left-view side. Hence, in the playback of such a video, the display apparatus is able to play back 3D video simply by combining the 2D display information and the 3D display information.

That is, since the cropping information of the 3D display information specifies, as a cropping area, an area that is not specified by the 2D display information as a cropping area, the specification of a display area for 3D displaying is performed by using both the cropping information of the 2D display information and the cropping information of the 3D display information.

When 3D displaying is performed by using the display apparatus illustrated in Fig. 26 in embodiment 3 under such conditions, the following precautions need to be taken. Since the cropping information of the 3D display information specifies an area that is not specified as the cropping area by the cropping information of the 2D display information, the display processing unit 25+ reads, from the frame area of the picture data stored in the frame buffer (1), both of (i) a cropping area specified by the cropping information of the 2D display information and (ii) a cropping area specified by the cropping information of the 3D display information, and writes both (i) and (ii) to the frame buffer (2).

In the following, detailed description is provided on the specific encoding and decoding procedures when the cropping information of the 3D display information specifies an area that is opposite the area specified by the cropping information of the 2D display information.

When the cropping information of the 3D display information specifies an area that is opposite the area specified by the cropping information of the 2D display information, and when the video stream is an MPEG-4 AVC video stream, the cropping area on the opposite side can be specified by applying a similar method as applied in the illustration in Fig. 12A. More specifically fields defined under MPEG-4 AVC, namely frame-crop_offset, frame-crop_bottom_offset, frame-crop_left_offset, and frame-crop_right_offset can be provided to the frame-cropping information of the 3D display information. By using such fields, the cropping offsets in four directions, top, bottom, left, and right, may be used to determine the cropping area with respect to the frame area. And further, by defining the cropping area specified by the cropping information of the 3D display information in such a manner, the 3D display information can be processed while maintaining compatibility with the processing procedures of an existing MPEG-4 AVC decoder.

This concludes the description on the cropping information of the 3D display information pertaining to embodiment 3. Next, description is made concerning modifications made to the encoding method and the decoding method in accordance with such modification of the 3D display information.

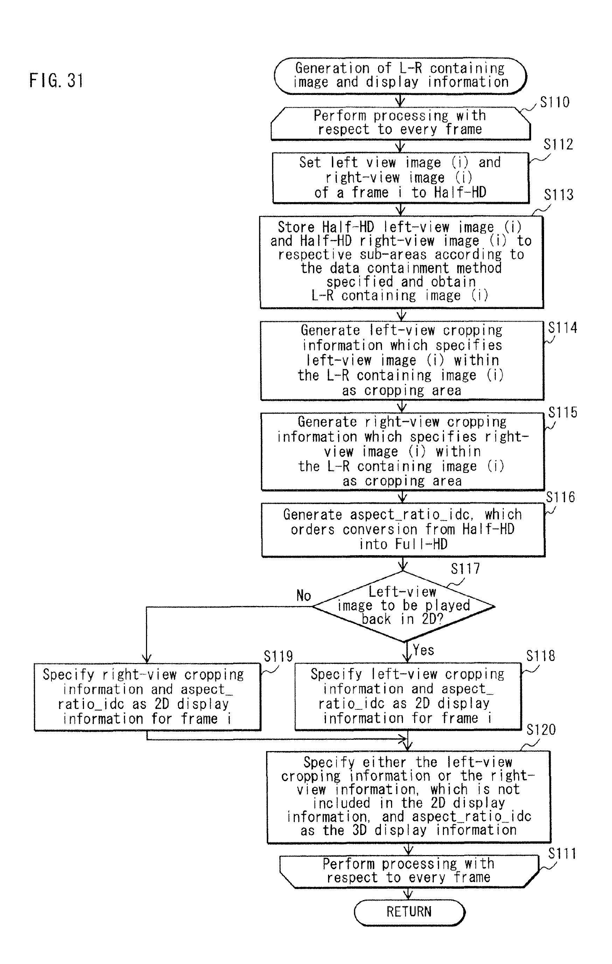

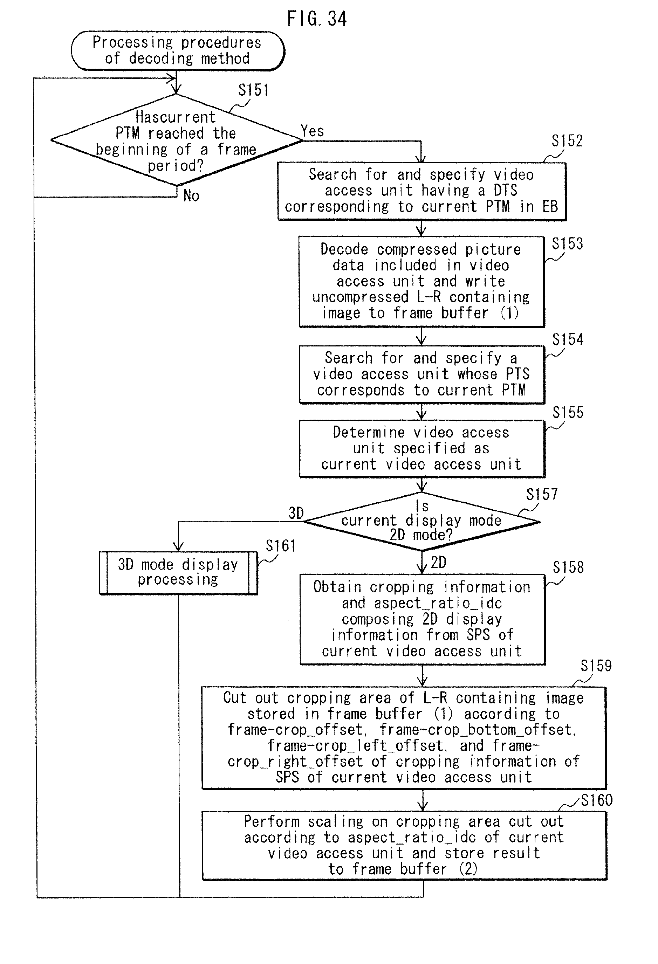

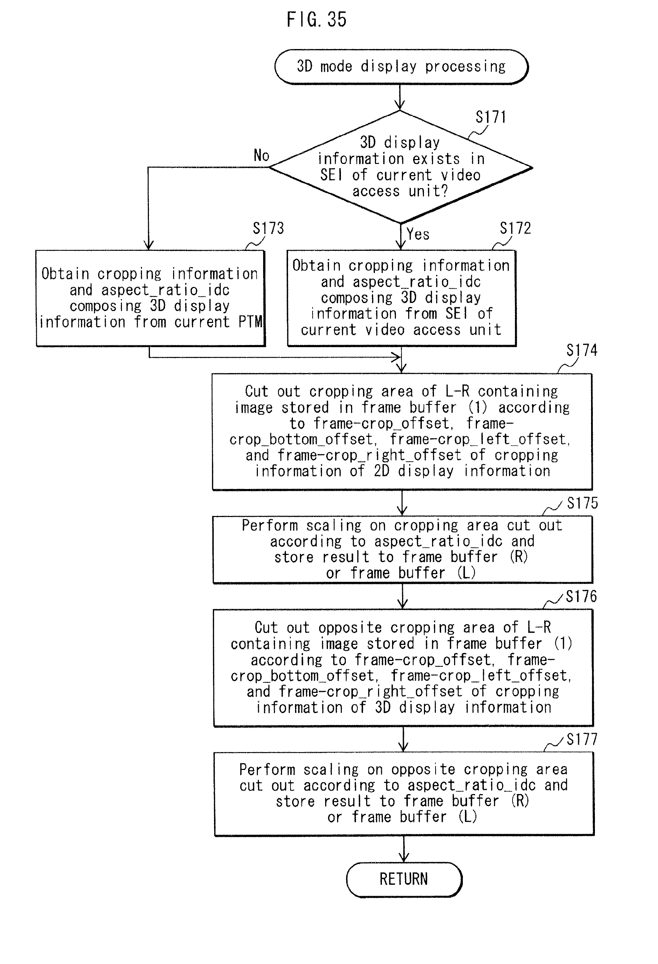

In embodiment 3, the processing procedures for generating L-R containing images and display information, the procedures for encoding an L-R containing image, and the processing procedures of demultiplexing which are illustrated in Figs. 21 through 23 are replaced with the processing illustrated in Figs. 31 through 33. Furthermore, the processing procedures for decoded images and the procedures for 3D mode displaying which are illustrated Figs. 28 and 29 are replaced with the processing illustrated in Figs. 34 and 35, in embodiment 3. In the following, description is provided on the processing procedures of the encoding method which is uniquely modified for embodiment 3, with reference to Figs. 31 through 33.

Fig. 31 is a flowchart illustrating the details of the generation of the L-R containing images and the display information. Note that the flowchart in Fig. 31 illustrates a loop of processing where the processing performed in Steps S112 through S 120 are repeatedly performed with respect to every frame (Steps S110 and S111). The variable (*i*) in the flowchart is a control variable for specifying a specific L-R containing image to be processed. Hence, in the following flowcharts and the explanation provided therefor, an L-R containing image which is the processing target in round i of the processing loop is denoted as an L-R containing image (*i*). In addition, a left-view image and a right-view image contained in the L-R containing image (*i*) are respectively denoted as a left-view image (*i*) and a right-view image (*i*), and further, a video access unit corresponding to the L-R containing image (*i*) is denoted as a video access unit (*i*).

The processing performed in Steps S112 through S120 is as follows. In Step S112, firstly, a left-view image (*i*) and a right-view image (*i*) of a frame are each set to Half-HD. Subsequently, in Step S113, an L-R containing image (*i*) is obtained by storing the Half-HD left-view image (*i*) and the Half-HD right-view image (*i*) to respective areas according to a designated data containment method. Further, in Step S114, left-view frame-cropping information that specifies the left-view image (*i*) in the L-R containing image (*i*) as the cropping area is generated, and in Step S115, right-view frame-cropping information that specifies the right view image (*i*) in the L-R containing image (*i*) as the cropping area is generated.

In the following Step S116, aspect_ratio_idc, which is an instruction for conversion from Half-HD into Full-HD, is generated. In Step S117, a judgment of whether or not the image to be played back in 2D is the left-view image is made, and when the result of the judgment is affirmative, the left-view frame-cropping information and the aspect_ratio_idc are determined as the 2D display information for the target frame (Step S118).

In contrast, when the result of the judgment is negative, the right-view frame-cropping information and the aspect_ratio_idc are determined as the 2D display information for the target frame (Step S119). Furthermore, in Step S120, one of the left-view frame-cropping information and the right-view frame-cropping information which is not included in the 2D display information is included in the 3D display information along with the aspect_ratio_idc (Step S120).

Note that, in Fig. 31, the generation of the aspect_ratio_idc (scaling information) (in Step S116) may be skipped. In such a case, the display apparatus performs scaling according to the size of the display device (display screen). That is, cropping information is necessary in composing 2D display information and 3D display information, while scaling information is not always necessary and is an arbitrary element that can be omitted.

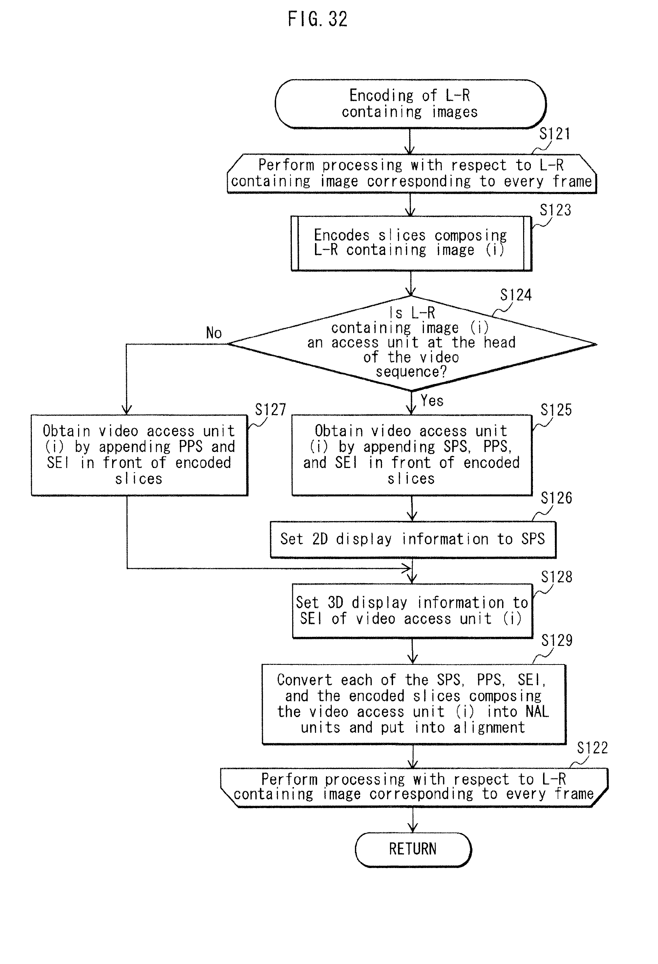

Fig. 32 is a flowchart illustrating the processing involved in the encoding of the L-R containing images. Note that the flowchart in Fig. 32 illustrates a loop of processing where the processing performed in Steps S123 through S129 are repeatedly performed with respect to an L-R containing image for each of the frames. Step S123 is a procedure where data slices composing the L-R containing image *(i)* are encoded, and when the encoding is completed, the processing proceeds to the judgment step of Step S124. In Step S124, a judgment is performed of whether or not the L-R containing image (*i*) is a video access unit at the head of the video sequence. When the L-R containing image (*i*) is a video access unit at the head of the video sequence, NAL units such as SPS, PPS, and SEI are appended in front of the encoded data slices to obtain a video access unit (*i*) (Step S125), and the 2D display information is stored to the SPS. When the L-R containing image (*i*) is not a video access unit at the head of the video sequence, NAL units such as PPS and SEI are appended in front of the encoded data slices to obtain a video access unit (*i*) (Step S127). Subsequently, the 3D display information is set to the SEI of the video access unit (*i*) (Step S128), and each of the SPS, PPS, SEI, and the encoded slices composing the video access unit (*i*) is converted into NAL units and put into alignment (Step S129).

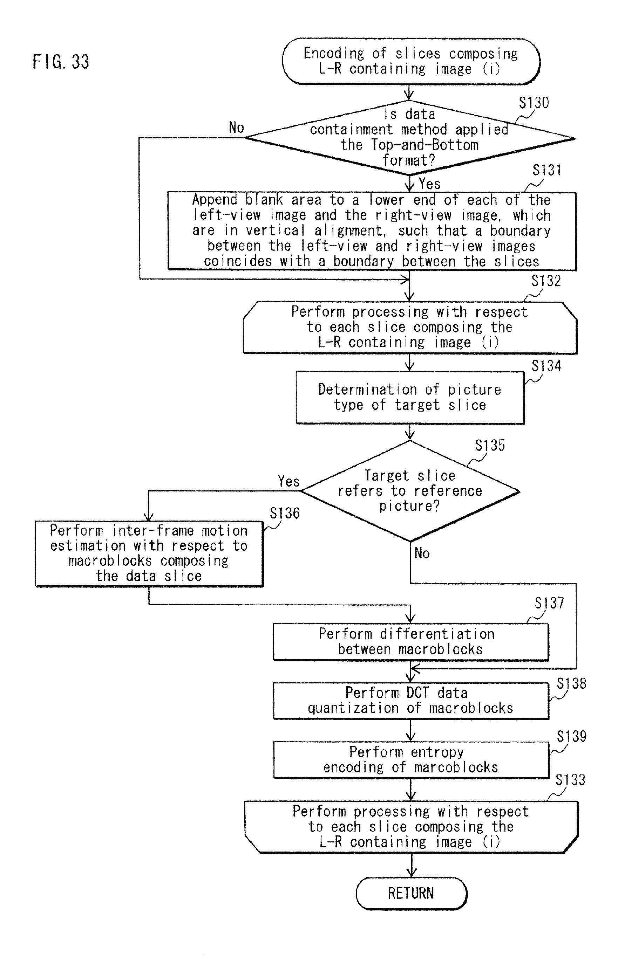

Fig. 33 is a flowchart illustrating the processing involved in the encoding of the data slices composing the L-R containing image (*i*). In Step S130, a judgment is performed of whether or not the data containment method applied to the L-R containing image (*i*) is the Top-and-Bottom format. When it is judged that the Top-and-Bottom format is applied to the L-R containing image (*i*), a blank area is appended to a lower end of each of the left-view image and the right-view image, which are in vertical alignment in the L-R containing image (*i*), such that the boundary between the left-view image and the right-view image coincides with one of the boundaries between the multiple data slices. For instance, when the L-R containing image has a resolution of 1920 × 1080 pixels, a blank area composed of 1920 × 4 pixels is added to the lower end of the left-view image, which has a size of 1920 × 540 pixels. Similarly, a blank area composed of 1920 × 4 pixels is also added to the lower end of the right-view image having a size of 1920 × 540 pixels. Thus, the boundary between the left-view image and the right-view image coincides with one of the boundaries between the data slices each having a 16-pixel size.

After coincidence between boundaries is ensured through the aforementioned processing, the processing proceeds to the loop of processing in Steps S132 through S139. In this loop of processing, the processing performed in Steps S134 through S139 are repeatedly performed with respect to each data slice composing the L-R containing image. In Step S134, a determination is made of the picture type of the target data slices. When the data slices are that of a picture type which refers to a reference picture, inter-frame motion estimation is performed with respect to the macroblocks composing the data slice (Step S136), and differentiation is performed between macroblocks (Step S137). When the data slices are that of a picture type which does not refer to a reference picture, Steps S136 and S137 are skipped. In Step S138, DCT data quantization of the macroblocks are performed, and in Step S139, entropy encoding is performed with respect to the marcoblocks. By such processing being repeatedly performed, the macroblocks composing the L-R containing images are encoded.

This concludes the description of the processing procedures involved in the encoding method pertaining to embodiment 3. In the following, description is provided on the processing procedures of the encoding method which are uniquely modified for embodiment 3, with reference to Figs. 34 and 35.

Fig. 34 is a flowchart illustrating the processing procedures involved in the decoding method. Step S151 in the flowchart illustrated in Fig. 34 is a judgment of whether or not the current PTM has reached the beginning of a frame period. Here, the current PTM is a current playback time, management of which is performed by an internal clock of the display apparatus. When the current PTM reaches the beginning of the frame period, the processing corresponding to Steps S152 through S161 is conducted. The processing to be performed at this point includes the following. First of all, a search is conducted for a video access unit whose DTS corresponds to the current PTM, in the Elementary Buffer (Step S152). When a video access unit whose DTS corresponds to the current PTM is specified through the search conducted in the above, the compressed picture data included in the specified video access unit is decoded, and an uncompressed L-R containing image obtained as a result of the decoding is written to the frame buffer (I) (Step S153). Subsequently, a search is conducted for a video access unit whose PTS (Presentation Time Stamp) corresponds to the current PTM (Step S154). The video access unit specified as a result of the search conducted in the above is determined as the current video access unit (Step S155). Further, processing proceeds to Step S157, where a judgment is made of whether or not the current mode is the 2D mode. When it is judged that the current mode is the 2D mode, the frame-cropping information and the aspect_ratio_idc, which together compose the 2D display information, are obtained from the SPS of the current video access unit (Step S158). Subsequently, a cropping area is cut out from the L-R containing image stored in the frame buffer according to the frame-crop_offset, frame-crop_bottom_offset, frame-crop_left_offset, and the frame-crop_right_offset of the frame cropping information of the current SPS (Step S159). Further, scaling conversion of the cropping area so obtained is performed according to the aspect_ratio_idc of the current video access unit, and the result of the scaling is written to the frame buffer (Step S160). When a judgment is made that the current mode is the 3D mode in Step S157, processing proceeds to Step S161, and display processing in the 3D mode is performed.

Fig. 35 is a flowchart illustrating the processing procedures involved in the 3D mode display processing. In Step S171, a judgment is performed of whether or not 3D display information exists in the SEI of the current video access unit. When the result of the judgment in Step S171 is affirmative, the frame-cropping information and the aspect_ratio_idc, which together compose the 3D display information of the SEI of the current video access unit, is obtained in Step S172. When the result of the judgment in Step S171 is negative, the frame-cropping information and the aspect_ratio_idc, which together compose the 3D display information of the current PTM, is obtained in Step S 173.Subsequently, a cropping area is cut out from the L-R containing image stored in the frame buffer (1) according to the frame-crop_offset, frame-crop_bottom_offset, frame-crop_left_offset, and the frame-crop_right_offset of the frame cropping information of the 2D display information in Step S174. Further, scaling conversion of the cropping area so obtained is performed according to the aspect_ratio_idc obtained, and the result of the scaling is written to the frame buffers (L) and (R) in Step S175.

Subsequently, a cropping area is cut out from the L-R containing image stored in the frame buffer (1) according to the frame-crop_offset, frame-crop_bottom_offset, frame-crop_left_offset, and the frame-crop_right_offset of the frame cropping information of the 3D display information in Step S176. Further, scaling conversion of the cropping area so obtained is performed according to the aspect_ratio_idc obtained, and the result of the scaling is written to one of the frame buffers (L) and (R) in Step S 177.

As description is provided in the above, according to the present embodiment, processing performed according to the 3D display information in the previous embodiments is performed according to the 2D display information, and hence, both the left-view image and the right-view image are provided for displaying. This is made possible by the 3D display information specifying, as the cropping area, an area that is opposite the area specified as the cropping area by the 2D display information. This realizes efficient implementation of the software processing of the 3D digital television 100. Note that in the present embodiment, explanation has been omitted concerning the structure of the data creation device which realizes the encoding method pertaining to the present embodiment, since the data creation device has a similar structure as the data creation device in embodiment 1, which is described with reference to Fig. 18.

### [Embodiment 4]

An entirety of the frame area is specified by the cropping information and the scaling information of the 3D display information pertaining to embodiment 1. In contrast, the cropping information is omitted from the 3D display information pertaining to the present embodiment. More specifically, the 3D method information is used in place of the cropping information of the 3D display information in the present embodiment.

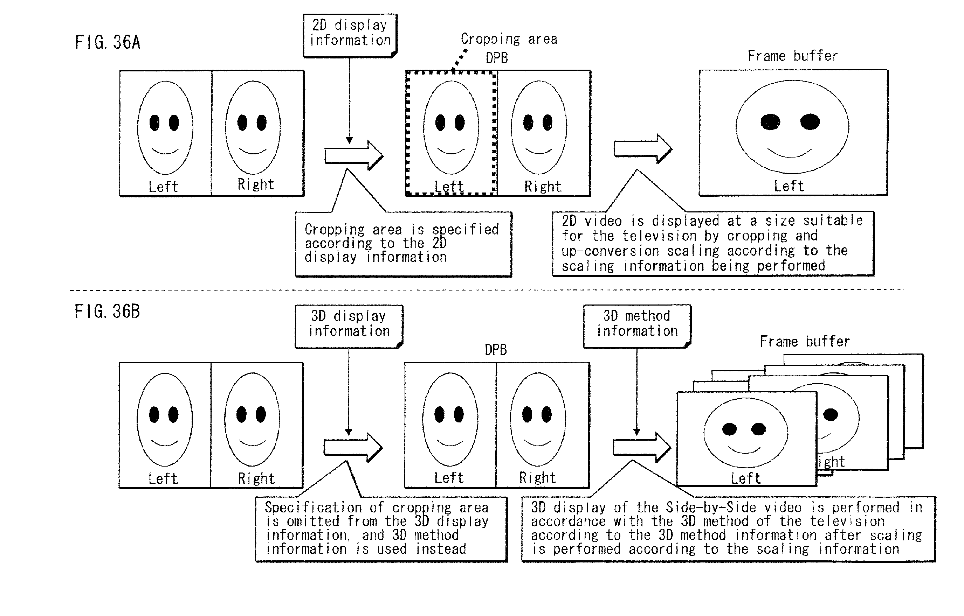

Figs. 36A and 36B illustrate the specification performed according to the 3D display information pertaining to embodiment 4. Figs. 36A and 36B are respectively based on Figs. 13A and 13B. In addition, the box of broken lines in Fig. 36A indicates a cropping area similarly as in Figs. 13A and 13B. However, a difference can be observed in Fig. 36B compared to Fig. 13B. In specific, a specification of the cropping area is not made in Fig. 36B. Instead, the 3D method information is provided to the display apparatus, and the display apparatus cuts out the right-view image according to the cropping information of the 2D display information and the 3D method information. That is, in a case where (*i*) the 3D method information indicates the Side-by-Side format and (ii) the left-view image is specified as the cropping area by the cropping information of the 2D display information, it is assumed that the right-view image exists in a lateral direction with respect to the cropping area. Thus, the display apparatus cuts out an area on the right half of the frame area, and provides the area so cut-out for displaying.

Further, in a case where (i) the 3D method information indicates the Top-and-Bottom format and (ii) the left-view image is specified as the cropping area by the cropping information of the 2D display information, it is assumed that the right-view image exists in the lower direction with respect to the cropping area. Thus, the display apparatus cuts out an area on the bottom half of the frame area, and provides the area so cut-out for displaying. Note that in the present embodiment, explanation has been omitted concerning the structure of the data creation device which realizes the encoding method pertaining to the present embodiment, since the data creation device has a similar structure as the data creation device in embodiment 1 which is described with reference to Fig. 18.

### [Embodiment 5]

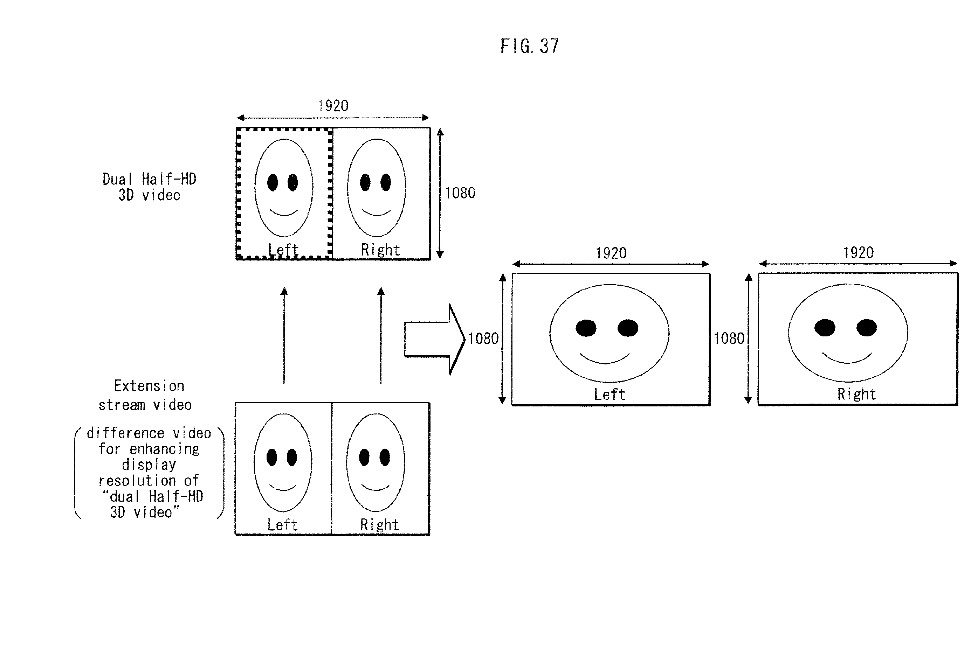

The present embodiment realizes 3D video playback by using a dual Half-HD 3D video stream. Fig. 37 illustrates a process through which a Full-HD left-view image and a Full-HD right-view image are obtained from a dual Half-HD video stream and a dual Half-HD extension stream.

The upper left portion of Fig. 37 illustrates a video stream composing dual Half-HD 3D video, such as a Full-HD Side-by-Side format video.

The lower left portion of Fig. 37 illustrates an extension stream composing difference video for enhancing the display resolution of the dual Half-HD 3D video.

More specifically, when the playback device is a 2D video playback device, playback is performed by using one of the images contained in the L-R containing image in the Side-by-Side format according to the 2D display information, and when the playback device is a 3D video playback device, 3D video playback is performed by each of the left-view image and the right-view image of the L-R containing image in the Side-by-Side format undergoing scaling and thus being enlarged. Further, in a case where the 3D video playback device is capable of utilizing difference information to perform 3D video playback at a higher resolution, the playback device utilizes difference information between the left-view and right-view images of the L-R containing image in the Side-by-Side format to achieve high resolution playback. The video format illustrated in Fig. 8 can be used in such a case by designating the 2D display information such that a 2D video playback device enlarges the cropping area specified by the cropping information for display.

Further, it is preferable that a PMT descriptor contain combination information that allows playback devices to determine the relationship between the dual Half-HD video and the difference video for achieving a high resolution therewith.

For instance, such information may be contained in "MVC_extension_descriptor" or in "MVC_operation_point_descriptor". Note that here, the difference video for achieving a high-resolution may be, for instance, contained as a video in which, when only odd-numbered lines remain as downscaling is performed in order to create Side-by-Side images from dual Full-HD left-view and right-view images, the even numbered lines thereof are collected.

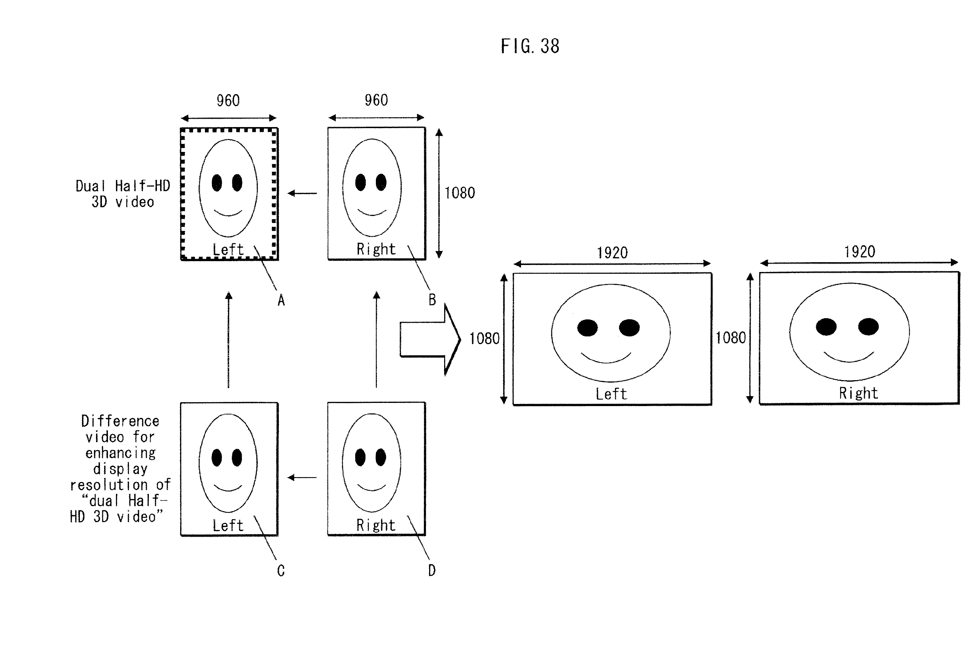

This method for achieving a high resolution permits highly-effective compression given that, as shown in Fig. 38, Half-HD streams are respectively prepared and reference one another. In Fig. 38, the left-view video (A) is the base video, and the right-view video (B), the left-view difference video (C), and the right-view difference video (D) are compressed using inter-view referencing as in MPEG-4 AVC or similar. In this case, information indicating the relationships between the right-view video (B), the left-view difference video (C) and the right-view difference video (D) is contained in the PMT descriptor, in the supplementary data within the video stream, or the like.

### [Embodiment 6]

The present embodiment discloses a modification where the 3D display information is used for the transmission of a video stream having a depth map format. The depth map method is one method which utilizes parallax images. In detail, when applying the depth map method, a depth map which includes depth values of 2D images in units of pixels is prepared, in addition to separately prepared 2D images each for the right eye and for the left eye. When the depth map method is applied, players and displays generate left-view parallax images and right-view parallax images by using the 2D images and the depth map.

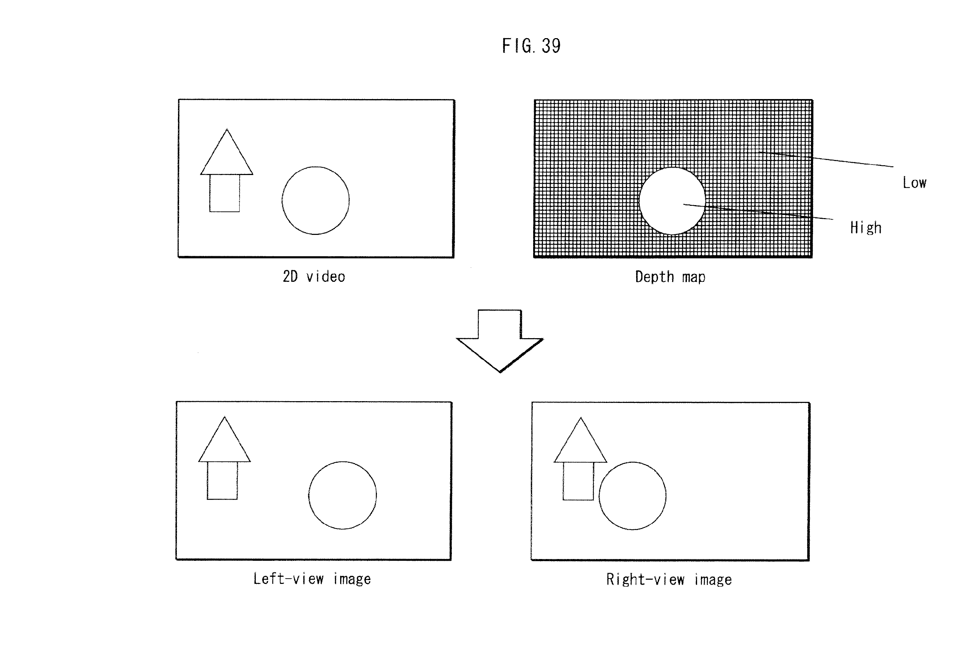

Fig. 39 is a schematic example of how a left-view parallax image and a right-view parallax image are generated from a 2D video and a depth map. The depth map contains depth values corresponding to each pixel in the 2D video. In the example illustrated in Fig. 39, information indicating high depth is assigned to the round object in the 2D image according to the depth map, while other areas are assigned information indicating low depth. This information may be contained as a bit sequence for each pixel, and may also be contained as a picture image (such as an image where black indicates low-depth and white indicates high-depth). Parallax images can be created by adjusting the parallax of the 2D video according to the depth values in the depth map. In the example of Fig. 39, left-view and right-view parallax images are created in which the pixels of the round object have high parallax while the pixels of other areas have low parallax. This is because the round shape in the 2D video has high depth values while other areas have low depth values. The left-view and right-view parallax images are then used for stereoscopic viewing through display using alternate sequencing methods or the like.

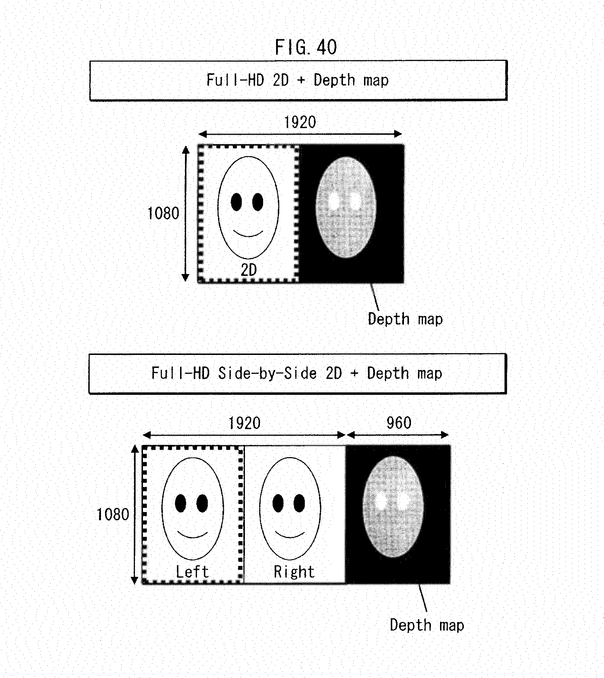

Fig. 40 illustrates examples where each of the 2D display information and the 3D display information is combined with the depth map format. As shown in the upper portion of Fig. 40, the encoding unit stores a Full-HD frame containing 2D video in the left half and a depth map corresponding thereto in the right half. As such, by applying the video format illustrated in Fig. 8, and further by making a specification by using the cropping information of the 2D display information such that the 2D video in the left half is subject to scaling and 2D playback, the 2D digital television 300 plays back the 2D video in the left half. Further, by making a specification by using the cropping information of the 3D display information such that the entire screen is used for 3D playback, and by setting an identifier which is able to identify the depth map format to the 3D display information or the 3D method information, the 3D digital television 100 generates left-view images and right-view images from the 2D video of the left half and the depth map image, and thus is able to display 3D video.

In addition, as illustrated in the lower portion of Fig. 40, an L-R containing image having a frame size of 2880 × 1080 pixels may be generated, where an image in the Side-by-Side format occupies an Full-HD area and the remaining 960 × 1080 pixel area is used for containing a depth map corresponding to either the left-view or the right-view video. Accordingly, the 3D video is compatible for playback with not only the 3D digital television 100 compatible with the Side-by-Side format but also 3D playback devices compatible with depth maps. In such a case, the frame stored in the encoding unit contains in the 3D display information not only the cropping and scaling information used to realize Side-by-Side video, but also the cropping and scaling information needed for the depth map 3D video such that the information can be selected according to the 3D method in use.

### (Modifications)

In the above, description has been provided on embodiments of the present invention which are thought to be exemplary by the inventors at the time of application of the present invention. However, further improvements and modifications may be made especially concerning the technical topics referred to in the following. The inventors intend to make no restriction regarding whether or not to apply such improvements and modifications as mentioned in the following, and it is therefore left to the discretion of those who are to implement the present invention to make such decisions.

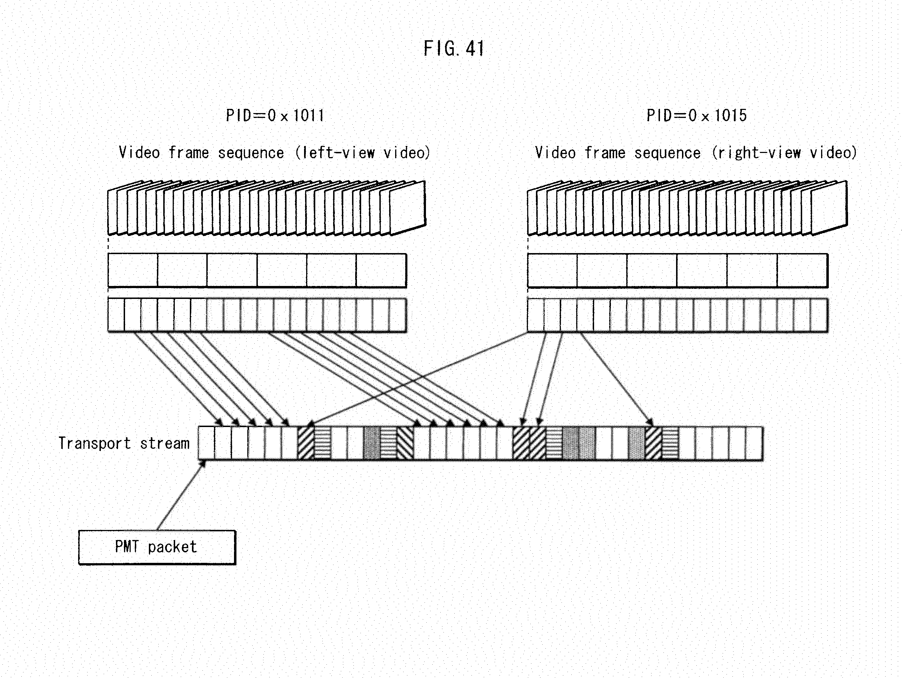

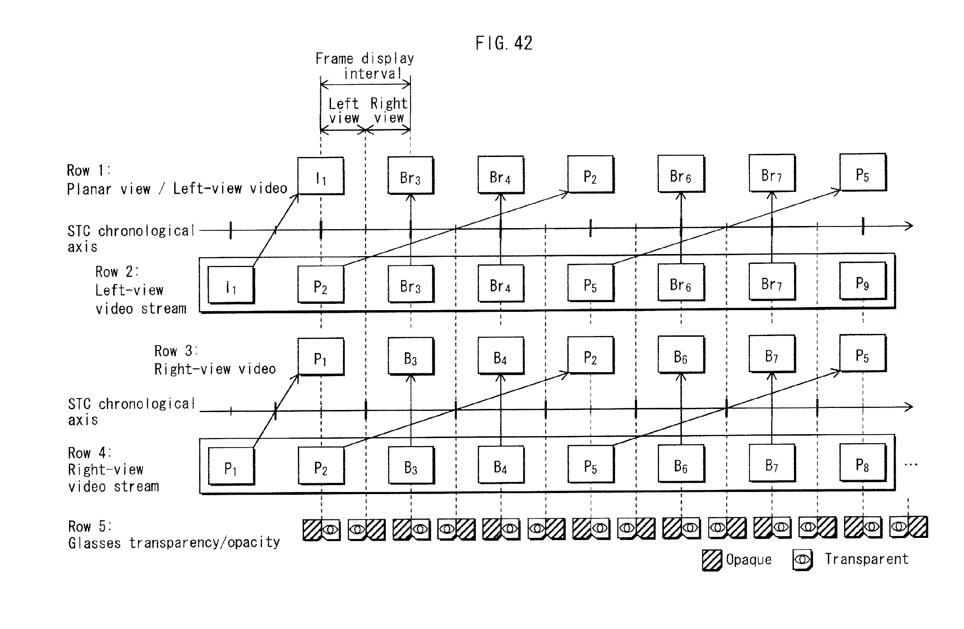

The embodiments have been described through an example of 3D video using the frame-alternating method. However, a structure such as that shown in Fig. 41, where the left-view video and the right-view video are provided as separate video streams contained in a single transport stream may be applied. In such a case, 2D video can be played back from either one of the left-view and right-view video streams, and 3D video can be played back by using both the left-view and right-view video streams. In such a case, a descriptor in the PMT packet contains information indicating the pair of video streams that make up the 3D video. For example, in the example illustrated in Fig. 41, the left-view video has the PID 0x1011 and the right-view video has the PID 0x1015. Thus, in this example, a descriptor includes information indicating that the PID of the left-view video = 0x1011 and the PID of the right-view video = 0x1015. Alternatively, the stream descriptor of the video stream may indicate the PID of the corresponding opposite view. For instance, using the example of Fig. 41, the stream descriptor corresponding to the left-view video stream contains the PID 0x1015, which is that of the right-view video stream, and the stream descriptor corresponding to the right-view video stream contains the PID 0x1011, which is that of the left-view video stream. When the left-view and right-view videos are compressed by MPEG-4 AVC using inter-view referencing, then the descriptors may be contained as "MVC_extension_descriptor", "MVC_operation_point_descriptor", or similar. Fig. 42 illustrates how each picture in each of the left-view video stream and the right-view video stream is played back.

More specifically, Fig. 42 shows an example of an internal structure of the left-view and right-view video streams used in the multiview coding method for realizing stereoscopic viewing.

The second row of Fig. 42 shows the internal structure of the left-view video stream. In specific, this stream includes pictures I1, P2, Br3, Br4, P5, Br6, Br7, and P9. These pictures are decoded in accordance with the Decode Time Stamp (DTS). The top row shows the left-view image. The left-view image is played back by the decoded pictures I1, P2, Br3, Br4, P5, Br6, Br7, and P9 being played back in the order of I1, Br3, Br4, P2, Br6, Br7, and P5 according to the PTS. Here, a picture to which intra-picture coding is applied without the use of a reference picture is called an I-picture. Here, note that a picture is defined as a unit of encoding that encompasses both frames and fields. Also, a picture to which inter-picture coding is applied with reference to one previously-processed picture is called a P-picture, a picture to which inter-picture coding is applied with reference to two previously-processed pictures at once is called a B-picture, and a B-picture referenced by other pictures is called a Br-picture.

The fourth row of the figure shows the internal structure of the right-view video stream. This right-view video stream includes the pictures P1, P2, B3, B4, P5, B6, B7, and P8. These pictures are decoded in accordance with the DTS. The third row shows the right-view image. The right-view image is played back by the decoded pictures P1, P2, B3, B4, P5, B6, B7, and P8 being played back in the order of P1, B3, B4, P2, B6, B7, and P5, according to the PTS. However, stereoscopic playback by alternate-frame sequencing displays one of the pair sharing the same PTS, i.e. either the left-view image or the right-view image, with a 3D display delay that is equal to half the PTS interval.

The fifth row shows how the 3D glasses 200 change between different states thereof. As shown in the fifth row, the right-eye shutter is closed whenever left-view images are viewed, and the left-eye shutter is closed whenever right-view images are viewed.

In addition to inter-picture predictive coding that makes use of correlations between pictures along the chronological axis, the left-view video stream and the right-view video stream are also compressed using inter-picture predictive coding that makes use of inter-view correlations. That is, a picture of the right-view video stream is compressed by referencing a picture from the left-view video stream with the same display time.

For example, the P-picture at the head of the right-view video stream references an 1-picture from the left-view video stream, the B-pictures of the right-view video stream reference Br-pictures from the left-view video stream, and the second P-picture of the right-view video stream references a P-picture from the left-view video stream.

Among a compression-coded left-view video stream and a compression-coded right-view video stream, a compression-coded stream that can be decoded independently is termed a "base view video stream". Further, among the compression-coded left-view video stream and the compression-coded right-view video stream, a video stream that can only be decoded after the base view video stream has been decoded is termed a "dependent view stream". In detail, each of the picture data composing the dependent video stream is compression-coded according to inter-frame correlations between a corresponding one of the picture data of the base view video stream. Note that the base view video stream and the dependent view stream may be stored and transferred as separate streams, or otherwise may be multiplexed into a single stream, such as an MPEG-2 TS stream or similar.

One of such inter-view correlation-based compression methods of the multiview coding method is described by the Multiview Video Coding (MVC) amendment to the MPEG-4 AVC / H.264 standard. The Joint Video Team (JVT), which is a partnership effort by the ISO/IEC MPEG and the ITU-T VCEG, completed the formulation of an amended specification based on the MPEG-4 AVC/H.264, which is referred to as the Multiview Video Coding (MVC) in July 2008. MVC is a standard for encoding video that encompasses a plurality of viewpoints, and makes use not only of temporal similarities but also of inter-view similarities for predictive coding. Thus, MVC has achieved improved compression efficiency in comparison with compression applied independently to each of several viewpoints.

In the embodiments, description has been provided with the transport stream as an example of the format of the video, but the present invention is not limited to this. The video may be transmitted by broadcasting, and may of course also be recorded on a recording medium such as a Blu-ray Disc, a DVD, an HDD, an SD card, or the like, or transferred over a network such as the Internet. Note that, when a recording medium such as a Blu-ray Disc, a DVD, an HDD, an SD card, or the like is used for recording of video, files such as a stream properties information file and a playlist file exist thereon. In a stream properties information file, the properties of the streams contained within the transport streams are written along with random access information tables and the like. In a playlist file, the playback sections for the transport streams are defined.

The 3D display information may be exclusively contained in the video access unit at the head of the GOP. Accordingly, the processing burden can be diminished as information analysis need only be performed by the playback device with respect to the video access unit at the head of the GOP. Also, restrictions may be imposed such that this information is inserted into the video access units of all GOPs. Accordingly, the information can be reliably obtained even when random access is in effect and a sudden jump is made to a certain GOP. Restrictions may also be imposed such that the 2D and 3D display information cannot be modified within the transport stream. Accordingly, the processing burden can be diminished as the playback device need only analyze this information once per transport stream playback instance. In cases where seamless continuation between transport streams is required, the 2D and 3D display information may be made unmodifiable. Accordingly, the processing burden can be reduced at seamless continuation time.

In addition, a function using which a user is able to interactively modify the 2D display information may be provided to the 3D video playback device, in view of cases where the 3D video playback device is unable to correctly obtain the 3D display information. Accordingly, 3D video display can be achieved despite any stream transfer errors or the like by using the 2D display information and converting the 2D display information so as to be similar to the 3D display information.

In addition, the 3D display information may be contained in a different network abstraction layer unit besides the supplementary data. In this case, the video encoding unit 1701 generates a video access unit by converting each of encoded slices composing the L-R containing image and attribute information required for encoding the slices into network abstraction layer units. In this conversion, the video encoding unit 1701 adds the network abstraction layer unit containing the 3D display information to the video access unit to be generated. Accordingly, the 3D display information is stored in the video access unit.

Additionally, the cropping information and the scaling information may be provided as any form of information, provided that the information may be presented to the display apparatus so as to cause the display apparatus to conduct cropping or scaling. Thus, other information elements excluding those specified under MPEG-2 Video and the MPEG-4 AVC may also be applied thereto, given that the information elements are deemed as being technically equivalent to the cropping information and the scaling information.

Additionally, the Line Alternative method may be applied as the frame compatible method, in addition to the Side-by-Side method and the Top-and-Bottom method. When applying the Line Alternative method, a left-view image and a right-view image are alternatingly aligned per every single line within a single picture.

Arrangements may be made to the encoding of, for instance, using the setting of the cropping information as the setting of the 3D method information, or defining a new value for the 3D method information. More specifically, when the 3D method information is stored to the PMT packet, the 3D method information may be stored to one of the stream descriptors corresponding to the video stream in the multiplexing. Under the MPEG-4 AVC, the stream descriptor containing the 3D method information may be contained in an undefined portion of the AVC video descriptor. On the other hand, under MPEG-2, the stream descriptor containing the 3D method information may be contained in an undefined portion of a video decoding control descriptor. Further, as already has been mentioned in the above, the 3D method information is not always necessary, and the video encoding unit 11 may store only the display information to the video stream while not storing the 3D method information. Further, the 3D method information is referred to only in cases where there is a need for the 3D display apparatus to acknowledge the 3D method applied to the video stream.

In the present invention, the multiplexer may store the 3D display information to a file that is separate from the stream. Accordingly, corrections to the data can easily be performed later as the file information is in a file other than the stream itself.

Among the multiple NAL units composing the video access unit, there are several NAL units which are not always required, and therefore the number of NAL units may be increased or decreased as necessary. For instance, the sequence header is only needed for the leading video access unit of the GOP and may be omitted from other video access units. Further, depending on the encoding format, a given picture header may simply reference the previous video access unit, without any picture headers being contained in the video access unit itself.

In addition, both the 2D display information and the 3D display information may be stored in the sequence header. In performing encoding in such a case, an L-R containing image at the head of the video sequence is converted into a video access unit by a sequence header and supplementary data being appended to encoded slices composing the L-R containing image, and the 2D display information and the 3D display information are contained in the sequence header so appended.

In addition, when exclusively creating a video stream for a display apparatus having several default 3D methods, the 3D method information may be omitted.

Also, in a case where only a video stream is generated and no audio streams, subtitle streams or the like are generated, the multiplexer 12 may be omitted, and output may be performed only of the encoded video stream.

In the flowchart illustrated in Fig. 21, processing is performed in such an order that first the 2D display information is generated, and then the 3D display information is generated. However, the present invention is not limited to this, and there may be no chronological order between the generation of the 2D display information and the generation of the 3D display information, and the 2D display information may be generated after the 3D display information is generated. Further, Step S14 in Fig. 21 may be performed at a different point in processing, such that Step S14 is performed after each of Steps S17 and S19. In such cases, the scaling information is generated for each of the results of the judgment performed in Step S15. In short, the order and the timing at which the 2D display information and the 3D display information are generated are not important, provided that the cropping information and the scaling information is generated for each of the 2D display information and the 3D display information.

Additionally, the judgment in Step S15 may be omitted by selecting either the left-view image or the right-view image as the default image of 2D playback (for instance, selecting the left-view image as the default 2D image). In such a case, the Steps S15 through S17 are to be omitted from the processing illustrated in Fig. 21.

Further, although description has been provided on the above taking the conversion from Half-HD to Full-HD as one example, this is merely one specific example of an embodiment of the present invention, and thus may be altered. For instance, an L-R containing image may be generated in which a left-view image and a right-view image are contained in sub-areas each having a different conversion rate. Also, there may be cases where the sizes of the left-view image and the right-view image differ, and in such cases, the size of one of the left-view image and the right-view image may be larger than the size of the other.

Also, the scaling information of the 3D display information need not indicate 100%. That is, the left-view image or the right-view image for 3D display may be contained in the L-R containing image occupying only a part of the frame area, and in such a case, cropping may be performed with respect to the area to be used for 3D display, and the cropped area may be enlarged so as to conform with the size of the screen of the display.

Also, although the 2D display information is set to the sequence header of the video access unit at the head of the video sequence in the description provided above, the present invention is not limited to this. As already mentioned in the above, 2D display information may be set to a sequence header of each of the video access units.

In embodiments 1 and 2 above, description has been provided on examples where each of the 2D display information and the 3D display information are arranged in different locations of a data stream. However, the present invention is not limited to this, and the 3D display information may be contained not only in the supplementary data and the PMT packet, but also may be contained in a syntax extension of the sequence header contained in the reserved area, or else may be prepared as new data For instance, under MPEG-4 AVC, a new NAL unit may also be defined for this purpose. For the same reason, the storage location of the 2D display information is not limited to the sequence header of the video access unit. The 2D display information may be stored in any other location that can be identified by the display apparatus. This allows the display apparatus to precisely determine whether the information is 2D display information or 3D display information by classifying or identifying the 2D display information and the 3D display information according to the storage locations thereof.

When receiving a pre-existing transport stream composing a Side-by-Side 3D video, the 2D digital television 300 is capable of cropping and playing back either one of a left-view image and a right-view image. This is realized by overwriting an "original" 2D display information included in the sequence header of the transport stream with the 2D video display pertaining to the embodiments of the present invention, and thereby providing the video format illustrated in Fig. 8 thereto. Further, by rewriting and adding to the "3D display information" or the "3D method information" which are contained in the PMT packet or the supplementary data, 3D playback may be performed with higher flexibility. That is, 3D playback may be performed using a part of the full screen, by determining a display area by performing cropping and scaling.

Also, according to the encoding method pertaining to the present invention, the 2D digital television 300 is able to perform scaling and to play back one of the left-view image in the Side-by-Side format or the right-view image in the Side-by-Side format by using a video stream generated according to the encoding method. In addition to this, when a user desires to output an L-R containing image in an unusual state, such as where the L-R containing image is displayed divided into a left portion and a right portion on the 2D digital television 300, this may be realized by similarly overwriting the 2D display information, the 3D display information, or the 3D method information.

Furthermore, it is preferable that the syntax of the 2D display information and the 3D display information be completely the same. By making such an arrangement, the 3D playback device is able to perform 3D display using display information stored at any location by replacing the 2D display information included in the sequence header with the 3D display information, Thus, processing is facilitated by there being no distinction between the decoding and playback processing in both 2D display and 3D display.

In the above, description has been provided on a structure of the video format where display information is contained in a transport stream. However, locations other than the transport streams, such as program streams or the MPEG-4 system stream, may be used to contain the 3D video as long as the 2D display information contains information used by the 2D playback device for 2D video playback, namely the appropriate cropping area and aspect ratio, while the 3D display information contains information, such as the appropriate cropping area and aspect ratio, used by the 3D playback device for 3D video playback. Particularly, if MPEG-4 AVC is contained in MPEG-4 system streams, then because the SPS are uniformly managed in the headers, separately from the streams, video from video streams pre-recorded in Side-by-Side format can be played back by a 2D playback device at full size, rather than divided in two, simply by overwriting the 2D display information, i.e. the cropping information ("frame_cropping") and the scaling information ("aspect_ratio_idc"), contained in the header portion SPS.

If the video stream is to be distributed by streaming or the like, then the 2D display information may be overwritten for this purpose according to the needs of the user. For example, Full-HD video content in the Side-by-Side format may be streamed over a network and played back by a 2D playback device as follows. If the user wishes to scale either the left-view or the right-view Half-HD video for display on a television, then the encoding unit inserts the 2D display information (cropping area information set to Half-HD; scaling information set to up-convert Half-HD to Full-HD) of the video format illustrated by Fig. 8 in the sequence header and performs transferring thereof. If the user wishes to display Full-HD video in the Side-by-Side format that is split into a left side and a right side as-is on a television, then information indicating that "the cropping information is set for Full-HD and the scaling information is set to Full-HD as-is" is set to the 2D display information, then the 2D display information is inserted into the sequence header and transferred. In either case, information other than the sequence header remains the same. According to such a structure, a screen display conforming to the wishes of the user can be realized. This can be accomplished with a low data generation burden because the transmitter needs only modify the sequence header.

### [Industrial Applicability]

By application of the video stream pertaining to the present invention, 3D video content is played back as 2D video on the 2D digital television 300, and played back as 3D video on the 3D digital television 100. Accordingly, the same 3D video content can be distributed to users having playback devices that can only play back 2D video and to users having playback devices capable of 3D playback. Thus, the encoding method, the display apparatus, and the decoding method, all of which are different aspects of the present invention, are highly applicable to the television broadcasting and movie industries as well as any other video distribution industry, and to the private device manufacturing industries.

### [Reference Signs List]

| | |
|---|---|
| 100 | 3D digital television |
| 200 | 3D glasses |
| 300 | 2D digital television |
| 501 | video frame sequence |
| 502 | PES packets corresponding to video |
| 503 | TS packets corresponding to video |
| 504 | audio frame sequence |
| 505 | PES packets corresponding to audio |
| 506 | TS packets corresponding to audio |
| 507 | subtitle stream |
| 508 | PES packets corresponding to subtitle stream |
| 509 | TS packets corresponding to subtitle stream |

## Claims

1. An encoding method comprising:
a generation step of generating first display information and second display information for pictures each having a display area split into two sub-areas, one sub-area storing a left-view image and the other storing a right-view image, the first display information including cropping information specifying a first display area in the display area as an area to be cropped, the second display information including cropping information specifying a second display area in the display area as an area to be cropped; and
an encoding step of performing encoding in order to obtain a video stream including the pictures, the first display information, and the second display information.

2. The encoding method of Claim 1, wherein
the first display area specified by the cropping information of the first display information corresponds to part or all of one of the left-view image and the right-view image,
the second display area specified by the cropping information of the second display information corresponds to a combination of part or all of the left-view image and part or all of the right view image,
the first display area is for 2D display, and
the second display area is for 3D display.

3. The encoding method of Claim 1, wherein
the first display area specified by the cropping information of the first display information corresponds to part or all of the left-view image,
the second display area specified by the cropping information of the second display information corresponds to part or all of the right-view image,
the first display area and the second display area are both used for 3D display, and
one of the first display area and the second display area is used for 2D display.

4. The encoding method of Claim 3, wherein
the display area is split into two sub-areas, one being on top of the other and storing the left-view image while the other stores the right-view image.

5. The encoding method of Claim 1, wherein
the first display information includes scaling information used for scaling the first display area, and
the second display information includes scaling information used for scaling the second display area.

6. The encoding method of Claim 1, wherein
the encoding step includes:
a sub-step of converting a picture at a head of a video sequence into an access unit by appending a sequence header and supplementary data to encoded slices composing the picture at the head of the video sequence, the video sequence being composed of the pictures; and
a sub-step of converting each of the remaining pictures in the video sequence into an access unit by appending supplementary data to encoded slices composing each of the remaining pictures, and
one of the first display information and the second display information is contained in the sequence header, and the other is contained in the supplementary data.

7. The encoding method of Claim 1, wherein
the encoding step includes:
a sub-step of generating an access unit by converting encoded slices composing each of the pictures and attribute information necessary for decoding the encoded slices into respective network abstraction layer units, and
the access unit is generated such that one of the first display information and the second display information is contained in another network abstraction layer unit included in the access unit.

8. The encoding method of Claim 1, wherein
the encoding step includes:
a sub-step of converting a picture at a head of a video sequence into an access unit by appending a sequence header and supplementary data to encoded slices composing the picture at the head of the video sequence, the video sequence being composed of the pictures, and
both the first display information and the second display information are contained in the sequence header.

9. The encoding method of Claim I further comprising:
a multiplexing step of multiplexing two or more elementary streams, including the video stream, to obtain a transport stream, wherein
in the multiplexing step, the video stream and stream management information corresponding to the video stream are converted into a transport stream packet sequence, and the transport stream packet sequence is multiplexed with the rest of the two or more elementary streams, and
one of the first display information and the second display information is stored to the stream management information corresponding to the video stream.

10. The encoding method of Claim 9, wherein
the stream management information corresponding to the video stream comprises one of a program management table, an event information table, and a service information table, all of which are used in a digital broadcasting system.

11. The encoding method of Claim 9, wherein
the encoding step includes a sub-step of converting encoded slices composing each of the pictures into an access unit by appending supplementary data thereto, and
in the sub-step, a judgment is made of whether or not to store the 3D display information in the supplementary data, and only when the result of the judgment is negative, the 3D display information is stored to the stream management information corresponding to the video stream in the multiplexing step.

12. A display apparatus for displaying a video stream input thereto, wherein
the video stream includes pictures and display information, each of the pictures having a display area split into two sub-areas, one sub-area storing a left-view image and the other sub-area storing a right-view image, the display information including 2D display information and 3D display information, each of which including cropping information specifying an area in the display area to be cropped and to be used for display and scaling information for scaling the cropping area,
the area in the display area specified by the cropping information of the 3D display information is for 3D display, and
the area in the display area specified by the cropping information of the 2D display information is for 2D display, and is one of the left-view image and the right-view image,
the display apparatus comprising:
a primary frame buffer;
a secondary frame buffer;
a decoder that decodes each of the pictures, which is a compressed picture, to obtain an uncompressed picture and writes the uncompressed picture to the primary frame buffer; and
a display processing unit that performs display processing with respect to the uncompressed picture stored in the primary frame buffer according to the 2D display information and writes a result of the display processing to the secondary frame buffer, wherein
the display processing unit reads the area in the display area specified by the cropping information of the 2D display information from the primary frame buffer, performs scaling with respect to the area in the display area specified by the cropping information of the 2D display information according to the scaling information of the 2D display information, and writes the area so scaled to the secondary frame buffer.

13. A display apparatus for displaying a video stream input thereto, wherein
the video stream includes pictures and display information, each of the pictures having a display area split into two sub-areas, one sub-area storing a left-view image and the other sub-area storing a right-view image, the display information including 2D display information and 3D display information, each of which including cropping information specifying an area in the display area as an area to be cropped and to be used for display and scaling information for scaling the cropping area,
the area in the display area specified by the cropping information of the 3D display information is for 3D display, and
the area in the display area specified by the cropping information of the 2D display information is for 3D display, and is one of the left-view image and the right-view image,
the display apparatus comprising:
a primary frame buffer;
a secondary frame buffer;
a decoder that decodes each of the pictures, which is a compressed picture, to obtain an uncompressed picture and writes the uncompressed picture to the primary frame buffer;
a display processing unit that performs display processing with respect to the uncompressed picture stored in the primary frame buffer according to the display information, and writes a result of the display processing to the secondary frame buffer:
a mode storing unit that stores a current display mode, the current display mode being one of a 2D display mode and a 3D display mode;
a 3D conversion processing unit that performs 3D conversion with respect to the uncompressed picture having undergone display processing stored in the secondary frame buffer and obtains a left-view image for 3D display and a right-view image for 3D display;
a left-view frame buffer that stores the left-view image for 3D display; and
a right-view frame buffer that stores the right-view image for 3D display,
wherein
when the current display mode is the 3D display mode,
the display processing unit refers to the 3D display information, rather than to the 2D display information, on a preferential basis, and
the display processing unit reads the area specified by the cropping information of the 3D display information from the primary frame buffer, performs scaling with respect to the area specified by the cropping information of the 3D display information according to the scaling information of the 3D display information, and writes the area so scaled to the secondary frame buffer.

14. A decoding method for decoding a video stream and performing display processing of the video stream, wherein
the video stream includes pictures and display information, each of the pictures having a display area split into two sub-areas, one sub-area storing a left-view image and the other sub-area storing a right-view image, the display information including 2D display information and 3D display information, each of which including cropping information specifying an area in the display area to be cropped and to be used for display and scaling information for scaling the cropping area,
the area in the display area specified by the cropping information of the 3D display information is for 3D display, and
the area in the display area specified by the cropping information of the 2D display information is for 2D display, and is one of the left-view image and the right-view image,
the decoding method comprising:
a decoding step of decoding each of the pictures, which is a compressed picture, to obtain an uncompressed picture and writing the uncompressed picture to a primary frame buffer; and
a display processing step of performing display processing with respect to the uncompressed picture stored in the primary frame buffer according to the 2D display information and writing a result of the display processing to a secondary frame buffer, wherein
in the display processing step, reading is performed of the area in the display area specified by the cropping information of the 2D display information from the primary frame buffer, scaling is performed with respect to the area in the display area specified by the cropping information of the 2D display information according to the scaling information of the 2D display information, and writing is performed of the area so scaled to the secondary frame buffer.

15. A decoding method for decoding a video stream and performing display processing of the video stream, wherein
the video stream includes pictures and display information, each of the pictures having a display area split into two sub-areas, one sub-area storing a left-view image and the other sub-area storing a right-view image, the display information including 2D display information and 3D display information, each of which including cropping information specifying an area in the display area as an area to be cropped and to be used for display and scaling information for scaling the cropping area,
the area in the display area specified by the cropping information of the 3D display information is for 3D display, and
the area in the display area specified by the cropping information of the 2D display information is for 2D display, and is one of the left-view image and the right-view image,
the decoding method comprising:
a decoding step of decoding each of the pictures, which is a compressed picture, to obtain an uncompressed picture and writing the uncompressed picture to a primary frame buffer;
a reading step of reading a current display mode from a mode storing unit, the current display mode being one of a 2D display mode and a 3D display mode;
a display processing step of performing display processing with respect to the uncompressed picture stored in the primary frame buffer according to the display information, and writing a result of the display processing to a secondary frame buffer; and
a 3D conversion processing step of performing 3D conversion processing with respect to the uncompressed picture having undergone display processing stored in the secondary frame buffer to obtain a left-view image for 3D display and a right-view image for 3D display, and writing the left-view image for 3D display to a left-view frame buffer and the right-view image for 3D display to a right-view frame buffer;
wherein
when the current display mode is the 3D display mode,
in the display processing step, the 3D display information is referred to, rather than to the 2D display information, on a preferential basis, and
reading is performed of the area specified by the cropping information of the 3D display information from the primary frame buffer, scaling is performed with respect to the area specified by the cropping information of the 3D display information according to the scaling information of the 3D display information, and writing is performed of the area so scaled to the secondary frame buffer.
